(19) Europäisches Patentamt
European Patent Office
Office européen des brevets

(11) **EP 2 111 547 B1**

(12) **EUROPEAN PATENT SPECIFICATION**

(45) Date of publication and mention
of the grant of the patent:
**10.04.2013 Bulletin 2013/15**

(51) Int Cl.:
***G01N 27/447*** *(2006.01)*

(21) Application number: **08708003.2**

(22) Date of filing: **18.01.2008**

(86) International application number:
**PCT/EP2008/050597**

(87) International publication number:
**WO 2008/087218 (24.07.2008 Gazette 2008/30)**

(54) **Free-flow electrophoresis using separation and stabilizing media**

Free-Flow-Elektrophorese mithilfe von Trenn- und Stabilisierungsmedien

Électrophorèse à écoulement libre utilisant des milieux de séparation et de stabilisation

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **19.01.2007 US 885792 P**

(43) Date of publication of application:
**28.10.2009 Bulletin 2009/44**

(73) Proprietor: **Becton, Dickinson and Company
Franklin Lakes, NJ 07417-1180 (US)**

(72) Inventor: **WEBER, Gerhard
85551 Kirchheim/Heimstetten (DE)**

(74) Representative: **Eder, Michael
df-mp
Fünf Höfe
Theatinerstrasse 16
80333 München (DE)**

(56) References cited:
**WO-A1-03/060503          US-A- 5 447 612
US-A1- 2004 101 973**

• **KALTOFEN R. ET AL.: "Tabellenbuch Chemie"
1986, DEUTSCHER VERLAG FÜR
GRUNDSTOFFINDUSTRIE , LEIPZIG ,
XP002485557 tables 12.4-12.7,17.1,17.2**
• **CANUT H ET AL: "Separation of plant membranes
by electromigration techniques" JOURNAL OF
CHROMATOGRAPHY B : BIOMEDICAL
APPLICATIONS, ELSEVIER SCIENCE
PUBLISHERS, NL, vol. 722, no. 1-2, 5 February
1999 (1999-02-05), pages 121-139, XP004156209
ISSN: 0378-4347**
• **WEBER GERHARD ET AL: "Application of binary
buffer systems to free flow cell electrophoresis"
ELECTROPHORESIS, vol. 21, no. 2, January 2000
(2000-01), pages 325-328, XP007905966 ISSN:
0173-0835**
• **WEBER GERHARD ET AL: "Counterbalancing
hydrodynamic sample distortion effects
increases resolution of free-flow zone
electrophoresis" ELECTROPHORESIS, vol. 19,
no. 7, June 1998 (1998-06), pages 1104-1109,
XP007905969 ISSN: 0173-0835**

## Description

## Field of the Invention

The present invention relates to free-flow electrophoresis (FFE) that is employed for the separation of analytes such as bioparticles in a sample. More specifically, the invention described herein relates to separation media as well as stabilizing media used for carrying out free-flow electrophoresis.

## Background of the Invention

Electrophoresis is a well-established technology for separating particles based on the migration of charged particles under the influence of a direct electric current. Several different operation modes such as isoelectric focusing, isotachophoresis and zone electrophoresis have been developed as variants of the above separation principle and are generally known to those of skill in the art.

Isoelectric focusing electrophoresis (IEF) is a technique commonly employed, e.g., in protein characterization as a mechanism to determine a protein's isoelectric point. (see, e.g., Analytical Biochemistry. Addison Wesley Longman Limited-Third Edition, 1998).

Isotachophoresis is a technology based on a principle described in 1920. In this technique the electrolyte between the electrodes is not a uniform single solution but a discontinuous sequence of different electrolyte solutions, the ions of which all migrate at the same velocity. Under identical condition of concentration and voltage, different ions have different electrophoretic mobilities. To cause all the ions to move at the same speed a different voltage gradient is required for each group of ions. The different gradient develops spontaneously during the electrophoretic process. In practice, this is a focusing technique based on the migration of the sample components between leading and terminating electrolytes. Solutes having mobilities intermediate to those of the leading and terminating electrolytes stack into sharp, focused zones. (Analytical Biochemistry. Addison Wesley Longman Limited-Third Edition, 1998). A typical example for electrophoretic applications than can be operated in isotachophoresis mode is the so-called capillary electrophoresis.

Zone electrophoresis is another well known operation mode. Zone electrophoresis is based on the difference between the electrophoretic mobility value of the particles to be separated and that of the separation medium employed. Zone electrophoresis makes it possible to isolate analytes and particles on the basis of differing size and/or form and/or net surface charge. Critical for the successful application of zone electrophoresis is the homogeneity (constant pH) of the separation solution and the constant field strength throughout the entire separation zone.

The above general operation modes can be applied to several different electrophoretic technologies such as in electrophoresis on a solid support (such as filter paper, cellulose acetate, agarose, etc.), capillary electrophoresis and free-flow electrophoresis (FFE).

Among electrophoretic technologies, free-flow electrophoresis (FFE) is one of the most promising [Krivanova L. & Bocek P. (1998), "Continuous free-flow electrophoresis", Electrophoresis 19: 1064-1074]. FEE is a technology wherein the separation of the analytes occurs in liquid medium in the absence of a stationary phase (or solid support material) to minimize sample loss by adsorption. FFE is often referred to as carrier-less deflection electrophoresis or matrix-free deflection electrophoresis.

In the field of proteomics, FFE is the technology of choice for the defined pre-separation of complex protein samples in terms of their varying pI (isoelectric point) values. Using FFE, bioparticles such as cells can be separated on the basis of the electrophoretic mobility of the cells. The corresponding principles have already been described [e.g. Bondy B., Bauer J., Seuffert I. and Weber G. (1995), "Sodium chloride in separation medium enhances cell compatibility of free-flow electrophoresis", Electrophoresis 16: 92-97], but FFE has received little recognition since most cell types differ only minimally in terms of their surface charge, making the separation of these cell types difficult. One of the first refinements was the introduction of immuno-FFE which allowed specific antibodies to be bound to specific surface epitopes of the cells to be separated, making it possible to modify the electrophoretic mobility of these cells in FFE by modifying the net charge of the cell surface [e.g. Hansen E. and Hannig K. (1982), "Antigen-specific electrophoretic cell separation (ASECS): Isolation of human T and B lymphocyte subpopulations by free-flow electrophoresis after reaction with antibodies", J. Immunol. Methods 11, 51: 197-208].

The process of FFE has been improved, e.g., by way of stabilizing media and counter-flow media. This is reflected, for example, in United States Patent 5,275,706. According to this patent, a counter-flow medium is introduced into the separation space counter to the continuous flow direction of the bulk separation medium and sample that travels between the electrodes. Both media (separation media and counterflow media) are discharged or eluted through fractionation outlets, typically into a microtiter plate, resulting in a fractionation process having a low void volume. Additionally, a laminar flow of the media in the region of the fractionation outlets is maintained (i.e., with very low or no turbulence).

A particular FFE technique referred to as interval FFE is disclosed, for example, in U.S. patent 6,328,868. In this patent, the sample and separation medium are both introduced into an electrophoresis chamber, and then separated using an electrophoresis mode such as zone electrophoresis, isotachophoresis, or isoelectric focusing, and are finally expelled from the chamber through fractionation outlets. Embodiments of the '868 patent describe the separation media and sample movement to be unidirectional, traveling from the inlet end towards the outlet end of the chamber, with an effective voltage applied causing electrophoretic migration to occur while the sample and media are not being fluidically driven from the inlet end towards the outlet end, in contrast to the technique commonly used in the art wherein the sample and media pass through the apparatus while being separated in an electrical field (continuous FFE).

International Patent Application WO 02/50524 discloses an electrophoresis method employing an apparatus with a separation chamber through which the separation flows and which provides a separation space defined by a floor and a cover and spacers separating these two from each other. In addition, this FFE apparatus encompasses a pump for supplying the separation medium which enters the separation chamber via medium feed lines and leaves the chamber via outlets. The FFE apparatus also includes electrodes for applying an electric field within the separation medium and sample injection points for adding the mixture of particles or analytes and fractionation points for removing the particles separated by FFE in the separation medium. The separated particles can be used for analytic purposes or for further preparative processing.

A number of separation media for the separation of analytes such as bioparticles and biopolymers are known in the art. For example, the book "Free-flow Electrophoresis", published by K. Hannig and K. H. Heidrich, (ISBN 3-921956-88-9) reports a list of separation media suitable for FFE and in particular for Zone FFE. All media disclosed therein contain bases, whose pKa-values are higher than the pKa-values of the acids used for the adjustment of the pH of the final separation media. However, in the separation media of the prior art, thermal overloading of the FFE-separation chamber is often observed, particularly at high electrical field strength and limits the concentration of the acids and bases used in the separation media to around 10 mM. Accordingly, the buffering capacity of these media is mediocre at best, thereby severely limiting the effective separation time under stable conditions.

U.S. patent 5,447,612 (to Bier et al.) discloses another separation medium which is a pH buffering system for separating analytes by isoelectric focusing by forming functionally stable precast narrow pH zone gradients in free solution. It employs buffering components in complementary buffer pairs. The buffers components are selected from among simple chemically defined ampholytes, weak acids and weak bases, and are paired together on the basis of their dissociation characteristics so as to provide a rather flat pH gradient of between 0.4 to 1.25 pH units. US 5,447,612 does not mention the use of stabilizing media.

Another problem affecting electrophoresis technologies is instability caused, *inter alia,* by electrode contamination. Particularly in FFE, the contamination is generally prevented by the use of semi-porous membranes which sequester the two electrodes from the separation chamber.

An approach alternative to the above mentioned semi-porous membranes is proposed in U.S. patent applications 2004/050697 and 2004/050698 and in International patent application WO 03/060504. *Inter alia,* these patents applications disclose a so-called focusing buffer used to create a buffer medium in the proximity of the electrodes wherein the focusing buffer medium has a higher conductivity than the separation medium. In absence of membranes that separate the electrodes from the separation chamber there is the possibility that particles attach themselves vigorously to the electrode so that there is a significant loss of these separated particle and a concomitant contamination of the electrodes. According to these applications, this effect can be prevented by means of a focusing buffer. However, no guidance is given in U.S. patent applications 2004/050697 and 2004/050698 or in International patent application WO 03/060504 as to the components of the focusing buffer in relation to the separation media or how the higher conductivity should be achieved.

U.S. patent application 2004/050698 also discloses a free flew electrophoresis apparatus which encompasses at least one separation chamber through which a separation medium can flow. Furthermore, said FFE apparatus encompasses a dosage pump for conveying a separation medium which enters the separation chamber by way of medium feed lines and leaves said chamber by way of outlets, electrodes for applying an electric field in the separation medium and sample injection points for adding a mixture of particles to be separated and fractionation points for removing the particles in the separation medium separated by means of FFE. A method according to the preamble of claim 1 is described by Weber et al. in Electrophoresis, 21 (2000), pages 325 - 328.

## Summary of the Invention

From the above it is evident that buffer separation media (and stabilizing media) are crucial for successfully performing electrophoresis technologies.

Accordingly, there is the need to develop electrophoretic methods involving additional media that are able to prevent the cross contamination between the separation area and the electrode compartments in either direction and that are useful for maintaining pH and conductivity profile during FEE, and in particular FF-ZE, FF-IEF and FF-ITP.

In this context, the inventors have found that electrophoresis applications employing the separation media provided herein achieve better results when used in concert with so-called stabilizing media, which are generally introduced into the electrophoresis chamber in the vicinity of (i.e., near) the cathode and the anode of the electrophoresis device (i.e., between cathode and separation medium, and between the anode and the separation medium), respectively.

The stabilizing media employed in the methods of the invention are capable of stabilizing the conditions (e.g., pH and electrical conductivity) within the separation space of the electrophoresis device, thereby affording an improved stability of the electrochemical and physical conditions leading to an enhanced accuracy, sensitivity, and reproducibility in the electrophoretic separation / fractionation of analytes in a sample.

The invention provides novel electrophoretic methods for the separation of analytes and bioparticles. The methods allow controlled, effective and reproducible separation of labile or sensitive molecules such as liposomes.

Finally, the inventors have found that preparative as well as analytic separation of liposomes, and other particles can be reliably achieved with the novel methods comprising electrophoresis media disclosed herein. The above-mentioned aspects will be discussed below in more detail.

**I. Electrophoretic Separation Media**

Separation media employed in methods employed in methods for separating analytes such as bioparticles or biopolymers by means of electrophoresis are provided herein. The separation medium constains one buffer acid and one buffer base, with the proviso that the pKa (i.e., the additive inverse of the common logarithm of the acid dissociation constant $K_a$; also sometimes referred to as the "negative decimal logarithm" of the acid dissociation constant $K_a$) value of the buffer acid must be higher than the pH of the separation medium and the pKa of the buffer base is lower than the pH of the separation medium. Put another way, the pKa of the buffer acid will be higher than the pKa of the buffer base.

The pH profile exhibited by the separation medium may be essentially linear (i.e., without any major pH steps during electrophoretic separation). Depending on the stabilizing media employed as well as the pKa differences between the buffer acid and the buffer base, such separation media will offer an essentially constant (i.e. flat) pH profile, or a rather gentle/flat pH gradient within the separation chamber. It will be appreciated that separation media providing a zone with an essentially constant pH in the separation chamber between the electrodes are particularly useful for applications operated in zone electrophoresis (ZE) mode, whereas (flat) pH gradient profiles are particularly useful in applications operated in isoelectric focusing (IEF) mode.

Alternatively, the pH profile within the separation medium during electrophoresis may be non-linear, with one or more distinct pH steps or plateaus within a separation space. Such media are particularly useful in certain applications operated in IEF mode.

Preferably, the separation media employing one buffer acid and one buffer base have a pKa difference between the buffer acid and the buffer base of between about 0.5 and 4 pH units, wherein the pKa of the acid must be higher than the pKa of the base as explained above. Preferably, the ΔpKa is between 1.2 and 1.8, which is particularly useful in zone electrophoresis, or the ΔpKa will be between about 2.5 and 4 or, more preferred, between about 2.5 and 3.3, the latter being particularly suitable for flat pH-gradient IEF applications.

One characteristic of the separation media provided herein is that the electrical conductivity of the medium is relatively low, although it will be appreciated that the conductivity must be sufficiently high to achieve acceptable separation of the analytes in a reasonable amount of time. Thus, the conductivity of the separation media is typically between 50 and 1000 $\mu$S/cm, and more preferably between 50 and 500 $\mu$S/cm, although those of skill in the art will be aware that the exact conductivity in the separation medium will of course depend on the specifics of the separation / fractionation problem, the presence of other charged species in the medium (e.g., ions required for sample/analyte stability) and the electrochemical properties of the analyte.

In the methods of the present invention, the separation media comprise only one buffer acid and one buffer base. In other words, such separation media represent binary media (A/B media) wherein one acid function of a compound and one base function of another compound essentially serve to establish a separation medium with the desired pH and conductivity profile. While good results may also be achieved with two or more buffer acids and buffer bases in the separation medium, it is typically advantageous to use as few components as possible, not only because it is easier to prepare and possibly cheaper to use, but also because the electrochemical properties of the medium will become more complex if the number of charged species present in the separation chamber is increased.

The separation media described herein may further comprise additives such as "essential" mono- and divalent anions and cations (required, e.g., for sample stability/functionality), viscosity enhancers, detergents, protein solubilizing agents, affinity ligands, reducing agents and the like.

**II. Stabilizing Media**

*II.1. General Properties*

In the methods of the present invention, so-called "stabilizing media" are used to stabilize the electrochemical conditions in the separation chamber by preventing undesirable effects or artifacts which may otherwise be observed during the electrophoretic separation process, particularly in free-flow electrophoresis.

The stabilizing media are generally located in the vicinity of the electrodes, i.e., between the anode/cathode and the separation medium, respectively. The stabilizing media have a higher electrical conductivity than the separation medium used in concert with the stabilizing media. The higher conductivity prevents a cross-contamination between the separation area and the electrode compartment of the electrophoresis device and also serves to avoid the unwanted accumulation of separated particles or analytes at the electrodes. Moreover, all compounds such as ions, additives and the like which are required within the separation medium can be supplied or replenished from the stabilizing media present in the vicinity of the cathode and anode, respectively.

While the general concept of stabilizing media having high electrical conductivity has been mentioned briefly in the art (e.g., in WO 03/060503), no information was given how to achieve the desired conductivity in the context of electrophoretic applications. In particular, no teaching was presented in the art how to develop stabilizing media that avoids undesired effects and artifacts during separation and that can be used universally, i.e., in basically all set-ups, including free-flow electrophoresis, as well as for all basic operating modes (ZE, ITP, and IEF). Whilst the inventive concept regarding the stabilizing media, in accordance with embodiments of the present invention, is essentially common for all operating modes, it will be appreciated that certain specific features may be required for the stabilizing media depending on the operating mode (ZE, IEF, or ITP) chosen for an intended usage.

Accordingly, the stabilizing media employed in the methods of the invention comprise either at least one buffer acid and at least one strong base (cathodic stabilizing medium, CSM), or they comprise at least one buffer base and at least one strong acid (anodic stabilizing medium, ASM). The strong acid and the strong base, respectively, have to be present in a concentration sufficient to achieve substantial ionization / protonation of the at least one buffer base (ASM), or substantial ionization /deprotonation of the buffer acid (CSM) in order to obtain sufficiently high electrical conductivity, i.e., higher than the conductivity of the separation medium.

The concentration of the at least one buffer base (ASM) and the at least one buffer acid (CSM) should be sufficiently high to ensure that a sufficient number of charged molecules required for the desired high conductivity can be produced by the strong acid or base, respectively. Thus, in preferred embodiments of this aspect of the invention, the concentration of the buffer base (ASM) or buffer acid (CSM) is increased by about 5 to 15-fold over the concentration of the buffer acids (for ASM) / buffer bases (for CSM) in the separation medium.

While the absolute concentrations in the stabilizing medium will vary depending on the concentration of the buffer acids/bases in the separation medium, typical concentrations for buffer acids/bases in the stabilizing medium are typically not below 20 mM, and are usually much higher (e.g., about 50 mM, or even more than 200 mM). Suitable buffer acids should generally have a pKa of between about 3 and 13, whereas suitable buffer bases should generally have a pKa of between about 1.5 and 12.

The cathodic stabilizing medium (CSM) may further comprise one or more buffer bases, provided the concentration of all acids in the CSM is higher than the concentration of all bases. Similarly, the anodic stabilizing medium (ASM) may further comprise one or more buffer acids, provided that the concentration of all bases in the ASM is higher than the concentration of the acids.

Moreover, just as in the case of separation media, the stabilizing media may also comprise additives, which are typically the same as those added to the separation medium, although many of the additives will often be present at an increased concentration along with the increased concentration of the buffer acids/bases in the stabilizing media compared to the separation medium.

The electrical conductivity of the stabilizing media will likewise be largely dependent on the conductivity of the separation medium used for the electrophoretic separation. As a rule of thumb, the electrical conductivity of the stabilizing media should be at least about 3-fold, and often 5-fold, and ideally be even 10-fold higher than the conductivity of the separation medium. Typical conductivity values observed in the stabilizing media are typically more than about 500 $\mu$S, often more than about 1,000 or even 2,000 $\mu$S/cm, and may in certain cases even reach 10,000 or 20,000 $\mu$S/cm.

In any event, those of skill in the art will realize that the actual conductivity value of the stabilizing media will depend on the specific conditions of the separation /fractionation problem and may under particular circumstances even be outside the above-mentioned range, provided that the conductivity in the stabilizing media is at least substantially higher than that of the separation medium.

As will be explained in more detail below, the actual selection of the buffer acids and buffer bases depends on a number of factors, including the nature of the analyte and the operating mode of the electrophoretic application. For example, in zone electrophoresis, the pH within the separation medium must be essentially constant, wherein for isoelectric focusing applications, a pH gradient or distinct pH plateaus are present in the separation area between the electrodes. Depending on the nature of the electrophoretic separation problem and the operating mode used, those of skill in the art will therefore appreciate that different selection criteria will be applied for the identity and the concentration of the components in the stabilizing media of the present invention.

II.2. Stabilizing Media for Zone Electrophoresis (ZE)

The stabilizing media may comprise at least one buffer acid (CSM) or at least one buffer base (ASM) which is also present in the separation medium. Alternatively, the buffer acids and buffer bases in the CSM and ASM, respectively, are chosen to have a similar electrophoretic mobility and a pKa which is very close to the pKa of the respective buffer acid/buffer base in the separation medium.

By choosing the buffer acids and buffer bases according to the above criteria, it is possible to provide stabilizing media which ensure an essentially flat pH over the entire area formed by the separation medium, in combination with the separation media provided herein. Thus, the afore-mentioned stabilizing media are particularly suitable in free-flow zone electrophoresis (FF-ZE).

*II.3. Stabilizing Media for Isoelectric Focusing (IEF)*

The at least one buffer acid (CSM) or at least one buffer base (ASM) in the stabilizing medium may be selected to have a pKa which is higher than the pI of the most alkaline analyte in the sample to be separated (buffer acids in the CSM), or lower than the pI of the most acidic analyte in the sample (buffer bases in the ASM).

Another selection criterion that can be used for the selection of the buffer compounds in the stabilizing media, either in addition or as an alternative to the above-mentioned definition based on the pI of the most alkaline/acidic analyte of interest is that the pKa of the at least one buffer acid (CSM) should be higher than the maximum pH of the separation medium and the pKa of the at least one buffer base (ASM) should be lower than the minimum pH of the separation medium.

In any event, the buffer acids in the CSM should be selected to ensure that the pH of the resulting cathodic stabilizing medium is higher than the pI of the most alkaline analyte in the sample and will usually be higher than the maximum pH of the separation medium in IEF operating mode (i.e., exhibiting an increasing pH gradient from the anode towards the cathode). Preferably, however, the pH of the cathodic stabilizing medium should not exceed the maximum pH of the separation medium by more than about 2 pH units in order to avoid disturbances at the interface of the separation and the stabilizing medium. Similarly, the pH of the anodic stabilizing medium should be lower than the lowest pH of the separation medium, but should preferably be selected to yield an ASM wherein the pH is not be lower than about 2 pH units below the lowest pH of the separation medium.

The IEF stabilizing media may comprise more than one buffer acid (CSM) and more than one buffer base (ASM). In these cases, the concentration of the weaker buffer acids (CSM) and buffer bases (ASM), respectively, should be higher than the concentration of the strongest buffer acid (CSM) /strongest buffer base (ASM).

The stabilizing media are particularly suitable for FF-IEF, and are most advantageous wherein the pH gradient in the separation medium is relatively flat (e.g., not more than 3 pH units difference between anodic side and cathodic side of the separation medium).

*II.4. Stabilizing Media for Isotachophoresis (ITP)*

The stabilizing media can be particularly useful for stabilizing the electrophoretic conditions when operated in isotachophoresis (ITP) mode. Since the electrophoretic separation in ITP is based on the different electrophoretic mobilities of the various species present in the solution, those of skill in the art will understand that there are no "background" buffer compounds in the solution, but every (charged) species will move through the solution at a velocity corresponding to its electrophoretic mobility. Accordingly, one usually differentiates in ITP between the leader (charged species (ion) having the highest electrophoretic mobility) and the terminator (charged species having the lowest electrophoretic mobility). Depending on the separation problem and whether the analyte is positively or negatively charged, it must be distinguished between cationic ITP where the species travel towards the cathode, and anionic ITP where the species in the solution travel to the anode.

In anionic ITP, the increased conductivity needed for stabilizing the anodic side (i.e., the ASM) is usually accomplished by increasing the concentration of the leader ion (e.g., chloride ions from a strong acid such as HCl) and of the respective counter ion, which is usually a buffer base. However, this concept will usually not work for the cathodic side, because the slowest species (i.e., the terminator) having the slowest electrophoretic mobility (and thus, the lowest net (surface) charge) will accumulate near the cathode.

Accordingly, the cathodic stabilizing medium for anionic ITP comprises the terminator (i.e., the compound having the slowest electrophoretic mobility) and at least one strong base (e.g., NaOH). The terminator compound is usually selected from a buffer acid, wherein the pKa of said buffer acid is preferably higher than the pKa of the buffer base in the anodic leader stabilizing medium. The concentration of the strong base added to the cathodic stabilizing medium is preferably lower than the concentration of the buffer acid in the same medium, but high enough to ensure a high degree of ionization in order to achieve the desired high conductivity.

The same selection principles of course apply for cationic separation problems where the terminator is on the side of the anode. Thus, suitable anodic stabilizing media (ASM) for cationic ITP must comprise the terminator (preferably a buffer base) and at least one strong acid (e.g., HCl). As in the case of anionic ITP described above, the concentration of the strong acid in the ASM is preferably lower than the concentration of the buffer base in the same medium, but high enough to ensure a high degree of ionization in order to achieve the desired high conductivity.

Similar to the ASM in anionic ITP, the cathodic stabilizing medium (CSM) in cationic ITP should again comprise an increased concentration of the leader ions (e.g., potassium or sodium ions provided by a strong base) and of the respective counter ion, which is usually a buffer base.

Possible applications for the stabilizing media will be apparent to those skilled in the art and include free-flow electrophoresis applications for preparative or analytic separation / fractionation of analytes in a sample. The stabilizing media described herein will be particularly useful for the separation of bioparticles (including large and sensitive particles such as cells, organelles, protein complexes, viruses, etc.) by means of free-flow electrophoresis operated in zone electrophoresis (FF-ZE), isotachophoresis (FF-ITP) or isoelectric focusing (FF-IEF) mode, or any combination of the foregoing.

III. Kits

Methods of the present invention may utilise kits, comprising separation media together with the stabilizing media. The various media contained in the kits may be present either as concentrated or ready-to-use aqueous solutions, or may comprise the various compounds in dry or lyophilized form that are reconstituted directly before use.

**IV. Specific Applications**

The present invention provides an electrophoresis method that is widely applicable to the separation / fractionation of a variety of analytes, including liposome populations having varying compositions and therefore differentiable physicochemical properties. Wherein a particularly advantageous separation / fractionation is achieved in a separation medium having an electrical conductivity of less than about 1,000 $\mu$S/cm.

According to the present invention, electrophoresis methods are provided comprising (a) introducing into an electrophoresis chamber an anodic stabilizing medium, a cathodic stabilizing medium and a separation medium; (b) introducing into the separation medium one or more analytes; (c) subjecting the media and analytes to an electrophoretic field; and, optionally, (d) eluting all or a portion of the analytes from the electrophoresis chamber.

Preferably, the separation /fractionation is achieved by using free-flow electrophoresis operated in zone electrophoresis mode (FF-ZE) which is characterized by a stable, constant pH over the entire separation area, even at prolonged duration of the electrophoresis. Alternatively, the separation / fractionation is achieved by isoelectric focusing, wherein the separation medium forms a (flat or ultra-flat) gradient within the electrophoresis chamber (FF-IEF).

Using FF-ZE or FF-IEF separation and stabilizing media, favorable results have been achieved, for example with the free-flow electrophoresis apparatus marketed as BD™ Free-flow Electrophoresis System.

According to one embodiment electrophoresis methods are provided which comprise the step of providing a separation medium having a generally flat pH profile and a conductivity of generally less than 1000 $\mu$S/cm, together with a cathodic and anodic stabilizing medium, and introducing a sample containing a variety of analytes, at least a portion of which have unique and differentiable surface charge properties into the separation medium, and separating the analytes by zone electrophoresis. The separation is done in a matrix-free environment, i.e. by free-flow electrophoresis.

**Brief Description of the Drawings**

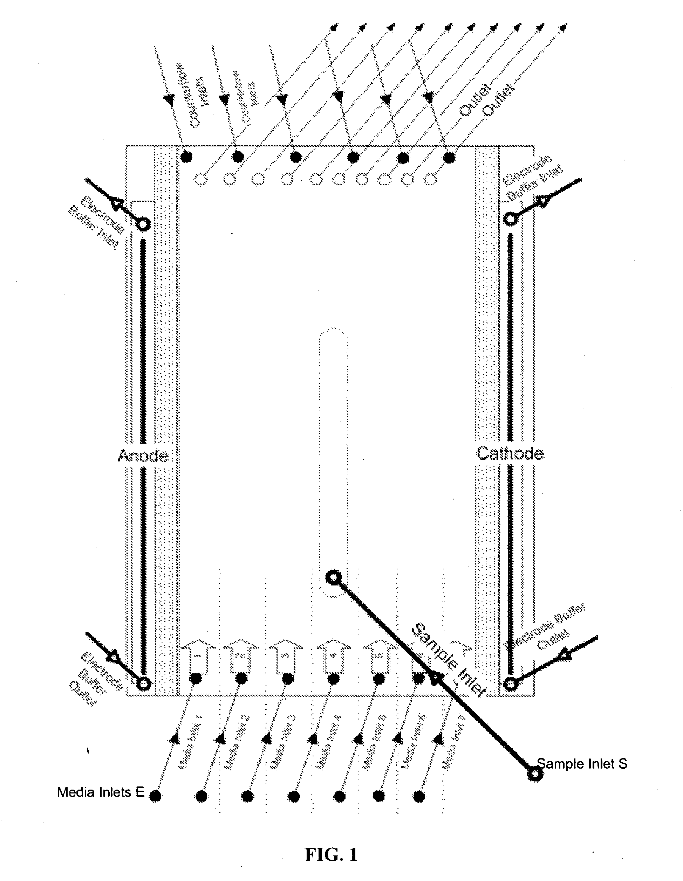

**Figure 1** represents a schematic representation of a suitable device to perform an FFE method according to the present invention containing 7 media inlets E1 to E7 and a sample inlet S. It is noted that one or more sample inlets can be placed at any desired position between the two electrodes. Furthermore, the sample inlet may be placed close to the media inlets or more downstream towards the outlet ends of the device, as schematically shown in Figure1.

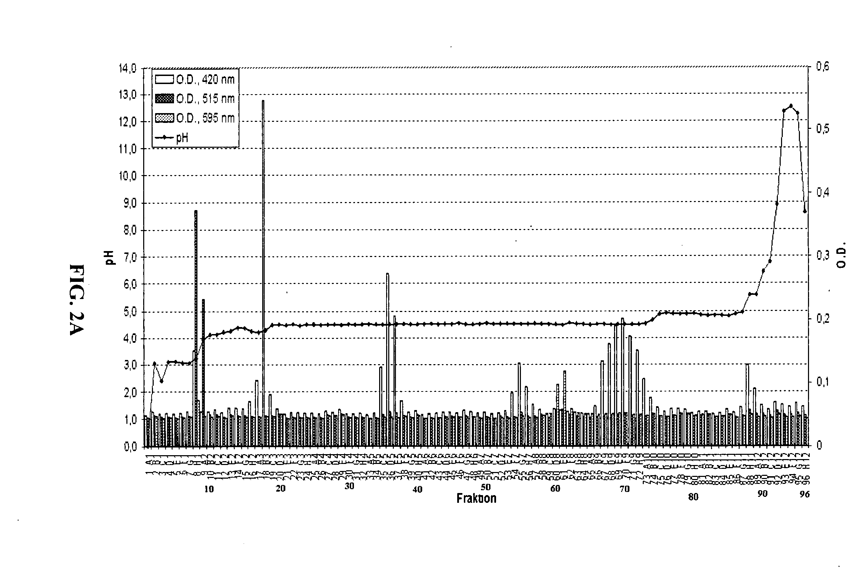

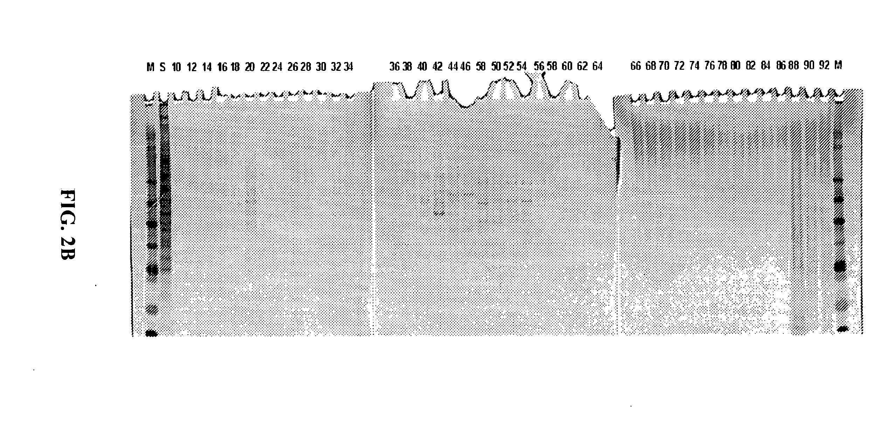

**Figure 2** illustrates the results of a cationic FFE separation operated in zone electrophoresis mode (FF-ZE) as described in Example 1 below. **Fig. 2A** shows the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at $\lambda$=420nm, 515nm and 595nm which represent the absorbance of the respective pI-markers are also reported in **Fig. 2A**. **Fig. 2B** depicts the corresponding SDS gel obtained for the various fractions indicating the presence of fractionated analytes in the sample.

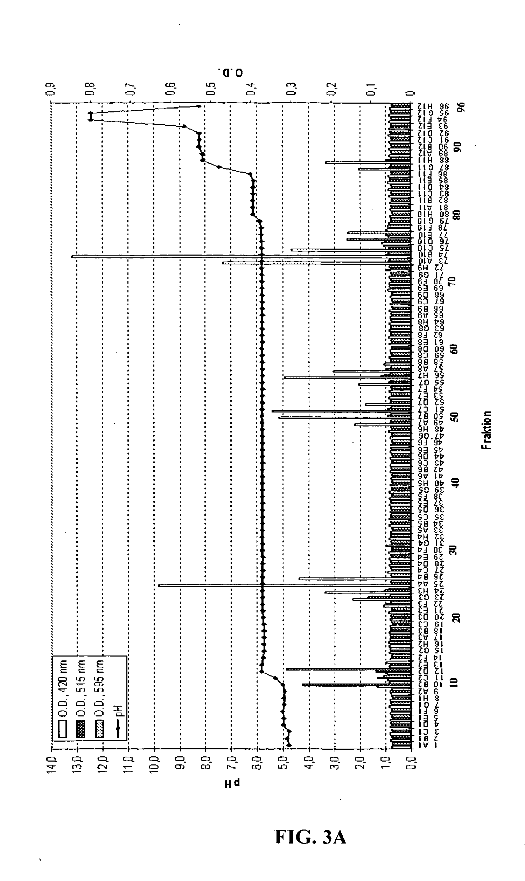

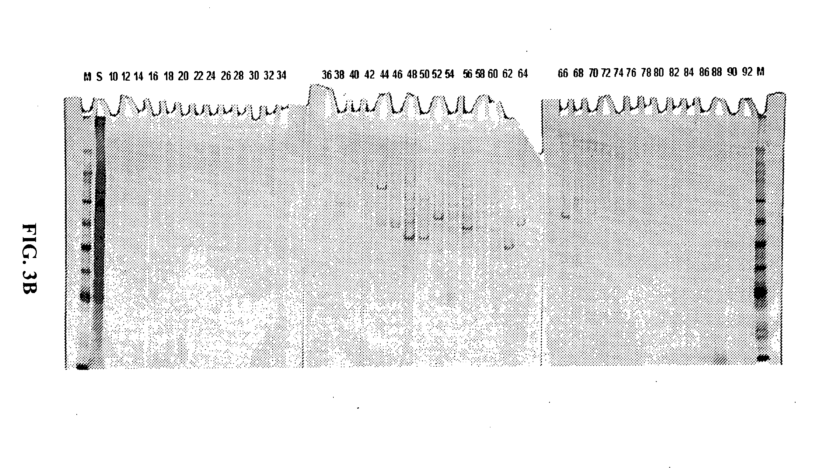

**Figure 3** illustrates the results of a simultaneous cationic and anionic FF-ZE separation as described in Example 2 below. **Fig. 3A** shows the fractional separation of the sample between anode (left) and cathode (right) (96 fractions collected in a standard microtiter plate) and shows the pH of the fractions. Colored pI-markers were separated to evaluate the separation performance of the system. The absorbance of each fraction at $\lambda$=420nm, 515nm and 595nm representing the absorbance of the respective pI-markers are also reported in **Fig. 3A**. **Fig. 3B** depicts the corresponding SDS gel obtained for the various fractions indicating the presence of fractionated analytes in the sample.

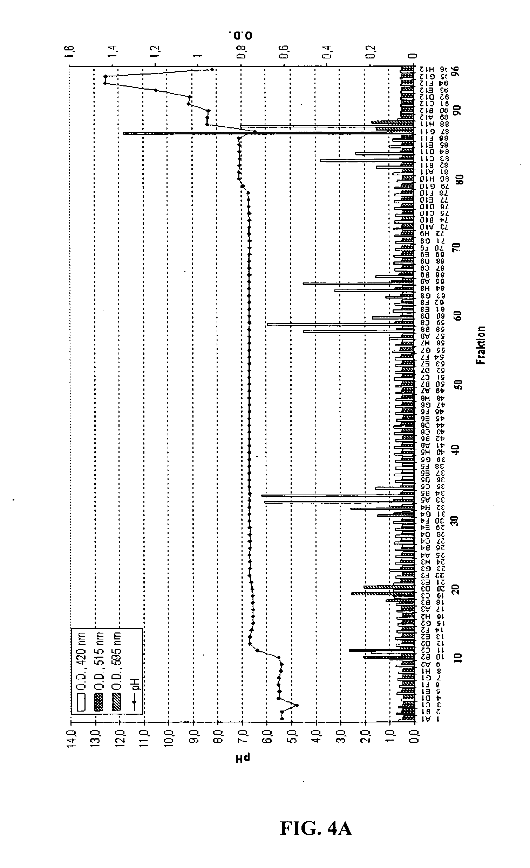

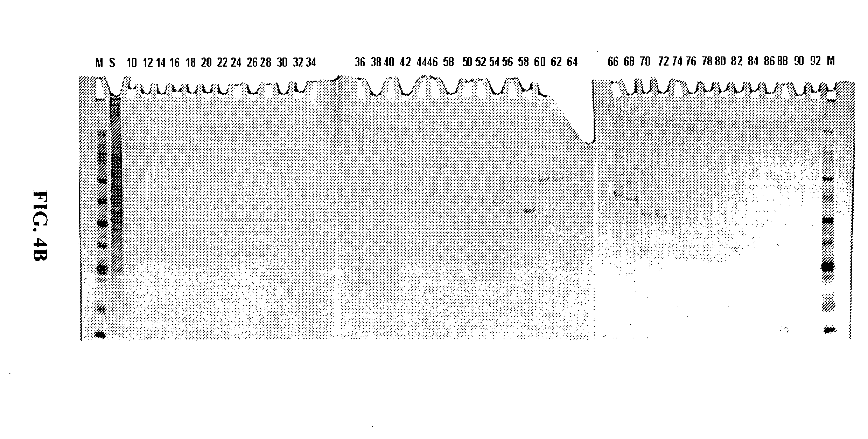

**Figure 4** illustrates the results of another anionic FF-ZE separation with a different media system as described in Example 3 below. **Fig. 4A** shows the fractional separation of the sample between anode (left) and cathode (right) and plots the pH of the fractions between the anode and the cathode. Colored pI-markers were separated to evaluate the separation performance of the system. The absorbance of each fraction at $\lambda$=420nm, 515nm and 595nm representing the absorbance of the respective pI-markers are also reported in **Fig. 4A**. **Fig. 4B** depicts the corresponding SDS gel obtained for the various fractions to indicate the presence of fractionated analytes in the sample.

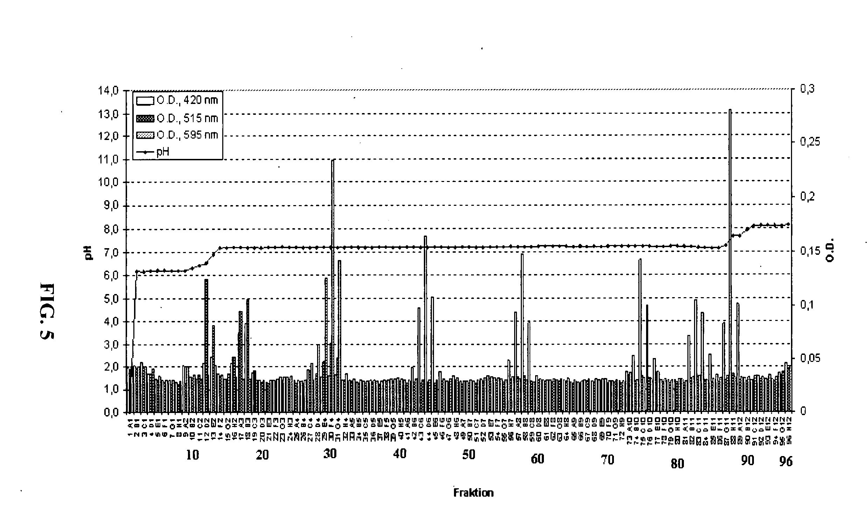

**Figure 5** illustrates the results of another fractional FF-ZE separation of a quality control sample as described in Example 4. Again, the absorbance at three different wavelengths is plotted against the pH of the fractions.

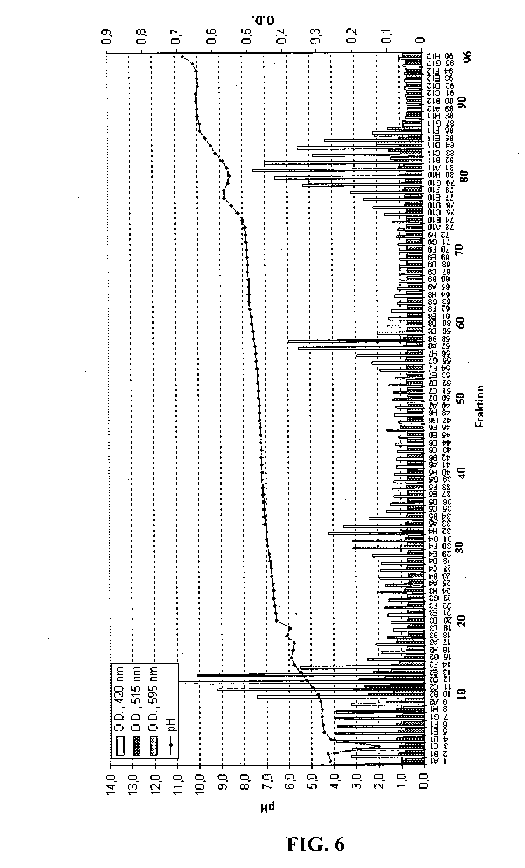

**Figure 6** shows the results of a fractional FFE separation operated in isoelectric focusing mode (FF-IEF) as further described in Example 5.

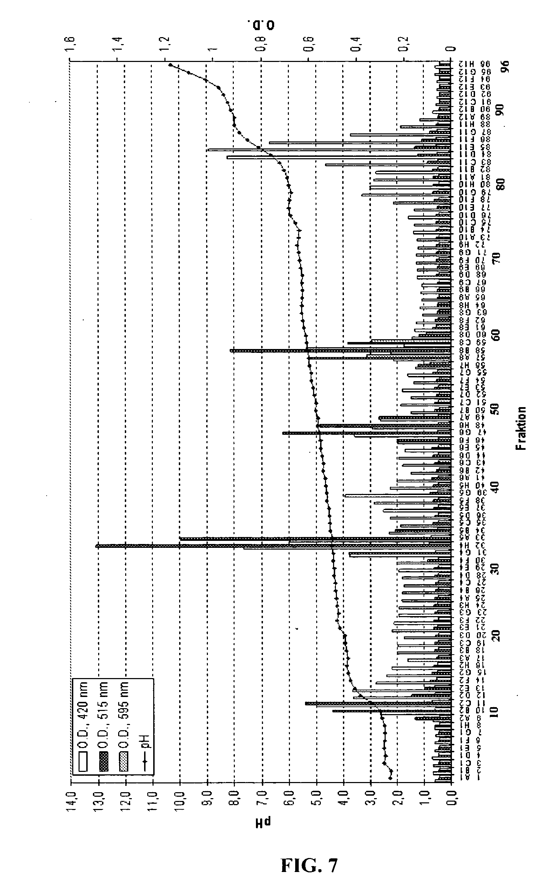

**Figure 7** illustrates the results of another fractional FF-IEF separation as further described in Example 6.

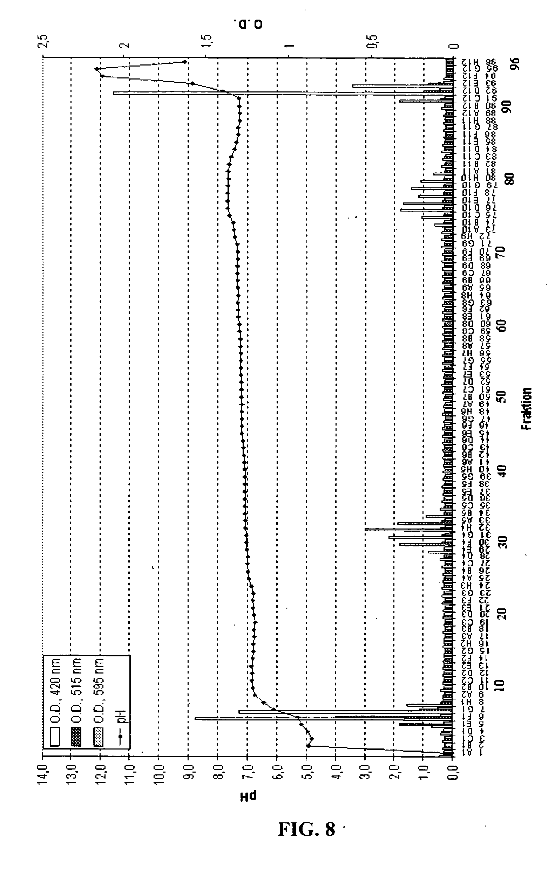

**Figure 8** shows the fractional FFE separation of a sample in an ultra-flat pH gradient (ultra-flat FF-IEF) as described in Example 7 with the pH of the fractions plotted against the absorbance at three different wavelengths.

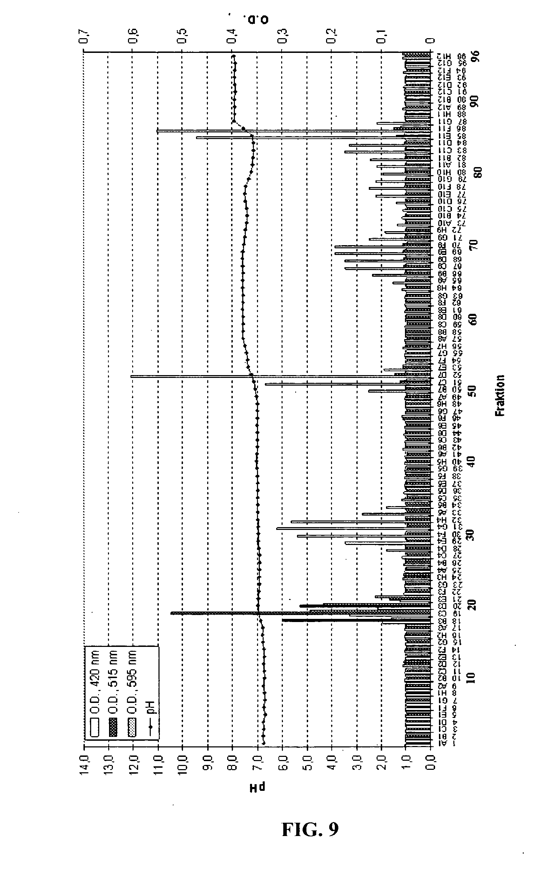

**Figure 9** depicts the fractional separation in anionic FF-ITP mode of a sample described in detail in Example 8. Colored pI-markers were separated to evaluate the separation performance of the system. The absorbance of each fraction at $\lambda$=420nm, 515nm and 595nm representing the absorbance of the respective pI-markers is plotted against the pH of the fractions.

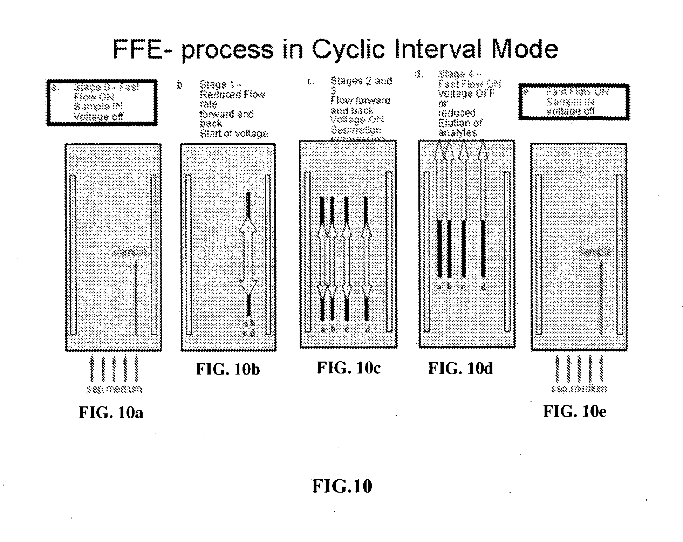

**Figure 10** depicts the bulk flow of sample and separation media for cyclic interval free-solution electrophoresis, as used in certain aspects of embodiments described in this application. Steps a, b, c, d, and e depicted in FIGS. 10a through 10e respectively demonstrate how particles a, b, c, and d shown grouped together in **FIG. 10b** are fractionated in FIG. 10c through a cyclical flow of the sample and separation media, which is cycled generally parallel to the electrodes on the left and right sides of the electrophoresis chamber. As depicted in **FIG. 10,** the sample and separation media enter though the lower portion of the chamber, and after cycling, exit in a post-electrophoresis state through the upper portion of the chamber.

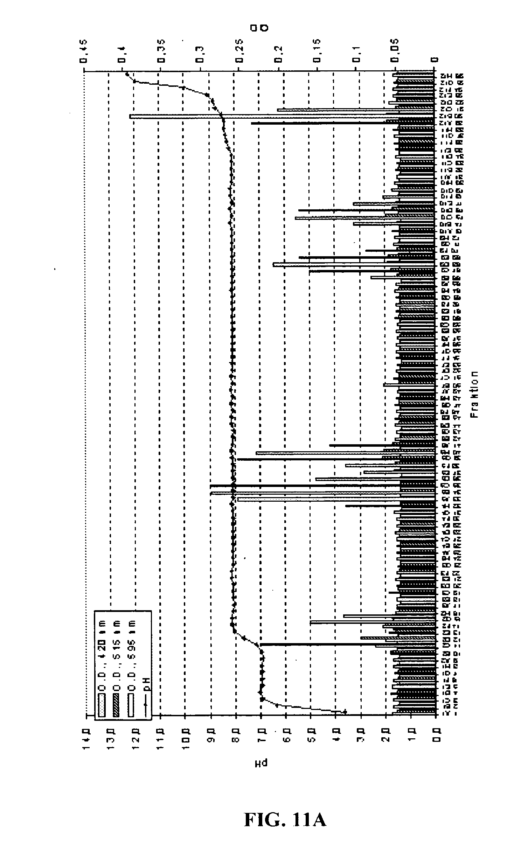

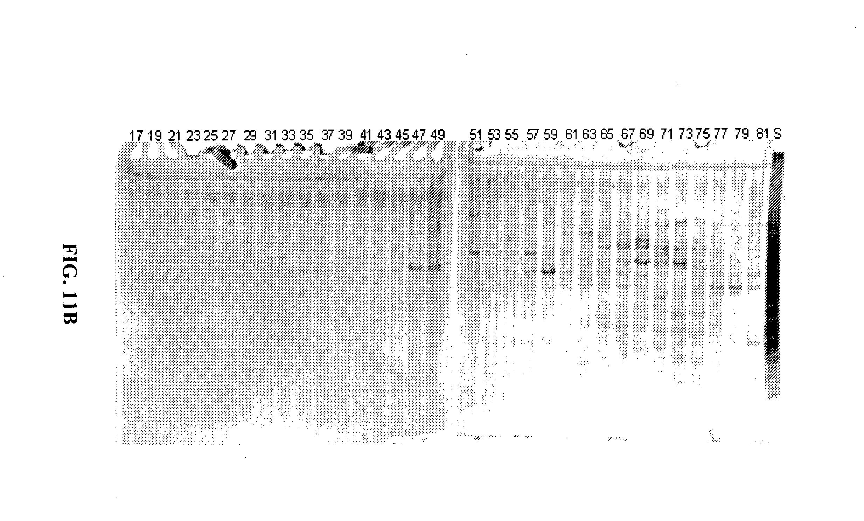

**Figure 11** illustrates the results of an anionic FFE separation operated in zone electrophoresis mode (FF-ZE) as described in Example 9 below. **Fig. 11A** shows the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at $\lambda$=420nm, 515nm and 595nm which represent the absorbance of the respective pI-markers are also reported in **Fig. 11A**. **Fig. 11B** depicts the corresponding SDS gel obtained for the various fractions indicating the presence of fractionated analytes in the sample.

## Detailed Description of the Invention

As will be apparent from the Examples discussed herein below, the separation and stabilizing media may be easy to make, are generally non-hazardous, and yield stable and reproducible electrophoretic conditions for powerful and sensitive separation / fractionation (or selective depletion or enrichment) of analytes in a sample by means of electrophoresis.

The separation media as well as the stabilizing media are normally in the form of aqueous solutions having a limited number of components. Of course, the media can also be provided in the form of a concentrated solution to be diluted to the appropriate concentration or even in dry form (e.g., crystalline, amorphous or even lyophilized) comprising the various ingredients of the medium in either a single container or distributed in several containers (e.g., in kit form). The dry ingredients may then be reconstituted with water prior to the electrophoresis application.

A separation medium as used in the present invention should be understood to represent in its ready-to-use form an aqueous medium that is present in the separation space or separation chamber between the anode(s) and the cathode(s) of an electrophoresis apparatus. The sample to be separated/fractionated is added to or into the separation medium, and the various analytes in the sample within the separation medium are then separated by applying an electrical field. The (fractionated) analytes of interest are subsequently either collected, typically in a suitable number of fractions, from the electrophoresis apparatus (preparative applications), or at least detected by suitable means (analytic applications).

The stabilizing media as used in the present invention are typically introduced into the electrophoresis device near the anode and the cathode, respectively. The stabilizing media, *inter alia,* prevent hydronium ions ($H_3O^+$) and hydroxide ions ($OH^-$) created by the electrodes during electrophoresis to pass into the separation space, thereby changing or destabilizing the electrochemical conditions in the separation space. In view of the higher conductivity of the stabilizing media of the present invention compared to the separation medium, the stabilizing media will create "conductivity barriers" which, amongst other things, also prevents the electrically charged analytes to eventually get in contact with the electrodes.

The novel concepts for the design of separation and stabilizing media is according to the present invention, applied to free-flow electrophoresis (FFE), under native conditions (i.e., not disturbing the structural integrity of the analytes) as well as under denaturing conditions (e.g. in the presence of urea, thiourea, SDS, etc.).

While the methods provided herein are not limited to specific analytes, it will be appreciated that they are particularly suitable for the separation / fractionation of biological samples, or at least relatively sensitive analytes (e.g., liposomes) in view of the well-defined compositions and their easy reproducibility. Typical analytes that can be separated include, but are not limited to bioparticles and biopolymers, which is meant to include, but not limited to cells, cell organelles, viruses, or virus particles, proteins, protein complexes, protein aggregates, DNA, DNA-protein complexes, membranes, peptides, chromatin, nanotubes, liposomes, any combination thereof, and the like.

As explained in more detail below, the separation/fractionation is achieved by means of free-flow electrophoresis (FFE). Suitable FFE devices are known in the art and are, for example, marketed under the name BD™ Free-flow Electrophoresis System (BD GmbH, Germany). In addition, suitable FFE devices that can be used with the separation and stabilizing media of the present invention have been described in a number of patent applications, including US Pat. 5,275,706, US Pat. 6,328,868, pending published US applications US 2004/050697, US 2004/050698, US 2004/045826, or US 2004/026251, and intermediate document WO 2008/053047 and WO2008/02806.

## 1. Electrophoretic Separation Media

The present inventors have found that simple, aqueous separation media having only a limited number of different ingredients can be used for the efficient and highly sensitive separation of analytes, provided their ingredients are selected according to specific criteria as outlined in more detail below. The concepts and resulting media presented herein are characterized by their considerable flexibility, allowing the skilled person to adapt the separation (and stabilizing) media exactly to the specific separation problem and the properties of the analyte (s) of interest.

Hence, the methods of the present invention employ separation media suitable for separating analytes in a sample by electrophoresis which contain one so-called "buffer acid" and one "buffer base", wherein the pKa value of the buffer acid is higher than the pH of the separation medium and the pKa value of the buffer base is lower than the pH of the separation medium. When applied to an acid, those of skill in the art will know that a higher pKa value indicates a weaker acid, whereas for bases, a lower pKa value indicates a weaker base.

A buffer acid according to the present invention is intended to mean any chemical compound having at least one acid function, i.e., the compound must be capable of donating a proton in a reaction (a Bronsted-Lowry acid). Similarly, a buffer base according to the present invention is intended to mean a compound having at least one base function, i.e. the compound must be capable of accepting a proton in a reaction. However, buffer acids according to the present invention may also have more than one acid function, and may even have an additional base function (the latter leading to so-called "amphoteric compounds") provided that the pKa of the base function is at least >4 pK units apart from the pKa of the acid function (thereby essentially not contributing to or influencing the equilibrium of the acid function). Likewise, the buffer base may also comprise additional base functions and even an acid function, again provided that the pKa of the acid function of a buffer base is sufficiently far apart from the pKa of the base function (> 4 pK units).

As is well-known in the art, the pKa of a compound determines which fraction of the acid function is deprotonated and which fraction has the hydrogen atom still attached at a given pH under equilibrium conditions. For example, in the case of mono-functional acids 50% of the compound is deprotonated (thus increasing the negative charge to the compound) when the pH of an aqueous solution is equal to the pKa of a given compound. When the pKa is one unit higher than the pH of a solution, only 10% of the compound will be deprotonated, whereas 90% will be deprotonated at a pKa one unit below the pH.

In order to be useful as a buffer acid for the separation media, at least a tiny fraction of the buffer acid should be deprotonated and a tiny fraction of the buffer base should be protonated at a given pH or pH range in order to provide a sufficient number of charged species to the solution required for achieving a suitable electrical conductivity in the separation medium.

The buffer base should likewise have a basicity (for ease of reference expressed by the pKa value (i.e. acidity) of the corresponding acid) that results - at a given pH - in a certain fraction being protonated, and another fraction wherein the compound is still without the attached proton.

In other words, those of skill in the art will understand that the pKa value (indicating the "strength" of an acid or a base) of the buffer acids and the buffer bases should not be too dissimilar to the pH of the separation medium. In this context, it is noted that the reference to the pH of the separation medium should be understood to refer to the pH of the aqueous medium including all components before applying an electrical field. Such a pH can be easily determined, e.g., by conventional pH meters before introducing the medium into the separation space of the electrophoresis apparatus. Depending on the contents of the separation and the stabilizing medium, it will be appreciated that the application of an electrical field may lead to the formation of a pH gradient within the separation medium so that the separation medium no longer has a uniform pH over the whole separation space. Thus, unless indicated otherwise, any reference to the pH of the separation medium in the present application always refers to the pH prior to applying the electrical field.

Those of skill in the art will be able to calculate the pH of an aqueous solution when the pKa values and the concentrations of the acids and bases in the solution are known (e.g., by applying the Henderson-Hasselbalch equation). For example, an equimolar solution of one acid having a pKa of 8.0 and one base having a pKa of 6.0 will result in a solution having a pH of 7.0 (pKa[acid]+pKa[base]/2).

Based on the above considerations, it should be realized that the condition that the pKa of the buffer acid must be higher than the pH of the separation medium and that the pKa of the buffer base must be lower than the pH of the separation medium results in an equilibrium condition where generally less than 50% of the buffer acid will be deprotonated and less than 50% of the buffer base will be protonated, respectively. It will further be understood that an acid having a pKa of more than about 3 units above the pH of the separation medium will no longer contribute a significant number of protons (i.e., it will essentially be present in its acid form) with the consequence that the electrical conductivity of the solution becomes too low for a good separation in a reasonable amount of time.

To put it differently, for the separation media used in the present invention, the pKa value of the buffer acid in the separation medium should be higher than the pKa value of the buffer base.

In general, the buffer acids and the buffer bases are selected so that the pH of the separation medium is in the range of about 2 to 12, although preferably, the pH will be somewhere in the range of between about 3 to 11. Since typical separation problems will encompass samples of biological origin, preferred pH values of the separation medium (either constant pH or the end points of a pH gradient) will often range between pH 4 and 10, or even between pH 5 and 9. Many separations, however, should or must be carried out at or near a neutral pH, i.e. typically between pH 6 and 8 or even between 6.5 and 7.5, although the pH of the separation medium will of course depend on the specific separation problem and the nature of the analytes.

Accordingly, the separation media used in the present invention comprise only one buffer acid and only one buffer base.

In certain embodiments, the pH profile within the separation media of the present invention during electrophoresis will be essentially linear (in contrast to exhibiting distinct pH steps) between the anode and the cathode during electrophoresis. In some embodiments, the pH inside the separation medium will form a (linear) gradient, whereas in other embodiments, the pH during electrophoresis remains essentially constant.

In other embodiments, the pH profile within the separation media of the present invention during electrophoresis will be essentially non-linear, i.e. the pH profile may exhibit distinct pH steps or plateaus.

Small deviations of the pH during electrophoresis may, of course, be allowed in the separation media systems, particularly at the interface of the stabilizing media present between the separation medium and the electrodes. Thus, an essentially constant pH within the separation medium means that the pH may deviate somewhat in either direction.

Preferably, the difference between the minimum pH and the maximum pH within a separation medium having an essentially constant pH should not exceed about 0.2 pH units, although the difference should ideally be as small as possible, e.g., less than about 0.1 pH units, and most preferably less than 0.05 pH units. These separation media are particularly useful for electrophoretic separations operated in zone electrophoresis (ZE) mode.

In ZE, the separation medium should provide a homogenous separation space wherein the pH and electrical conductivity conditions should be as constant as possible and practically feasible, because the separation is based on the difference of the net charge density of the various species in solution.

Based on the above-explained suitability of the separation media to exhibit a constant pH (i.e., a flat pH profile) over essentially the entire separation space, those media are referred to as ZE separation media, although it is evident that such media are not strictly confined to ZE applications.

In other embodiments, the separation media will form a pH gradient during electrophoresis, either in the form of a linear gradient or in the form of a step-wise (non-linear) pH "gradient", where the pH difference between the lowest pH (anodic side) and the highest pH (cathodic side) in the separation medium during electrophoresis is generally more than about 0.2 pH units and less than 3 pH units. Preferably, the pH difference is between 0.5 and 2 pH units, and more preferably between 0.5 and 1.5 pH units. In other words, such separation media form a relatively flat, or even ultraflat pH gradient during electrophoresis. Since these separation media are particularly suitable for electrophoretic separations operated in isoelectric focusing mode (IEF), these media are reffered to as flat IEF (pH difference between about 1.5 and 3 pH units) and ultraflat IEF separation media (pH difference between about 0.2 and <1.5 pH units), although again the used terms should not be understood to strictly limit these media to IEF applications.

For preferred separation media (ZE and IEF) the pKa value of each buffer acid in the separation medium is about 0.2 to about 2 units higher than the pH of the separation medium, and the pKa value of each buffer base is about 0.2 to about 2 units lower than the pH of the separation medium.

In particularly preferred ZE separation media, the pKa value of each buffer acid is about 0.4 to about 1.2 units higher, and the pKa value of each buffer base is about 0.4 to about 1.2 pH units lower than the pH of the separation medium. Even more preferred are embodiments, wherein the pKa values of each buffer acid and buffer base is between 0.4 to 0.9 units, or even 0.6 to 0.9 units above (buffer acid) or below (buffer base) the pH of the separation medium.

Particularly, although not limited to IEF separation media, the selection criteria for the buffer acids and the buffer bases can also be defined differently, not the least because in IEF there is no longer a constant pH of the separation medium. Another selection criterion that must be fulfilled by the buffer acids and buffer bases present in the separation media therefore refers to the pKa difference (ΔpKa) between the buffer acid and the buffer base. The skilled person will understand that either the selection criteria referencing the pH of the separation medium, or the criteria referring to the pKa difference must be obeyed. In preferred embodiments, however, both criteria should be fulfilled for the buffer acids and buffer bases in the separation media.

Accordingly, in certain embodiments, the $\Delta$pKa between the buffer acid and the buffer base in the separation medium should be between about 0.5 and about 4 pK units.

Particularly preferred $\Delta$pKa differences between the buffer acid and the buffer base are between 0.8 and 2.5, and more preferably between 1.0 and 2.0. Very good results have been achieved with separation media, specifically in ZE, where the $\Delta$pKa is between about 1.2 and about 1.8. For other applications, and in particular flat IEF applications, the $\Delta$pKa may be between 2.5 and 4, and is preferably between 2.5 and 3.3.

In this context, it is noted that the pKa values of an acid or a base can be determined experimentally, although the pKa value of most compounds can usually be found in standard text books such as the CRC Handbook of Biochemistry and Molecular Biology, or in reference collections such as the Merck Index. It is important to note that the pKa value of a given compound is dependent on the temperature of the solution. Therefore, unless specified otherwise, any reference to a pKa value will relate to standard conditions (aqueous solution at 25°C), although the deviations observed for another temperature are usually rather low. The temperature dependency of the pKa of a given compound is often also listed, so that the pKa difference can easily be calculated for any given temperature.

For separation media (be it for ZE or for IEF applications), it is preferred that the relative concentrations of the buffer acids and the buffer bases are within a certain ratio. Thus, the ratio between the concentration of all buffer acids and all buffer bases should typically be between 9:1 and 1:9. In preferred embodiments, the ratio is even smaller, such as between 4:1 to 1:4, or between 7:3 and 3:7, or even between 3:2 and 2:3. Most preferred, particularly in applications where a constant pH is desired (e.g., in ZE applications), is a ratio of about 1, i.e., the concentration of the buffer base is essentially equal to the concentration of the buffer base. Regardless of the above, the skilled person will understand that the exact concentration of a given acid or base may depend on a number of factors including the nature of the sample, the presence of other additives (see below) and the desired pH of the separation medium and may be adapted accordingly. However, the buffering and electrophoretic capacity of the medium will at some point be lost when the concentration of one compound (either the buffer acid or the buffer base) is chosen too low, i.e., outside the above-listed ratios.

Regarding the absolute concentrations of the buffer compounds required for achieving successful separations, the skilled artisan will realize that there can be no strict rule, although it should generally be understood that the concentration should be high enough to provide sufficient electrical conductivity and buffering capacity. Analytes having a high (surface) charge density (e.g., peptides or proteins) will, as a general rule, require higher concentrations of the buffer compounds than analytes having a relatively low charge density (e.g., cells or cell organelles). Similarly, for applications where the separation medium exhibits a constant pH (i.e., flat pH profile), a lower concentration of the buffer compounds is required to achieve the desired buffering capacity, whereas for pH gradients (e.g. in IEF applications), the concentration should be higher, particularly in cases with only one or two buffer acids/bases, because the difference between the pH and the pKa of the compound may be larger leading to less ionization (protonation and deprotonation, respectively) of the compound.

With the above principles in mind, it is contemplated that the separation media include buffer acidi and buffer base at concentrations, independent from each other, of at least about 5 mM, although in most applications, the concentrations are higher ($\geq$10 mM, $\geq$20 mM, or even $\geq$ 30, $\geq$40 or even $\geq$50 mM). When referring to the concentration of the buffer acid and base, respectively, it will be appreciated that the given numbers are intended to refer to the total concentration of buffer acid or buffer base, respectively, in a given separation (as well as stabilizing) medium of the present invention.

One characteristic of the separation media provided by the present invention is that their electrical conductivity is selected to be within a certain target range, i.e., not too low to ensure a sufficient electrophoretic mobility of the species (thereby achieving good separation in a limited amount of time), but also not too high to avoid unwanted effects and phenomena caused by fast-moving species within the separation medium. Moreover, a relatively low electrical conductivity of the separation medium allows to carry out the electrophoretic separations at a high electrical field strength without causing thermal overloading (unwanted heat dissipation caused by the electrophoretic process), as observed with many separation media of the prior art.

Whilst the absolute electrical conductivity of the separation media of the present invention will again depend somewhat on the nature of the analytes and the specific separation problem, the separation media should have, as a general rule, an electrical conductivity of between 30 and 1,000 $\mu$S/cm, although the conductivity should generally not exceed 700, and better yet 500 $\mu$S/cm. Particularly preferred are conductivity values of between 50 and 500 $\mu$S/cm, more preferred even between 50 and 400 $\mu$S/cm. In certain situations, the conductivity may be between 50 and 200 $\mu$S/cm or even 50 to 150 $\mu$S/cm, although other values within the broadest limits mentioned above may also be acceptable under specific circumstances. Those of skill in the art are well-aware how to determine electrical conductivity of solutions, for example with standard equipment sold commercially.

In embodiments where the formation of a pH gradient of between 0.2 and 3 pH units during electrophoresis is required or desirable (i.e., for IEF separation media), it will be understood that the separation medium will actually consist of several separate fraction which comprise varying concentrations of the buffer acid and buffer base in the medium in order to establish a pre-formed pH gradient. Typically, the number of separate fraction will be at least 2 and will, already for practical reasons, rarely exceed about 15 fractions. In preferred embodiments, the number of fractions having different acid and base concentrations or concentration ratios is between 3 and 12, 4 and 10, 5 and 9, or even 6 to 8 fractions. While the number of sub-fractions is not limited technically, in practice, the number will often be governed or at least influenced by the number of different media inlets (E) of the electrophoresis apparatus used for the separation. Such separation media are preferably used in free-flow isoelectric focusing (FF-IEF).

Typical separation times (transit times for the ions in the medium) during which an electrical field is applied typically range from a couple of minutes to about one hour per separation run, although longer separations may also be possible under certain conditions. Preferably, the transit time of the ions is at least 15 minutes, using the separation media together with the stabilizing media. In any event, the separation media may under certain conditions even allow the efficient separation/fractionation of analytes in less than 10 minutes or even less than 7 or 5 minutes. In general, ZE and ITP separations will have shorter separation times than flat or ultraflat IEF separations, where the residence time between the electrodes may easily exceed 30, or even 60 minutes.

Suitable buffer acids for the purpose of the present invention have a pKa of between about 3 and about 13, although it is clear that for separations performed at or near typical pH values for bioparticles (e.g., around pH 6 to 8), the selection criteria for the buffer acid will typically require that the buffer acid has a pKa somewhat above the pH of the separation medium (i.e., the pKa is often between >6 and 10 in these cases). Since most electrophoretic applications are performed with analytes of biological origin, the buffer acids are preferably selected from biologically acceptable acids (or amphoteric compounds as explained above) having the desired acid function properties, i.e. a suitable pKa. Biologically acceptable means that the buffer compound first of all is not toxic for the operator or the sample, and does not lead to an undesirable interaction with the analytes (for example a chemical reaction changing the nature or chemical constitution of the analyte). Suitable biologically acceptable buffer acids include, but are not limited to compounds belonging to the group of so-called Good's buffers. Specific examples of suitable buffer acids include the compounds known as HIBA, acetic acid, picolinic acid, PES, MES, ACES, MOPS, MOPSO, HEPES, EPPS, TAPS, taurine, AMPSO, CAPSO, α-alanine, β-alanine, GABA, EACA, 4-hydroxypyridine, 2-hydroxypyridine, and the like.

It will be appreciated that the foregoing list is not meant to be limiting, as those of skill in the art will be able to find countless possible buffer acids having the desired functional properties and pKa values required for their inclusion in a separation medium of the present invention.

Similarly, the buffer bases of the present invention should typically have a pKa of between about 1.5 and 12, and are preferably selected from the group of biologically acceptable bases having the desired base function properties, i.e. a suitable pKa. Suitable buffer bases may be found within the Good's buffers, or include, but are not limited to taurine, glycine, 2-amino-butyric acid, glycylglycine, β-alanine, GABA, EACA, creatinine, pyridine-ethanol, pyridine-propanol, histidine, BISTRIS, morpholinoethanol, triethanolamine, TRIS, ammediol, benzylamine, diethylaminoethanol, trialkylamines, and the like.

The separation media may further comprise one or more additives. Additives are compounds or ions that do not (or at least not significantly) contribute to the buffering capacity provided by the buffer acids and the buffer bases. Generally, the number and concentration of additives should be kept to a minimum, although it will be appreciated that certain analytes or separation problems require the presence of additional compounds either for maintaining analyte integrity or for achieving the desired properties of the medium (e.g., denaturing conditions).

Possible additives are preferably selected from so-called "essential" mono- and divalent anions and cations, viscosity enhancers, detergents, protein solubilizing agents, affinity ligands, reducing agents and the like.

Furthermore, other acids or base may be present in the separation media, provided the pKa of their acid or base function is sufficiently far-removed from the pH or pH range of the separation medium to avoid contributing to the buffering capacity of the solution (although they may of course contribute to the electrical conductivity in the medium). Examples for possible acids and bases include small amounts of strong acids or bases (e.g., NaOH, HCl, etc.) that are completely dissociated in solution, e.g. for a fine-tuning of the pH of the medium, or very weak acids or bases that are present as essentially undissociated species in the medium (i.e. having a pKa that is more than about 4 units away from the pH of the medium).

Essential mono- and divalent anions and cations are ions that may be needed for maintaining the structural and/or functional integrity of the analytes in the sample. Examples for such essential anions and cations include, but are not limited to magnesium ions, calcium ions, zinc ions, Fe(II) ions, chloride ions, sulfate ions, phosphate ions or complexing agents such as EDTA or EGTA, or azide ions (e.g., for avoiding bacterial contamination), and the like.

Viscosity enhancers commonly used in the separation media may include polyalcohols such as glycerol or the various PEGs, hydrophilic polymers such as HPMC and the like, carbohydrates such as sucrose, hyaluronic acid, and the like. Viscosity enhancers may be required to adapt the viscosity of the separation medium to the viscosity of the sample introduced into the separation space in order to avoid turbulences created by the density or viscosity differences between sample and medium.

Additional additives that may be present include chiral selectors such as certain dextrins including cyclodextrins, or affinity ligands such as lectins and the like. Further, many suitable detergents are known to those of skill in the art, including SDS, surfactants such as fatty alcohols, octyl glucoside, polysorbates known as Tween©, and the like. Examples for protein solubilizing agents include urea or thiourea, but may also include surfactants and detergents.

In certain cases, it may be required to add reducing agents to prevent the oxidation of an analyte in the solution. Suitable reducing agents that may be added to the sample and/or the separation medium includes mercaptoethanol, mercaptopropanol, dithiothreitol (DTT), ascorbic acid, sodium or potassium metabisulfite, and the like.

In any event, because many of the aforementioned additives are electrically charged, their concentration should be kept as high as needed but at the same time as low as possible so as to maintain the electrical conductivity of the separation medium within the desired (low) range.

Specific examples for suitable separation media, in accordance with embodiments of the present invention (both ZE and (ultra)flat IEF separation media), are described below in the Example section.

## II. Stabilizing Media

### II.1. General Criteria for the Design of Stabilizing Media

The stabilizing media are intended to stabilize the electrochemical composition and conditions within the separation medium, to prevent the cross contamination between the separation area and the electrode compartments in either direction, and to supply all the chemicals required in FFE applications. The stabilizing media are present in the vicinity of the anode and cathode, respectively, and reside generally between the respective electrodes and the separation medium.

Stabilizing media are generally characterized by having an electrical conductivity that is higher than the conductivity in the separation medium. The concept of stabilizing media as disclosed herein is applicable for nearly all situations and set-ups, and is largely independent of the desired pH of the separation medium and the solubility of the buffer compounds, as will be explained in more detail below.

Unless indicated otherwise, the following selection criteria are common to all stabilizing media, irrespective of the operating mode of the electrophoretic separation (i.e., ZE, IEF or ITP).

*A) Cathodic Stabilizing Media*

The cathodic stabilizing media (CSM) are present in the vicinity of the cathode of the electrophoresis apparatus, or, alternatively, at least adjacent to the cathodic side of the separation medium and comprise at least one buffer acid, and at least one strong base. The meaning of a buffer acid has already been explained in the section relating to the separation media, and equally applies for the buffer acid(s) of the stabilizing media. A strong base as used in the present context is intended to mean a base that is able to substantially deprotonate the buffer acid in the stabilizing medium, thereby increasing the ionization in the CSM. Preferably, essentially 100% of the strong base is present in protonated form (or directly delivers $OH^-$ ions to the aqueous solution) at any given pH of the separation medium. Accordingly, strong bases have a high pKa, often above 13, and sometimes even higher.

The concentration of the strong base should be chosen so as to be sufficient for achieving at least a substantial deprotonation of all acids (including the buffer acid) in the CSM. Substantial deprotonation means that at least more than about 30%, and preferably more than about 50, 60, 70 , 80 or even 90% of the buffer acid is present in deprotonated form, i.e, as the conjugated base of the buffer acid used in the CSM. In other words, the addition of the strong base increases the concentration of ionized species within the CSM, which leads to an increased electrical conductivity compared to the situation without the addition of the strong base.

On the other hand, any excess strong base not buffered by the buffer acid will merely lead to an undesirable increase of the pH in the stabilizing medium. Accordingly, it will be understood that the concentration of the strong base should at best be equal, but is preferably lower than the concentration of all buffer acids (if more than one is present) in the CSM. In view of the presence of a strong base, those of skill in the art will appreciate that the pH of the CSM is usually higher than the pH of the separation medium, regardless of whether the electrophoretic separation is operated in ZE, IEF or ITP mode. However, due to the undesirable effects observed when large pH shifts occur at the boundary between the stabilizing medium and the separation medium, the pH difference between the CSM and the separation medium should not be more than about 3, and preferably not more than about 2 or even 1 pH units. Most preferably, the pH shift should be as low as possible, particularly for FF-ZE.

Those of skill in the art will be aware that the pH over the entire stabilizing area between the cathode and the separation medium usually cannot be held constant, because of the influx of hydroxyl ions generated by the cathode during electrophoresis. The above-mentioned desire for a low pH difference between the CSM and the separation medium therefore refers to the pH in the CSM close to the boundary towards the separation medium. In fact, whether the pH can be kept constant closer to the cathode is normally not particularly relevant because the high conductivity barrier created by the CSM *inter alia* serves to prevent the analytes from entering the CSM.

The cathodic stabilizing media may additionally comprise at least one buffer base, wherein the buffer base has the same meaning as explained above for the separation media, provided that the concentration of all acids used in the CSM is greater than the concentration of all bases. In other words, the sum of the molarities of the (buffer) acids in these embodiments must be higher than the sum of the molarities of the bases (buffer bases + strong base), i.e. the CSM should have a concentration ratio of at least >1 (all acids *versus* all bases). For practical reasons, a concentration ratio of >50 will rarely be necessary or desirable. In preferred embodiments where one or more than one buffer base is present, the concentration ratio (acids/bases) in the CSM is between about 2 and about 10, and is more preferably between 3 and 8, or even between 4 and 6, although any concentration ratio between about 1.1 and 50 may be possible in a suitable CSM.

In principle, the buffer acid(s) used for the CSM may be the same or may be different to the buffer acid(s) used in the separation medium. In cases where a different buffer acid is chosen, the electrophoretic mobility of the (different) buffer acid in the CSM should preferably, but not necessarily, be similar or at least close to the electrophoretic mobility of the buffer acid in the separation medium. Electrophoretic mobility (EM), as used herein, means the rate of migration of anions and cations in an electrical field at a given field strength per time unit in an aqueous media. The electrophoretic mobility u can be calculated as follows:

$$u = s \, / \, H \, x \, t$$

wherein s represents the distance of migration (meter), H represents the electric field strength (V/m) and t represents the time (sec.). Moreover, the pKa of the buffer acid should likewise be similar or at least close to the pKa of the buffer acid in the separation medium. Those of skill in the art will realize that this criterion is particularly important for ZE applications, but does not really apply to (anodic) ITP separations, where other criteria for the selection of the buffer acid in the CSM should be applied as explained in more detail further down below.

Another criterion that should preferably be fulfilled for the buffer acids of the CSM is that the pKa of each buffer acid in the CSM should at best be equal (specifically in ZE), and otherwise be higher than the pKa of each buffer acid in the separation medium. In other words, the buffer acid should either be identical to the buffer acid in the separation medium, or be slightly weaker in the case of a different buffer acid.

With respect to the selection criteria relating to the identity and properties of the buffer acids in the CSM, particularly in cases where more than one buffer acid is present, those of skill in the art will understand that they depend on the intended operating mode. Accordingly, suitable selection criteria for preferred stabilizing media for ZE, IEF and ITP, respectively, will be described for each operating mode in the following section.

In any event, for preferred stabilizing media used in ZE and IEF applications (i.e., not applicable to ITP applications), the total concentration of all acids in the CSM will be higher than the concentration of all buffer acids in the separation medium. Preferably, the concentration ratio (CSM to separation medium) will be between 1.1 and 50, while particularly preferred concentration ratios will be between 1.5 and 30. Even more preferred are ratios between 2 and 20, and most preferably between 5 and 15, although concentration ratios of between 3 and 7 or between 5 and 10 may also give satisfying results for many separation problems.

Absolute concentrations of all buffer acids in the CSM together may vary widely and are dependent on the particular separation problem, the nature of the analytes, the composition of the separation medium. However, typical concentrations for the buffer acids in the separation medium are more than about 20 mM, although frequently the concentration will be somewhat higher, such as more than 50 mM, more than 75 mM, more than 100 mM, more than 150 mM, or even more than 200 mM. A natural limit for the upper concentration will of course be given by the solubility of the respective buffer compounds. For example, histidine is generally a good buffer compound and well-suited for use in electrophoretic separations, but its utility may sometimes be limited by a relatively low solubility.

Absolute concentrations of all buffer bases (if present) in the CSM together may again vary widely and are dependent on the particular separation problem, the nature of the analytes, and the composition of the separation medium. However, concentrations for the buffer bases in the separation medium are typically more than about 10 mM, although the concentration will frequently be somewhat higher, such as more than 20 mM, more than 30 mM, more than 50 mM, more than 100 mM, or sometimes even more than 200mM, provided the total concentration of all bases in the CSM is lower than the concentration of the (buffer) acids as explained above.

*B) Anodic Stabilizing Media*

The anodic stabilizing media (ASM) are essentially selected according to identical criteria as described for the cathodic stabilizing media (CSM), except that for ASMs, the terms acid and base will have to be exchanged when compared to the CSM.

Hence, the ASMs must comprise at least one buffer base and one strong acid, wherein the latter preferably serves to achieve substantial protonation of all bases in the ASM. Consequently, the pH of the ASM will usually be lower than the pH of the separation medium and the pKa values of the buffer bases in the ASM should be equal or lower than the pKa values of the buffer bases in the separation medium (i.e., an equal or weaker base should be present in the ASM).

As in the case of CSMs, the ASMs may additionally comprise at least one buffer acid, with the proviso that the concentration of all (buffer) bases should then be higher than the concentration of all acids in the ASM.

Preferred embodiments have already been discussed in relation to the CSM and equally apply to the ASMs, again with the proviso that the terms acid and base are exchanged and that a weaker base is characterized by a lower pKa value (whereas a weaker acid is characterized by a higher pKa value).

Moreover, suitable buffer acids and buffer acids for the anodic and cathodic stabilizing media are generally chosen among the same buffer acids and buffer bases as described for the separation media.

Those of skill in the art will be aware of suitable strong acids and strong bases that can be used for the stabilizing media. Strong acids may be selected from any acid that releases essentially all protons, thereby protonating the buffer bases in the ASM, e.g., hydrochloric acid, hydrobromic acid, sulfuric acid, phosphoric acid, and the like. Strong bases may be selected from any base that is primarily present in its conjugated acid form or directly contributes hydroxy ions ($OH^-$) to the CSM, and is further capable of deprotonating the buffer acid to a great extent, e.g., alkali metal hydroxides such as sodium hydroxide, potassium hydroxide, etc., or earth alkali metal hydroxides such as magnesium hydroxide or calcium hydroxide, and the like.

Generally, the strong base should have a pKa of at least 12 and the strong acid should have a pKa of less than about 1.5 in order to be useful, although those of skill in the art will realize that the underlying principle is a sufficiently large difference in the acidity/basicity compared to the buffer bases and buffer acids in the stabilizing medium so that the strong base or strong acid is capable of ionizing the corresponding buffer acid/buffer base as explained above. Accordingly, a strong acid is an acid having a pKa that is at least about 3 pK units below the pKa of any buffer bases in the ASM. Likewise, a strong base is any base that has a pKa of at least 3 pK units above the pKa of the buffer acids in the CSM.

The stabilizing media may also comprise one or more than one additive. The additives are selected according to the same criteria as outlined for the separation medium. In fact, since the additives are usually required for maintaining sample/analyte stability, it is common, but not required that the additives are the same as present in the separation medium. In accordance with the increased concentration of the buffer acids/bases in the stabilizing media, the concentration of the ionic additives is likewise usually increased compared to the concentration of the additives in the separation medium. The concentration of viscosity enhancers such as glycerol or sucrose, however, will preferably be adapted to achieve a similar viscosity and density of the stabilizing media and the separation media, respectively.

A central feature of the stabilizing media is that the electrical conductivity must be higher, and preferably much higher than the conductivity in the separation medium. Thus, in preferred embodiments, the conductivity of the ASM and the CSM is, independently from each other, increased over the conductivity in the separation medium by a factor of at least about 2, although it is even more preferred that the conductivity is increased by a factor of at least 3, 4, 5, 6, 7, 8, 9 or 10 higher than the conductivity of the separation medium. In particularly preferred embodiments, the electrical conductivity of the stabilizing media is at least more than 10-fold higher than the conductivity in the separation media.

The absolute conductivity values of the stabilizing media are therefore preferably above about 500 $\mu$S/cm, although in most situations, the conductivity will be at least 1,000, 1,500, 2,000, 3,000 or even 5,000 $\mu$S/cm. In certain circumstances, particularly at a relatively high conductivity in the separation medium, good results may be achieved where the stabilizing media have conductivity values of over 10,000, or even over 20,000 $\mu$S/cm.

It should be understood that the conductivity of the anodic stabilizing medium does not need to be the same as that of the cathodic stabilizing medium, although they will typically be in a similar range. At any rate, the actual conductivity value will normally depend on the specific separation situation and may vary between the ASM and the CSM, provided that the stabilizing medium is designed so as to maintain a stable conductivity barrier towards the separation medium.

While the foregoing general selection criteria for the design of suitable stabilizing media according to the present invention apply to essentially all operating modes, and particularly to ZE and IEF applications, the following sections describe certain preferred embodiments that are specifically adapted to the electrophoretic operating mode (ZE, IEF and ITP, respectively).

*II.2. Stabilizing Media for Zone Electrophoresis*

A characteristic of electrophoretic separations operated in zone electrophoresis mode is that the pH within the separation medium should be essentially constant in order to achieve a separation of the particles based on the different net charge density of the particles in the solution. Those of skill in the art will appreciate that the actual net surface charge density will be dependent on the pH surrounding each particle. Thus, a constant pH within the separation medium serves to maintain a distinct net charge density of a particle. However, ZE separations performed without stabilization will frequently encounter pH instabilities, particularly in the region closer to the electrodes, thereby diminishing the separation efficiency due to the change in the net charge density of the analytes present in that region. Accordingly, a suitable stabilizing medium for ZE applications will maintain the pH as good as possible while exhibiting a high conductivity which creates a conductivity barrier preventing the analytes to pass through to the electrodes. Accordingly, in zone electrophoresis, the pH difference between a stabilizing medium and a separation medium is less than 1.5, preferably less than 1.2, more preferably less than 1.0, particular preferably less than 0.8 and most preferably less than 0.6 pH units.

Since the described separation media, comprising one buffer acid and one buffer base, are highly suitable for ZE applications, it will be appreciated that suitable ZE stabilizing media can be defined with reference to such separation media. Accordingly, preferred ZE stabilizing media will comprise at least one buffer acid being identical to the buffer acid in the separation medium (CSM), or at least one buffer base being identical to the buffer base in the separation medium (ASM). Alternatively, the buffer acid in the cathodic or the buffer base in the anodic separation medium should have a similar pKa value and a similar electrophoretic mobility than the respective acid/base in the separation medium. Similar in this context means that the pKa value should not differ more than about 0.5, and preferably should not differ more than about 0.3 or even 0.1pK units. Similarly, the electrophoretic mobility should not differ by more than 30%, and should preferably differ less than about 20 or even 10%.

In cases where there is more than one buffer acid (CSM) or buffer base (ASM) present in the medium, the additional buffer acids/bases should preferably be weaker (i.e., acids having a higher pKa and bases having a lower pKa) than the buffer acid/base that is also present in the separation medium. For particular embodiments, the concentration of the weaker acids or bases in the stabilizing medium should be lower, and preferably much lower (e.g., by a factor of at least 2, 3, 4, 5 or even 10) than the concentration of the buffer acid/ base that is identical to the one employed in the separation medium.

Since the buffer concentrations in the ZE separation medium are typically rather low (because the buffer compounds can be selected to have their optimal buffering capacity at the given pH), it will be appreciated that the absolute concentrations of the buffer acids (CSM) and buffer bases (ASM) within the ZE stabilizing media will normally be lower compared to the concentration required for IEF applications.

Particularly good results have been achieved with ZE stabilizing media comprising one single buffer acid (CSM) or one single buffer base (ASM), although other preferred ZE stabilizing media may comprise an additional, weaker buffer acid (CSM) or buffer base (ASM), although at a lower concentration as explained above.

Additionally, the stabilizing media may also comprise buffer bases (CSM) or buffer acids (ASM), with the proviso that their concentration, together with the concentration of the strong acid/strong base, does not exceed the total concentration of all buffer acids (CSM) or buffer bases (ASM) in the ZE stabilizing media as explained in more detail above.

In any event, the selection of the buffer acids/buffer bases in the CSM and ASM, respectively, should be governed by the goal to maintain the essentially flat pH profile within the separation medium. Stabilizing media as defined above are very useful in FF-ZE.

*II.3. Stabilizing Media for Isoelectric Focusing*

In electrophoretic separations operated in isoelectric focusing mode, the separation of the different particles or species within a sample is based on their different pI value, with said pI value being equivalent to the pH value of the surrounding, non-homogenous separation medium against which the particles/species appear electrically neutral. Accordingly, an IEF separation will be performed in the presence of a pH gradient, which may be linear, but can also be discontinuous (i.e. stepwise). IEF separation media providing a wide pH gradient are known in the art (e.g., Servalyt®, or Prolytes®, as mentioned hereinabove). The pH gradient of an IEF separation medium should preferably be selected to encompass at least the pI values of the analytes of interest. For example, for analytes having a pI of between 6.5 and 8 (e.g., proteins), the pH gradient in the IEF separation medium should ideally range from at least about pH 6 to about pH 8.5 to achieve optimal results.

The separation media are generally characterized by the small number of required ingredients, and are particularly suitable for flat or even ultraflat pH gradients (i.e., pH difference of less than about 3 pH units). The separation media according to the present invention comprise one buffer acid/ and one buffer base.

The IEF stabilizing media described herein are useful and suitable for stabilizing the conditions of all IEF separation media, including the separation media for flat and ultraflat pH gradients. In certain embodiments, the IEF stabilizing media are designed according to the following selection criteria. Keeping those general principles of the IEF separation media in mind, the following criteria particularly apply for the design of suitable IEF stabilizing media of the present invention.

Accordingly, for IEF stabilizing media, the pKa of the buffer acid in the CSM should be higher than the pI value of the most basic analyte in the sample (i.e., the analyte having the highest pI). Similarly, the pKa of the buffer base in the ASM should be lower than the pI of the most acidic analyte in the sample.

Suitable IEF stabilizing media may be designed with only one buffer acid (CSM) or only one buffer base (ASM), particularly for flat and ultra-flat pH gradients, although it is contemplated that the IEF stabilizing media may also comprise more than one buffer acid (CSM) and buffer base (ASM), respectively. In certain embodiments, two, and sometimes even three or more buffer compounds may be present in the CSM and ASM, respectively.

The pKa of each buffer acid in the CSM should be within the range $(pI + 0.3) < pKa < (pI + 3)$, preferably within the range $(pI + 0.5) < pKa < (pI + 2)$, and most preferably within the range $(pI + 0.5) < pKa < (pI + 1.3)$. Similarly, the pKa of each buffer base in the ASM should be within the range $(pI - 3) < pKa < (p - 0.3)$, preferably within the range $(pI - 2) < pKa < (pI - 0.5)$, and most preferably within the range $(pI - 1.3) < pKa < (pI - 0.5)$.

Alternatively, the pKa values of the buffer acids in the CSM and the buffer bases in the ASM can also be defined in relation to the pH range (i.e., minimum pH and maximum pH) of the IEF separation medium. The definition based on the pH range of the IEF separation medium may be alternative to the one referring to the pI of the analytes, or may be additive said requirement. Accordingly, the pKa value of each of the buffer acids in the CSM will be higher than the maximum pH value of the IEF separation medium. Likewise, the pKa value of each of the buffer bases in the ASM will be lower than the minimum pH value of the IEF separation medium.

In particular embodiments, the pKa value of each buffer acid in the CSM is in the range of $(pH_{max} + 0.3) < pKa < (pH_{max} + 3)$, preferably within the range $(pH_{max} + 0.5) < pKa < (pH_{max} + 2)$, and most preferably within the range $(pH_{max} + 0.5) < pKa < (pH_{max} + 1.3)$, and the pKa value of each buffer base in the ASM is in the range of $(pH_{min} - 3) < pKa < (pH_{min} - 0.3)$, preferably within the range $(pH_{min} - 2) < pKa < (pH_{min} - 0.5)$, and most preferably within the range $(pH_{min} - 1.3) < pKa < (pH_{min} - 0.5)$.

If more than one buffer acid (CSM) or buffer base (ASM) is present, the additional buffer compounds should be selected to have different pKa values within the above-prescribed range. In preferred embodiments, the concentration of the weaker buffer acids in the CSM and the weaker buffer bases in the ASM should be higher than the concentration of the respective strongest buffer acids (CSM) and buffer bases (ASM), i.e. the buffer acid having a pKa closest to the pI of the most basic analyte for the CSM, and the buffer base having a pKa closest to the pI of the most acidic analyte for the ASM, respectively.

Higher concentration in this regard means that the concentration of the weaker acids and bases is increased by a factor of at least 1.1, and preferably at least about 2, more preferably about 3, and sometimes by a factor of about 4, 5 or even 10 over the concentration of the strongest buffer acid/base in the CSM and ASM, respectively.

In addition, the IEF stabilizing media may also comprise one or more buffer bases (CSM) and buffer acids (ASM), with the proviso that the combined concentration of all bases in the CSM is lower than the total concentration of the respective buffer acids, and the concentration of all acids in the ASM is lower than the total concentration of the respective buffer bases, respectively.

The pH of the CSM will normally be higher than the maximum pH (the end-point of the pH gradient towards the cathode) of the separation medium. Preferably, the pH of the CSM should not be higher than about 3, and more preferably not more than about 2 pH units above the maximum pH of the IEF separation medium. Specifically for ultraflat pH gradients, it is particularly preferred that the pH difference is kept to a minimum, i.e., the pH may only be 1.5 pH units or only 1 pH unit above the maximum pH of the IEF separation medium. Likewise, the pH of the ASM should not be lower than about 3, and more preferably not lower than about 2 pH units below the minimum pH of the IEF separation medium. For ultraflat pH gradients, it is particularly preferred that the pH difference is kept to a minimum, i.e., the pH may only be 1.5 pH units or only 1 pH unit lower than the minimum pH of the IEF separation medium.

It is preferred that the value of the pH difference between a stabilizing medium and a separation medium adjacent to the stabilizing medium is at least around 0.6 pH units, preferably at least around 0.8 pH units and most preferably at least around 1 pH units. Following the principles for the pH differences between CSM and ASM, respectively, and a separation medium as outlined above, the pH value of a CSM will be higher than the maximum pH value of a separation medium and the pH value of an ASM will be lower than the minimum pH value of a separation medium.

Those of skill in the art will appreciate that the pH values observed in the stabilizing media may not be constant over the entire range (particularly when approaching the electrodes), so that any reference to the pH of the stabilizing media should be understood as the pH at or near the boundary between the stabilizing and the separation medium. Moreover, it will be appreciated that the identity of the buffer compounds in the stabilizing media will have an influence on the pH conditions in the separation medium. In fact, the choice of the ingredients and their concentration will determine the pH gradient that is achieved when applying an electrical field during electrophoresis. It will therefore be understood that the reference to pH values will generally refer to the pH in equilibrium conditions (i.e., after the gradient has formed), and may under certain circumstances even deviate from the above-described preferred values.

*II.4. Stabilizing Media for Isotachophoresis*

Free-flow or free solution isotachophoresis (ITP) separation techniques utilize the differences in the electrophoretic mobility (EM) value of the particles to achieve an electrophoretic separation process. In contrast to free-flow zone electrophoresis, separation is achieved in a non-homogenous medium, and often yields a better dissolution due to the "focusing effect" inherent in the operating mode. In fact, when single particles are diffused from a separated band of particles (e.g. proteins) during ITP, these particles enter a medium with varying electrical field strength, resulting in the particles being locally accelerated or decelerated generally towards one of multiple electrodes. The inherent focusing effect means that the slower or faster moving particles find their way back into the dominant fraction again. Particles with known electrophoretic mobility may be isolated within a migrating field by the addition of spacers with electrophoretic mobilities slightly higher and slightly less than the particle of interest. This is generally termed "stacking" wherein "spacers" are utilized to isolate the particle(s) with known and distinct electrophoretic mobility. An example of the fundamentals of isotachophoresis is shown in US Pat. 3,705,845, entitled "Method in Counterflow Isotachophoresis".

As briefly mentioned above, ITP differs from standard zone electrophoresis or isoelectric focusing by using a discontinuous electrolyte system. This discontinuous electrolyte system is typically composed of a leader and a terminator electrolyte or medium, wherein the charged species in these media exhibit a faster (leader) and a slower (terminator) effective electrophoretic mobility than the ionic species or analytes contained in the mixed sample. In other words, the charged species in the sample will travel towards the respective electrode "encased" or "guarded" by the faster moving leader ions and the slow-moving terminator ions.

In practice, the sample to be separated is normally introduced between the leader and the terminator media, either by itself or sometimes together with other compounds/ions that exhibit an electrophoretic mobility which is between the mobility of the terminator and that of the leader (i.e., slower than the leader and faster than the terminator). Such additional media having an intermediate mobility are sometimes referred to as spacer media or spacer electrolytes.

While subjected to an electric field, the charged species will begin to move towards the electrode having the opposite charge but with varying velocities corresponding to their individual electrophoretic mobility. In other words, the mixture of analytes in the sample will separate into pure zones of individual species in accordance with their electrophoretic mobility. Assuming sufficient buffering capacity exists, after complete separation, a steady state migration is achieved. Additionally, depending on the other portions of the mixed sample, "spacers" within the mixed sample cause a state characterized as "stacking" for adjacent zones. Each "stacked" zone therefore comprises only one substance of the same or similar electrophoretic mobility. The zone(s) comprising the mixed sample migrate in the same order of decreasing mobilities but nevertheless with the same velocity of movement with respect to the electrode.

The isotachophoresis steady state has a special feature of concentration throughout each sample zone, wherein the concentration of the sample zone is directly proportional to the concentration of the leading zone (leader). Specifically, characteristics of concentration and mobilities for migrating ions in isotachophoresis interrelate by the Kohlrausch equation which is known to those of skill in the art.

Isotachophoresis has traditionally been used in capillary electrophoresis, but more recently, successful separations employing free-flow electrophoresis devices, such as the BD™ Free-flow Electrophoresis System, have been developed. For example, a preparative separation of organelles has recently been described in intermediate documents WO 2008/053047 and WO 2008/025806.

Similar to electrophoresis applications carried out in other operating modes (e.g., ZE and IEF), ITP separations will nevertheless often encounter stability problems, particularly, but not exclusively when performed as a preparative or analytic free-flow deflection electrophoresis technique. The novel concept of ITP stabilizing media described herein solves the stability problems observed in the art and ensures stable, reproducible, and accurate electrophoretic separation conditions, particularly a reproducible electric field strength profile at a given time during electrophoresis.

Due to the peculiarities of the ITP operating mode as described above, those of skill in the art will appreciate that there are in principle four distinct stabilizing media that need to be considered. First of all, the analytes of interest may be positively or negatively charged and will therefore travel towards the anode and the cathode, respectively.

Accordingly, one can make the distinction between <u>anionic</u> ITP separations, where negatively charged species (i.e., anions) of interest travel towards the anode, and <u>cationic</u> ITP separations, where positively charged species of interest travel towards the cathode. In each case, there will be a stabilizing medium in the vicinity of the anode and the cathode, respectively. Thus, in anionic ITP, there will be an anodic stabilizing medium which comprises the fastest moving species (i.e., the "leader" ion), and a cathodic stabilizing medium which must comprise the slowest moving species (i.e., the "terminator" ion). *Vice versa,* the cationic ITP separations will have an anodic stabilizing medium comprising the terminator and a cathodic stabilizing medium comprising the leader ion.

The selection criteria for the ingredients of the above-mentioned four different ITP stabilizing media will be described below.

## I. Anionic ITP Separation

### I.A Cathodic Stabilizing Medium

A cathodic ITP stabilizing medium for anionic ITP comprises a "terminator" compound, i.e., an ionizable compound wherein the anionic form of the compound has the slowest effective electrophoretic mobility towards the anode during electrophoresis, and further comprises at least one strong base.

In accordance with the use of the terms in the art (as described above), the "terminator" in anionic ITP applications is the anionic species having the lowest electrophoretic mobility within the electrophoresis chamber. Since the electrophoretic mobility is also dependent on the degree of ionization, it will be understood that a terminator compound may refer either to a ionic form of a compound (e.g., the salt of a weak acid), or the uncharged acid itself, which may become deprotonated, and thus ionized to a certain degree (dependent on the pH of the surrounding medium).

Accordingly, the terminator is a buffer acid according to the definitions presented hereinabove. Since the degree of ionization in ITP will be dependent on the counter ion present in the separation chamber (typically a buffer base as the counter ion of the fastest moving ions in the leader medium), the buffer acid should preferably be selected in relation to the pKa value of the buffer base in the leader stabilizing medium. Thus, the pKa of the buffer acid in the cathodic ITP stabilizing medium should preferably be higher than the pKa of the buffer base in the leader medium. In particularly preferred embodiments, the pKa difference between the buffer acid and the buffer base in the leader should be between about 0.5 and about 3.5, more preferably between 1 and 3, and most preferably between 1.5 and 2.5, of course with the pKa of the buffer acid higher than the pKa of the buffer base.

In order to avoid large and unnecessary pH shifts, the concentration of the terminator compound should be higher than the concentration of the at least one strong base. Concentration ratios will usually depend on the specific separation problem, but will usually be between 1.5:1 and 5:1 (terminator:strong base), but may also be between 2:1 and 3:1, although other ratios may also be possible.

Suitable absolute concentrations of the terminator compound are usually between about 10 mM at the lower end and about 500 mM at the higher end, although in practice, the solubility of a given terminator compound may determine the upper concentration limit. In some preferred embodiments, the absolute concentration of the terminator compound is often between about 30 and 300, and more preferably between about 50 and 200 mM.

Based on the above-mentioned concentration ratios between terminator and the strong acid, possible concentrations of the strong base are therefore somewhat lower than described for the terminator. Suitable concentrations of the strong base may thus range from less than 10 mM to about 400 mM, while more preferred concentrations are certainly in the range of 50 to 200 mM. A strong base in the context of anionic ITP applications should be understood to mean bases whose pKa value is at least two, and preferably 3 or even 4 pK units above the pKa of the buffer acid. Very often, strong bases such as alkali or alkali earth metal hydroxides (KOH, NaOH, $Ca(OH)_2$, $Mg(OH)_2$, etc.) are suitable as the strong base, although other (weaker) bases may also be employed provided they are capable of substantially deprotonating the buffer acid (terminator) leading to the desired high conductivity.

Moreover, while more than one strong base could in principle be used, the desire to keep the number of different species in the separation chamber as low as possible will normally direct those of skill in the art to employ only a single strong base.

The cathodic stabilizing media for anionic ITP of the present invention should be introduced into the electrophoresis apparatus near the cathode, adjacent to a terminator solution having a lower terminator concentration, and with the sample and optionally spacer media introduced adjacent to the diluted terminator towards the anode, but before the leader medium and leader stabilizing medium.

### I.B Anodic Stabilizing Medium

The anodic stabilizing medium for anionic ITP applications is introduced into the electrophoresis apparatus in proximity to the anode. Thus, this "leader" stabilizing medium for anionic ITP comprises at least one strong acid and at least one compound that can be protonated (ionized), with the proviso that the concentration of the compound that can be protonated is higher than the concentration of the strong acid. Preferably, the compound that can be protonated is a buffer base in accordance with the definition used hereinabove.

Typically, the conjugate base of the strong acid is chosen to be identical to the leader ion having the highest electrophoretic mobility in anionic ITP. A strong acid in the context of anionic ITP applications should be understood to include acids whose pKa value is at least two, and preferably 3 or even 4 pK units below the pKa of the buffer base used in the stabilizing medium in order to be able to substantially protonate the buffer base leading to the desired high conductivity in the stabilizing medium. Frequently, those of skill in the art will prefer strong acids such as hydrochloric acid or hydrobromic acid, or sulfuric acid as the strong acid, because the resulting chloride / bromide / sulfate ions have a very high electrophoretic mobility and thereby represent a suitable candidate for the leader ion in anionic ITP.

In preferred embodiments, the concentration of the at least one strong acid and of the buffer base in the anodic stabilizing medium will be increased over the concentrations of the same compounds in the leader medium. Typically, the concentration of the strong acids and of the buffer base in the stabilizing medium is, independently from each other, increased by a factor of between 1:5 and 50, although increases by a factor of 2 to 20, or even 5 to 15 will be more frequent. Very good results will often be achieved where the concentration in the anodic stabilizing medium is increased about 10-fold for both the strong acid and the buffer base, although the exact concentrations will depend again on the circumstances and the nature of the separation problem.

Absolute concentrations for the concentrations of the strong base and the buffer base in the anodic stabilizing medium for anionic ITP will be in the range of between about 10 mM at the lower end and about 500 mM at the higher end, although the solubility of a given compound will usually determine the upper concentration limit. In preferred embodiments, the absolute concentration of the strong acid and the buffer base (while maintaining the requirement that the concentration of the strong acid should be below the concentration of the buffer base) is often between about 30 and 300, and more preferably between about 50 and 200 mM for both compounds.

The actual concentration of ionized buffer acids in the cathodic and buffer bases in the anodic ITP stabilizing media, respectively, will primarily be determined by the concentration of the strong base or strong acid that is present in the respective stabilizing medium.

For cationic ITP separations, the general criteria for the stabilizing media are identical except that the terms anode and cathode, as well as the terms acids and bases have to be exchanged. Moreover, any reference to a higher pKa value compared to another pKa value needs to be replaced by reference to a lower pKa value, as outlined in detail below.

II. <u>Cationic ITP Separation</u>

*II.A Anodic Stabilizing Medium*

An anodic ITP stabilizing medium for cationic ITP comprises a "terminator" compound, i.e., an ionizable compound wherein the cationic form of the compound has the slowest effective electrophoretic mobility towards the cathode during electrophoresis, and further comprises at least one strong acid.

In accordance with the use of the terms in the art (as described above), the "terminator" in cationic ITP applications is the cationic species having the lowest electrophoretic mobility within the electrophoresis chamber. Since the electrophoretic mobility is also dependent on the degree of ionization, it will be understood that a terminator compound may refer either to a ionic form of a compound (e.g., the conjugate acid of a weak base), or the uncharged base itself, which may become protonated, and thus ionized to a certain degree dependent on the pH of the surrounding medium.

Accordingly, the terminator is a buffer base according to the definitions presented hereinabove. Since the degree of ionization in ITP will be dependent on the counter ion present in the separation chamber (typically a buffer base as the counter ion of the fastest moving ions in the leader medium), the buffer base should preferably be selected in relation to the pKa value of the buffer acid in the leader stabilizing medium. Thus, the pKa of the buffer base in the anodic ITP stabilizing medium should preferably be lower than the pKa of the buffer acid in the leader medium. In particularly preferred embodiments, the pKa difference between the buffer base and the buffer acid in the leader should be between about 0.5 and about 3.5, more preferably between 1 and 3, and most preferably between 1.5 and 2.5, of course with the pKa of the buffer base lower than the pKa of the buffer acid.

In order to avoid large and unnecessary pH shifts, the concentration of the terminator compound should be higher than the concentration of the at least one strong acid. Concentration ratios will usually depend on the specific separation problem, but will usually be between 1.5:1 and 5:1 (terminator/strong acid), but may also be between 2:1 and 3:1, although other ratios will also be possible.

Suitable absolute concentrations of the terminator compound are usually between about 10 mM at the lower end and about 500 mM at the higher end, although in practice, the solubility of a given terminator compound may determine the upper concentration limit. In some preferred embodiments, the absolute concentration of the terminator compound is often between about 30 and 300, and more preferably between about 50 and 200 mM.

Based on the above-mentioned concentration ratios between terminator and the strong acid, possible concentrations of the strong acid are therefore somewhat lower than described for the terminator. Suitable concentrations of the strong acid may therefore range from less than 10 mM to about 400 mM, while more preferred concentrations are certainly in the range of 50 to 200 mM. A strong acid in the context of cationic ITP applications should be understood to mean acids whose pKa value is at least two, and preferably 3 or even 4 pK units below the pKa of the buffer base. Very often, strong acids such as hydrochloric acid, hydrobromic acid, or sulfuric acid are preferred, because they are capable of substantially protonating the buffer base in the cathodic stabilizing medium leading to the desired high conductivity.

Moreover, while more than one strong acid could in principle be used, the desire to keep the number of different species in the separation chamber as low as possible will normally lead those of skill in the art to employ only a single strong acid.

The anodic stabilizing media for cationic ITP of the present invention should be introduced into the electrophoresis apparatus near the anode, adjacent to a terminator solution having a lower terminator concentration, and with the sample and optionally spacer media introduced adjacent to the diluted terminator towards the cathode, but before the leader medium and leader stabilizing medium.

*II.B Cathodic Stabilizing Medium*

The cathodic stabilizing medium for cationic ITP applications is introduced into the electrophoresis apparatus in proximity to the cathode. Thus, this "leader" stabilizing medium for cationic ITP comprises at least one strong base and at least one compound that can be deprotonated (ionized), with the proviso that the concentration of the compound that can be deprotonated is higher than the concentration of the strong base. Preferably, the compound that can be deprotonated is a buffer acid in accordance with the definition used hereinabove.

Typically, the conjugate acid of the strong base is chosen to be identical to the leader ion having the highest electrophoretic mobility in cationic ITP. A strong base in the context of cationic ITP applications should be understood to include bases whose pKa value is at least two, and preferably 3 or even 4 pK units above the pKa of the buffer acid used in the stabilizing medium in order to be able to substantially deprotonate the buffer acid leading to the desired high conductivity in the stabilizing medium. Frequently, those of skill in the art will prefer strong bases such as alkali or alkali earth metal hydroxides ($KOH$, $NaOH$, $Ca(OH)_2$, $Mg(OH)_2$, etc.), because the resulting metal ions have a very high electrophoretic mobility and thereby represent suitable candidate for the leader ion in cationic ITP.

In certain embodiments, the concentration of the at least one strong base and of the buffer acid in the cathodic stabilizing medium for cationic ITP will be increased over the concentrations of the same compounds in the leader medium. Typically, the concentration of the strong bases and of the buffer acids in the stabilizing medium is, independently from each other, increased by a factor of between 1:5 and 50, although increases by a factor of 2 to 20, or even 5 to 15 will be more frequent. Favorable results will often be achieved where the concentration in the cathodic stabilizing medium is increased about 10-fold for both the strong base and the buffer acid, although the exact concentrations will depend again on the circumstances and the nature of the separation problem.

Absolute concentrations for the concentrations of the strong base and the buffer acid in the cathodic stabilizing medium for cationic ITP will be in the range of between about 10 mM at the lower end and about 500 mM at the higher end, although the solubility of a given compound will usually determine the upper concentration limit. In preferred embodiments, the absolute concentration of the strong base and the buffer acid (while maintaining the requirement that the concentration of the strong base should be below the concentration of the buffer acid) is often between about 30 and 300, and more preferably between about 50 and 200 mM for both compounds.

The actual concentration of ionized buffer acids and buffer bases in the cathodic and anodic stabilizing media, respectively, will primarily be determined by the concentration of the strong base or strong acid that is present in the respective stabilizing medium.

III. Kits

It will be apparent to those of skill in the art that the various electrophoretic separation and stabilizing media described herein may be provided as a kit.

Accordingly, a kit comprises at least one of the electrophoretic media described herein. The kit may comprise one or several of the electrophoretic media as an aqueous solution that is ready to be used (i.e. all components are present in the desired concentration for the electrophoretic separation problem), or it may comprise one or several of the media in the form of a concentrated solution that is to be diluted with a pre-determined amount of water prior to their use. Alternatively, the kit may comprise one or several media in dry form comprising the various ingredients of a medium in several, but preferably in one container which is then reconstituted with a pre-determined amount of water prior to its use in an electrophoretic separation process.

Preferably, each medium (cathodic stabilizing medium, anodic stabilizing medium, separation medium), will be present in a separate container, although it will be apparent to those of skill in the art that other combinations and packaging may be possible and useful in certain situations. For example, it has been mentioned above that the separation media for IEF applications may consist of a distinct number of "sub-fractions" having different concentrations of the ingredients (and thereby a different pH) in order to create a pre-formed pH gradient within the electrophoresis apparatus. The number of sub-fractions employed in IEF applications will depend on the separation problem, the desired pH span achieved with the separation medium and the electrophoresis apparatus used for the separation. In free-flow electrophoresis applications, the apparatus will typically comprise several media inlets E (e.g., N=7, 8 or 9 inlets), so that the sub-media creating the separation space within the apparatus may be introduced into at least one to a maximum of N-2 inlets (at least one inlet on each side is usually reserved for the stabilizing medium).

The kits described herein comprise at least one separation medium. In some instances, the separation medium in the kit will form an essentially constant pH and is therefore particularly useful for ZE applications. In other instances, the separation medium (or several separation media forming the sub-fractions of the separation medium) will form a pH gradient during electrophoretic separation and will therefore be particularly useful for IEF applications. It is contemplated that all of the separation media described herein, be they preferred or not, may be included in the kits.

The kit may comprise at least one stabilizing medium as described herein. The stabilizing medium may be a cathodic stabilizing medium or an anodic stabilizing medium. Since anodic and cathodic stabilization will both be required for successful FFE, the kit will preferably comprise one cathodic and one anodic stabilizing medium as defined herein. In some instances the kit will comprise cathodic and/or anodic stabilizing media that are useful for ZE applications, whereas in other preferred embodiments, the kit comprises cathodic and/or anodic stabilizing media useful for IEF applications. In other instances, the kit will contain cathodic and/or anodic stabilizing media adapted for use in ITP applications. Typically, the stabilizing media included in the kits will have an electrical conductivity that is higher than that of the separation medium, and will usually be at least about 500 $\mu$S/cm, and preferably even more than $1000\mu$S/cm, or even more than 2000 $\mu$S/cm, although it will be apparent to those of skill in the art that the absolute conductivity required will depend on the conductivity of the separation medium which may be very low for certain applications.

The kit may include all media required for a given electrophoretic separation, i.e., a cathodic and an anodic stabilizing medium, as well as a separation medium (which may itself consist of several sub-fractions as explained above). The separation media and stabilizing media will of course be selected so as to be useful for the intended operation mode, be it ZE, IEF or ITP. For ITP applications, the kit will at least comprise the cathodic and anodic stabilizing medium, and may optionally contain the terminator and leader medium, as well as one or more spacer solutions as described herein.

It will be understood that the electrical conductivity of the stabilizing media in the kits comprising all media required for electrophoretic separations will be higher than the conductivity of the separation medium. As explained herein, the increased conductivity of the anodic stabilizing medium (ASM) will be obtained by including a strong acid in the ASM, preferably wherein the strong acid is selected from hydrochloric acid, sulfuric acid, phosphoric acid, and other acids having a pKa that is at least 3 pKa units below the pKa of the buffer base in said medium. The increased conductivity in the cathodic stabilizing medium (CSM) will be obtained by adding a strong base, preferably wherein the strong base is selected from an alkali metal hydroxide such as NaOH or KOH, an alkaline earth metal hydroxide such as $Mg(OH)_2$ or $Ca(OH)_2$, and other bases having a pKa that is at least 3 pKa units above the pKa of the buffer acid in said medium.

It will be understood that all of the preferred cathodic and/or anodic stabilizing media, as well as the preferred separation media described herein may be included in the kits.

Optionally, the kits may further comprise instructions for the use of the media in electrophoretic applications.

*III.1. Uses and Methods of the Electrophoresis Media*

The media and kits described herein are used for the separation of analytes by free-flow electrophoresis (FFE).

Among the analytes to be separated, fractionated, enriched or depleted are bioparticles or biopolymers, such as liposomes, nanotubes, cells, cell organelles, viruses, virus particles, bacteria, membranes, proteins such as lipoproteins, protein complexes, protein aggregates, DNA, DNA-protein complexes, chromatin, peptides, combinations thereof and the like. However, other non-biological surface charge-modified polymers and particles such as melamin resins, latex paint particles, polystyrenes, polymethylmethacrylates, dextranes, cellulose derivatives, combinations thereof and the like may also be separated by free-flow electrophoresis (FFE) employing the separation and stabilizing media .

The media and kits described herein can be used for the separation of analytes by free-flow zone electrophoresis (FF-ZE). The media and kits described herein can be used for the separation of analytes by free-flow isoelectric focusing (FF-IEF). The media and kits described herein can also be used for the separation of analytes by free-flow isotachophoresis (FF-ITP).

The carrier-less separation of analytes by free-flow electrophoresis, can be performed either in continuous mode, in interval (or batch) mode, or in cyclic interval mode.

Continuous mode in the context of free-flow deflection electrophoresis should be understood to mean that the injection step as well as the separation step occurs continuously and simultaneously. In continuous mode FFE, the electrophoretic separation occurs while the medium and the analytes pass through the electrophoresis chamber where the different species are being separated according to their pI (IEF), net charge density (ZE) or electrophoretic mobility (ITP). Continuous mode allows continuous injection and recovery of the analytes without the need to carry out several independent "runs" (one run being understood as a sequence of sample injection, separation and subsequent collection and/or detection). It will be appreciated that continuous mode FFE includes separation techniques wherein the bulk flow rate is reduced (but not stopped) compared to the initial bulk flow rate while the analytes pass the separation space between the electrodes in order to increase the separation time. In the latter case, however, one can no longer speak of a true continuous mode because the reduction of the bulk flow rate will only make sense for a limited amount of a sample.

The interval mode as used in connection with free-flow deflection electrophoresis has also been described in the art. For example, a process of non-continuous (i.e. interval) deflection electrophoresis is shown in U.S. patent 6,328,868. In this patent, the sample and separation medium are both introduced into an electrophoresis chamber, and then separated using an electrophoresis mode such as zone electrophoresis, isotachophoresis, or isoelectric focusing, and are finally expelled from the chamber through fractionation outlets. Embodiments of the '868 patent describe the separation media and sample movement to be unidirectional, traveling from the inlet end towards the outlet end of the chamber. This direction, unlike in traditional capillary electrophoresis, is shared by the orientation of the elongated electrodes. In the static interval mode described, e.g., in the '868 invention, acceleration of the sample between the electrodes caused by a pump or some other fluidic displacement element only takes place when the electrical field is off or at least when the voltage is ineffective for electrophoretic migration, i.e., when no part of the sample is being subjected to an electric field.

In other words, the interval process is characterized by a loading phase where the sample and media are introduced into the separation chamber of the electrophoresis apparatus, followed by a separation process where the bulk flow of the medium including the sample is halted while applying an electrical field to achieve separation. After separation/fractionation of the sample, the electrical field is turned off or reduced to be ineffective and the bulk flow is again turned on so that the fractionated sample is driven towards the outlet end and subsequently collected/detected in a suitable container, e.g., in a microtiter plate.

The so-called cyclic or cyclic interval mode in the context of free-flow electrophoresis as used herein has been described in intermediate documents WO 2008/053047 and WO 2008/025806. In sum, the mode is characterized by at least one, and possible multiple reversals of the bulk flow direction while the sample is being held in the electrophoretic field between the elongated electrodes. In contrast to static interval mode, the sample is constantly in motion thereby allowing higher field strength and thus better (or faster) separation. Additionally, by reversing the bulk flow of the sample between the elongated electrodes, the residence time of the analytes in the electrical field can be increased considerably, thereby offering increased separation time and/or higher separation efficiency and better resolution. The reversal of the bulk flow into either direction parallel to the elongated electrodes (termed a cycle) can be repeated for as often as needed in the specific situation, although practical reasons and the desire to obtain a separation in a short time will typically limit the number of cycles carried out in this mode. After having achieved the desired fractionation of the analytes in the ample, the electrical field is usually turned off and the fractions are expelled at the outlet end of the apparatus and collected/detected in a suitable container, e.g., in a microtiter plate.

IV. Specific Applications

The present invention relate to electrophoresis methods that are broadly applicable for the successful separation or fractionation of a large variety of different analytes. The electrophoresis methods provided herein yield excellent separation quality and reproducibility, thereby offering those of skill in the art additional techniques not hitherto available using the equipment and technology available in the art.

These electrophoresis methods are carried out in the context of free-flow electrophoresis. Typically, free-flow electrophoresis generally refers to a technique wherein the flow direction of the separation medium / separation media and, optionally, further media such as stabilizing and counter flow media is / is basically parallel to the elongated electrodes, i.e. essentially perpendicular to the streamlines of the electrical field generated by the electrodes.

As will be explained in more detail below, a sample to be separated according to a free-flow electrophoretic method of the present invention may be introduced into a separation chamber together with any separation medium as defined herein which is introduced into said chamber through one of the media inlets. Additionally, said free-flow electrophoretic method offers the advantage that a sample may be introduced through a separate, dedicated sample inlet(s) into an FFE apparatus suitable to perform said method.

Accordingly, electrophoresis methods of the present invention are provided which comprise (a) introducing into an electrophoresis chamber at least one anodic stabilizing medium, at least one cathodic stabilizing medium and at least one separation medium; (b) introducing into the at least one separation medium one or more analytes; (c) subjecting the media and analytes to an electrophoretic field; and, optionally, (d) eluting all or a portion of the analytes from the electrophoresis chamber, wherein the at least one separation medium is a separation medium according to the present invention.

Both the anodic and the cathodic stabilizing medium are stabilizing media as defined herein.

The sample to be separated is either added to the separation medium that is present in the separation space between the anode(s) and the cathode(s) of an FFE apparatus, or is preferably introduced separately into the separation space of an FFE apparatus, typically through dedicated sample inlets (S) provided by the FFE apparatus. The separation media and stabilizing media are typically introduced into a separation space or a separation chamber through media inlets (E), as illustrated in, e.g., FIG. 1. The sample inlets may be positioned independently from the media inlets of the FFE apparatus and are often located downstream from the media inlets (see again, e.g., FIG. 1). In addition, they may be positioned at any desired position between the anode and the cathode of the FFE apparatus. Typically, the separation chamber, at or near (i.e., in proximity to) the first end, contains at least one sample inlet for the injection of the sample and a multiplicity of medium inlets for injection of at least one separation medium, and optionally the stabilizing media. In proximity to the second end is typically located a plurality of sample collection outlets and, optionally, one or more counterflow media inlets, i.e. any method described herein can also comprise the use of counter flow media as for example explained in further detail in WO 2006/119001. Both the collection outlets and the counterflow media inlets (if more than one are present) are typically arranged along a line perpendicular to the bulk flow direction.

After introducing the analytes into a suitable electrophoresis chamber either via co-introducing them with a separation medium, via a sample inlet or any other possible method, the various analytes in the sample within the separation medium are then separated by applying an electrical field while being fluidically driven towards the outlet end of the FFE apparatus.

Suitable FFE devices are known in the art and are, for example, marketed under the name BD™ Free-flow Electrophoresis System (BD GmbH, Germany). In addition, suitable FFE devices that can be used with the separation and stabilizing media of the present invention have been described in a number of patent applications, including US Pat. 5,275,706, US Pat. 6,328,868, pending published US applications US 2004/050697, US 2004/050698, US 2004/045826, and US 2004/026251, and intermediate documents WO 2008/053047 and WO 2008/025806.

The electrophoresis methods may comprise the steps of providing an electrophoretic separation medium having a generally flat pH profile and a conductivity of generally less than 1000 μS/cm, introducing a sample comprising analytes, at least a portion of which have unique and differentiable net surface charge, into the separation medium, and separating or fractionating the analytes such as liposomes, virus particles, etc. by free-flow zone electrophoresis.

The analytes to be separated in the electrophoresis method are selected from the group consisting of bioparticles or biopolymers, including but not limited to liposomes, nanotubes, cells, cell organelles, viruses, virus particles, bacteria, membranes, proteins, protein aggregates, protein complexes, DNA, DNA-protein complexes, chromatin, peptides, any combination thereof, and the like, and non-biological, surface charge-modified polymers and particles, including, but not limited to melamin resins, latex paint particles, polystyrenes, polymethylmethacrylates, dextranes, cellulose derivatives, any combination thereof, and the like.

In preferred embodiments of this aspect of the invention, the electrical conductivity is less than 600 μS/cm, although very often, the conductivity will be even lower, such as below about 500, 400, 300, 200, 100 or even 50 μS/cm.

In certain embodiments, the analytes to be separated by the electrophoresis methods according to the present invention are selected from the group of biopolymers and bioparticles, and preferably from particles having a relatively large and smooth surface and having a relatively low net surface charge. In a particularly preferred embodiment, the electrophoresis method described herein will be used for the separation of liposomes.

Liposomes are spherical vesicles with a membrane typically composed of a phospholipid and cholesterol bilayer. They can be composed of naturally-derived phospholipids with mixed lipid chains (such as egg phosphatidylethanolamine), or of pure surfactant components such as DOPE (dioleolylphosphatidylethanolamine). Liposomes may be unilamellar or multilamellar, i.e., composed of many layers. They often (but not necessarily) contain a core of an aqueous solution. Liposomes have been of great interest because they have many interesting and wide-ranging potential applications. For example, liposomes are commonly used as drug delivery agents, or can be used for transformation or transfection of DNA.

Since liposomes are typically made synthetically from a number of different components, the obtained liposome populations are not necessarily uniform in their characteristics and individual composition. Accordingly, there is a need in the art to control/analyze liposome production conditions, and under certain conditions even the desire for preparative fractionation of liposome populations having different properties. The electrophoresis method provided herein has been found to be particularly suitable for the preparative or analytic fractionation of non-homogenous liposome populations.

In preferred embodiments of the electrophoresis method, the separation medium comprises one buffer acid and one buffer base, with the proviso that the pKa of the buffer acid is higher than the pKa of the buffer base. The buffer acids and bases are preferably selected so that the pKa difference between the buffer acid and the buffer base in the separation medium (ΔpKa) is between 0.8 and 2.5, and more preferably between 1.0 and 2.3. Particularly good results have been achieved in certain embodiments where the ΔpKa is between 1.2 and 1.8.

For certain analytes, in particular sensitive biopolymers and bioparticles, the buffer acid and the buffer base are selected so that the pH of the separation medium is between about 5 and 9, and often between about 6 and 8. Excellent results have been achieved with separation media having a nearly neutral pH, i.e. around pH 7, although the electrophoresis method can principally be carried out at any suitable pH between about pH 2 to 12 as described herein above. It will be appreciated that the selection of the respective buffer acids and buffer bases will generally depend on the separation problem and the nature and stability requirements of the analyte of interest. For liposome fractionations, the pH of the separation medium will normally range from about pH 5 to about pH 9.

The density of the separation medium may be adapted to the density of the sample by the addition of a non-charged additive. Possible additives have already been mentioned herein. A particularly preferred additive is sucrose, although other additives may equally be employed.

Because it is typically desired to keep the liposomes intact, the pH of the separation media should be adapted so as to ensure the structural integrity of the liposomes during the separation procedure (e.g., by adjusting to a pH or pH-range near pH = 7). For example, good liposome separation results were achieved by using a separation medium containing 50 mM EPPS, 50 mM BISTRIS and 250 mM sucrose wherein the addition of sucrose adjusts the density of the separation medium. The separation can be performed using, e.g., cyclic interval FF-zone electrophoresis.

The separation of viruses according to the present invention is another nonlimiting example for separating bioparticles with the media provided herein. Good separation results were for example achieved using a method according to the present invention to separate viruses and virus particles under native conditions with interval zone electrophoresis. In this example, the separation medium employed contained 50 mM morpholinoethanol and 50 mM TAPS. Additionally, 200 mM sucrose, as well as small amounts of HPMC and a surfactant (TWEEN 80®) were added to optimize the separation conditions.

The electrophoresis method further comprises the step of providing an anodic and a cathodic stabilizing medium as described herein. The anodic and cathodic stabilizing media will generally be introduced in the vicinity of the anode and cathode of the electrophoresis apparatus, respectively. The electrophoresis method is carried out in a matrix-free manner, i.e. in a free solution (FFE-ZE).

When carrying out the electrophoresis method, the bulk flow of the sample and media will preferably be generally parallel to the direction of the anode and the cathode for a certain period of time.

The bulk flow of the sample may be kept essentially constant during the electrophoresis method, particularly during the separation phase. It will be understood that the sample is typically, but not necessarily introduced into the separation space at a lower flow rate, while the elution step of the fractionated sample can also be carried out at a higher bulk flow rate.

In certain other embodiments, it is preferably to stop or slow down the bulk flow of the sample and the media while applying an electric field, so as to allow a sufficient separation time between the two electrodes. Other preferred embodiments include the further step of turning on the bulk flow of the sample and the medium to elute and optionally also collect the differentiated fractions. This operating mode is often referred to as interval mode or static interval mode, as explained in further detail above.

In yet other preferred embodiments, the electrophoresis method is carried out so that the direction of the bulk flow of the sample and media is reversed at least once while applying an electrical field. Preferably, the reversal of the direction of the bulk flow is repeated for as along as necessary to achieve acceptable separation/fractionation of the analyte. The latter is often referred to as cyclic interval mode as explained in more detail above (see also Figure 10).

The bulk flow rate is generally adapted to the specific situation and apparatus, although it will be appreciated that the bulk flow rate of the sample and of the media is typically lower during the separation phase compared to the loading and/or elution phase, particularly for static interval and cyclic interval FFE applications.

The electrophoresis method provided herein preferably includes the step of eluting a portion of the analytes of interest, such as liposomes into differentiated fractions.

## Examples

### EXAMPLE 1: Cationic separation performed in FF-ZE mode

The ability of the separation medium and stabilizing media to separate a total cell extract from HeLa-cells was tested on a BD™ Free-flow Electrophoresis System provided with 7 inlets (E1-E7) and sample inlets (S1-S4). The anodic stabilizing medium was introduced into inlet E1. The cathodic stabilizing medium was introduced into inlet E7 and the sample was introduced in the apparatus via anodic sample inlet S1. The total time of electrophoresis separation was 10 minutes. The sample and the media were introduced at a flow rate of 2 ml/h and 250 ml/h, respectively. The voltage applied was 850 V and the current was 42 mA. The run was performed in cyclic interval FF-ZE mode at 90 ml/h and the fractionated sample was eluted at 300 ml/h.

The separation protocol used was the following:

Anodic stabilizing medium(inlet 1): 2 M thiourea + 7 M urea + 0.1 % HPMC + 100 mM $H_2SO_{4+}$30 mM glygly + 250 mM 2-amino-butyric acid;

Separation medium (inlets 2-6): 2 M thiourea + 7 M urea + 0.1 % HPMC + 50 mM acetic acid + 50 mM glycyl-glycine;

Cathodic stabilizing medium (inlet 7): 2 M thiourea + 7 M urea + 0.1 % HPMC + 150 mM NaOH + 30 mM Tris + 30 mM HAc + 250 mM pyridinethansulfonic acid (PES)-

The pH of each of the FFE fractions was determined using a pH electrode and is presented by the graph in Fig. 2A. Colored pI-markers were separated to evaluate the separation performance of the system. The absorbance of each fraction at λ=420nm, 515nm and 595nm which represent the absorbance of the respective pI-markers are also reported in Fig. 2A. After separation the sample was collected in a 96 well-plate and analyzed. The results are reported in Fig. 2B which shows the fractional separation of the present sample in dependence of the pH of the separation medium and the stabilizing media. Every second FFE fraction was analyzed using SDS-PAGE.

## EXAMPLE 2: Simultaneous cationic and anionic separation in FF-ZE mode

The ability of the separation medium and stabilizing media to separate a total cell extract from HeLa-cells was tested on a BD™ Free-flow Electrophoresis System provided with 7 inlets (E1-E7) and sample inlets (S1-S4). The anodic stabilizing medium was introduced into inlet E1. The cathodic stabilizing medium was introduced into inlet E7 and the sample was introduced via sample inlet S2. The total time of electrophoresis was 6 minutes. The voltage applied was 850 V and the current was 42 mA. The sample and the media were introduced at a flow rate of 2 ml/h and 250 ml/h, respectively. The run was performed in cyclic interval FF-ZE mode at 90 ml/h and the fractionated sample was eluted at 300 ml/h.

The separation protocol used was:

Anodic stabilizing medium (inlet 1): 2 M thiourea + 7 M urea + 0.1 % HPMC + 100 mM $H_2SO_4$ + 30 mM creatinine + 250 mM EACA;

Separation medium (inlets 2-6): 2 M thiourea + 7 M urea + 0.1 % HPMC + 50 mM MES + 50 mM creatinine;

Cathodic stabilizing medium (inlet 7): 2 M thiourea + 7 M urea + 0.1 % HPMC + 150 mM NaOH + 30 mM Tris + 30 mM MES + 250 mM MOPSO.

The pH of each of the FFE fractions was determined using a pH electrode and is presented by the graph in Fig. 3A. Colored pI-markers were separated to evaluate the separation performance of the system. The absorbance of each fraction at $\lambda$=420nm, 515nm and 595nm which represent the absorbance of the respective pI-markers are also reported in Fig. 3A. After separation the sample was collected in a 96 well-plate and analyzed. The results are reported in Fig. 3B which shows the fractional separation of the present sample in dependence of the pH of the separation medium and the stabilizing media. Every second FFE fraction was analyzed using SDS-PAGE.

## EXAMPLE 3: Anionic separation performed in FF-ZE mode

The ability of the separation medium and stabilizing media to separate a total cell extract from HeLa-cells was tested on a BD™ Free-flow Electrophoresis System provided with 7 inlets (E1-E7) and sample inlets (S1-S4). The anodic stabilizing medium was introduced into inlet E1. The cathodic stabilizing medium was introduced into inlet E7 and the sample was introduced via sample inlet S3. The total time of electrophoresis was 7 minutes. The voltage applied was 850 V and the current was 36 mA. The sample and the media were introduced at a flow rate of 2 ml/h and 250 ml/h, respectively. The run was performed in cyclic interval FF-ZE mode at 90 ml/h and the fractionated sample was eluted at 300 ml/h.

The separation protocol used was the following:

Anodic stabilizing medium (inlet 1): 2 M thiourea + 7 M urea + 0.1 % HPMC + 100 mM $H_2SO_4$ + 30 mM 2-Pyridine-propanol + 250 mM 2-pyridine-ethanol;

Separation medium (inlets 2-6): 2 M thiourea + 7 M urea + 0.1 % HPMC + 50 mM MOPS + 50 mM 2-Pyridin-propanol;

Cathodic stabilizing medium (inlet 7): 2 M thiourea + 7 M urea + 0.1 % HPMC + 150 mM NaOH + 30 mM TRIS + 30 mM MOPS + 250 mM EPPS

The pH of each of the FFE fractions was determined using a pH electrode and is presented by the graph in Fig. 4A. Colored pI-markers were separated to evaluate the separation performance of the system. The absorbance of each fraction at $\lambda$=420nm, 515nm and 595nm which represent the absorbance of the respective pI-markers are also reported in Fig. 4A. After separation the sample was collected in a 96 well-plate and analyzed. The results are reported in Fig. 4B which shows the fractional separation of the present sample in dependence of the pH of the separation medium and the stabilizing media. Every second FFE fraction was analyzed using SDS-PAGE.

## EXAMPLE 4: FF-ZE mode

The separation medium and stabilizing media were tested on a BD™ Free-flow Electrophoresis device using a quality control sample. The apparatus was set up comprising seven media inlets (E1-E7) and sample inlets (S1-S4). The anodic stabilizing medium was introduced into inlet E1. The cathodic stabilizing medium was introduced into inlet E7 and the sample was introduced via sample inlet S4. The total electrophoresis time was 10 minutes. The voltage applied was 600V and the current was 80 mA. The sample and the media were introduced at a flow rate of 2 ml/h and 250 ml/h, respectively. The run was performed in cyclic interval FF-ZE mode at 90 ml/h and the fractionated sample was eluted at 300 ml/h.

The separation protocol used the following media:

Anodic stabilizing medium: 250 mM sucrose + 50 mM sulfuric acid + 150 mM BISTRIS + 50 mM MES; pH = 6.25, conductivity 4510 $\mu$S/cm;

Separation medium: 250 mM sucrose + 50 mM BISTRIS + 50 mM EPPS
pH =7.23, conductivity = 264 μS/cm;;

Cathodic stabilizing medium: 250 mM sucrose + 100 mM NaOH + 150 mM EPPS + 50 mM TRIS
pH = 8.11, conductivity = 4590 μS/cm;.

The pH of each of the FFE fractions was determined using a pH electrode and is presented by the graph in Fig. 5. Colored pI-markers were separated to evaluate the separation performance of the system. The absorbance of each fraction at λ=420nm, 515nm and 595nm which represent the absorbance of the respective pI-markers are reported in Fig. 5.

**EXAMPLE 5: FF-IEF mode**

The separation medium and stabilizing media were tested on a BD™ Free-flow Electrophoresis System in FF-IEF mode using a quality control solution. The apparatus was set up comprising seven media inlets (E1-E7) and sample inlets (S1-S4). The anodic stabilizing medium was introduced into inlet E1. The cathodic stabilizing medium was introduced into inlet E7 and the sample was introduced via sample inlet S1. The total time of electrophoresis was approximately 50 minutes. The voltage applied was 1200V and the current was 30 mA The sample and the media were introduced at a flow rate of 2 ml/h and 250 ml/h, respectively. The run was performed in cyclic interval FF-IEF mode at 90 ml/h and the fractionated sample was eluted at 300 ml/h.
The protocol used for the present run was:

Acidic stabilizing medium: 25 % glycerol + 0.2 % HPMC + 100 mM H2SO4 + 50 mM HAc + 200 mM EACA + 100 mM 4-pyridin-propanol
pH = 4.89; conductivity: 5840 μS/cm;;

Separation medium: 25 % glycerol + 0.2 % HPMC + 1% Servalyt 6-8
pH = 7.48; conductivity = 85 μS/cm;;

Cathodic stabilizing medium: 25 % glycerol + 0.2 % HPMC + 150 mM NaOH + 30 mM ethanolamine + 250 mM CAPSO
pH = 10.0; conductivity = 4160 μS/cm;.

The pH of each of the FFE fractions was determined using a pH electrode and is presented by the graph in Fig. 6. Colored pI-markers were separated to evaluate the separation performance of the system. The absorbance of each fraction at λ=420nm, 515nm and 595nm which represent the absorbance of the respective pI-markers are reported in Fig. 6.

**EXAMPLE 6: FF-IEF mode**

The separation medium and stabilizing media were tested on BD™ Free-flow Electrophoresis System in FF-IEF mode using a quality control solution. The apparatus was set up comprising seven media inlets (E1-E7) and sample inlets (S1-S4). The anodic stabilizing medium was introduced into inlet E1. The cathodic stabilizing medium was introduced into inlet E7 and the sample was introduced via sample inlet S2. The total time of electrophoresis was approximately 60 minutes. The voltage applied was 900V and the current was 35 mA. The sample and the media were introduced at a flow rate of 2 ml/h and 250 ml/h, respectively. The run was performed in cyclic interval FF-IEF mode at 90 ml/h and the fractionated sample was eluted at 300 ml/h.
The separation protocol used was:

Anodic stabilizing medium: 7M urea + 2M thiourea + 100 mM sulfuric acid
pH = 2.21, conductivity = 9550 μS/cm;;

Separation medium: 7M urea + 2M thiourea + 0.75 % Servalyte 2-4 + 0.75 % Servalyte 4-6;
pH = 4.89, conductivity = 198 μS/cm;:

Cathodic stabilizing medium: 7M urea + 2M thiourea + 150 mM NaOH + 50 mM TRIS + 200 mM HEPES + 50 mM MOPSO
pH = 8.18, conductivity = 4980 μS/cm;.

The pH of each of the FFE fractions was determined using a pH electrode and is presented by the graph in Fig. 7. Colored pI-markers were separated to evaluate the separation performance of the system. The absorbance of each fraction at λ=420nm, 515nm and 595nm which represent the absorbance of the respective pI-markers are reported in Fig. 7.

**EXAMPLE 7: Ultra flat pH gradient FFE mode**

The separation media and stabilizing media were tested on BD™ Free-flow Electrophoresis System using a quality control solution. The apparatus was set up comprising seven media inlets (E1-E7) and sample inlets (S1-S4). The anodic stabilizing medium was introduced into inlet E1. The cathodic stabilizing medium was introduced into inlet E7 and the sample was introduced via sample inlet S2. The total time of electrophoresis was approximately 60 minutes. The voltage applied was 900V and the current was 35 mA. The sample and the media were introduced at a flow rate of 2 ml/h and 250 ml/h, respectively. The run was performed in cyclic interval FF-IEF mode at 90 ml/h and the fractionated sample was eluted at 300 ml/h.
To create an ultra flat pH gradient five separation media with a slightly different pH were used. The separation media and the stabilizing media were introduced each in one inlet. with the following order:

Anodic stabilizing medium (inlet E1): 0.2 % HPMC + 50 mM sulfuric acid + 30 mM acetic acid + 20 mM MOPS + 30 mM pyridin-2-propanol + 50 mM 2-hydroxy-methyl-pyridin; pH = 4.77, conductivity = 6320 $\mu$S/cm;

Separation medium 1 (inlet E2): 0.2 % HPMC + 40 mM pyridin-2-propanol + 60 mM TAPS; pH = 6.85, conductivity = 120 $\mu$S/cm;

Separation medium 2 (inlet E3): 0.2 % HPMC + 50 mM pyridin-2-propanol + 50 mM TAPS; pH = 6.89, conductivity = 120 $\mu$S/cm;

Separation medium 3 (inlet E4): 0.2 % HPMC + 60 mM pyridin-2-propanol + 40 mM TAPS; pH = 7.00, conductivity = 116 $\mu$S/cm;

Separation medium 4 (inlet E5): 0.2 % HPMC + 70 mM pyridin-2-propanol + 30 mM TAPS; pH = 7.10, conductivity = 112 $\mu$S/cm;

Separation medium 5 (inlet E6): 0.2 % HPMC + 80 mM pyridin-2-propanol + 20 mM TAPS; pH = 7.24, conductivity = 104 $\mu$S/cm;

Cathodic stabilizing medium (inlet E7): 0.2 % HPMC + 100 mM NaOH + 40 mM imidazol + 30 mM TAPS + 150 mM AMPSO; pH = 9.0, conductivity = 5100 $\mu$S/cm.

The pH of each of the FFE fractions was determined using a pH electrode and is presented by the graph in Fig. 8. Colored pI-markers were separated to evaluate the separation performance of the system. The absorbance of each fraction at $\lambda$=420nm, 515nm and 595nm which represent the absorbance of the respective pI-markers are reported in Fig. 8.

## EXAMPLE 8: Anionic FF-ITP separation

The leader solution and stabilizing media were tested on BD™ Free-flow Electrophoresis System using a quality control solution. The apparatus was set up comprising seven media inlets (E1-E7) and sample inlets (S1-S4). The anodic stabilizing medium was introduced into inlet E1. The cathodic stabilizing medium was introduced into inlet E7 and the sample was introduced via inlet E6. The total time of electrophoresis was 10 minutes. The voltage applied was 1000V and the current was 35 mA. The run was performed in cyclic interval FF-ITP mode at 90 ml/h and the fractionated sample was eluted at 300 ml/h.

The separation protocol used was:

Cathodic stabilizing medium: 0.1 % HPMC + 250 mM sucrose + 150 mM HEPES + 100 mM NaOH; pH=7.7; conductivity=2210 $\mu$S/cm;;

Leader: 0.1 % HPMC + 250 mM sucrose + 10 mM HCl + 20 mM morpholinoethanol pH=7.7; conductivity=870 $\mu$S/cm;

Anodic stabilizing medium: 0.1 % HPMC + 250 mM sucrose + 100 mM HCl + 200 mM morpholinoethanol pH= 7.0; conductivity= 6700 $\mu$S/cm.

The pH of each of the FFE fractions was determined using a pH electrode and is presented by the graph in Fig. 9. Colored pI-markers were separated to evaluate the separation performance of the system. The absorbance of each fraction at $\lambda$=420nm, 515nm and 595nm which represent the absorbance of the respective pI-markers are reported in Fig. 9.

## EXAMPLE 9: Interval ZE separation performed under denaturing conditions

The ability of the separation medium and stabilizing media to separate a cytosolic extract of *Xenopus laevis* under denaturing conditions was evaluated on a BD™ Free-flow Electrophoresis device. The apparatus was set up comprising seven media inlets (E1-E7) and sample inlets (S1-S4). The anodic stabilizing medium was introduced into inlet E1. The cathodic stabilizing medium was introduced into inlet E7 and the sample was introduced via sample inlet S2. The total electrophoresis time was 10 minutes. The field strength applied was 90 V/cm. The sample and the media were introduced at a flow rate of 1.5 ml/h and 250 ml/h, respectively. The run was performed in cyclic interval FF-ZE mode at 100 ml/h and the fractionated sample was eluted at 300 ml/h.

The separation protocol used the following media:

Anodic stabilizing medium: 100 mM $H_2SO_4$ + 250 mM Morpholinoethanol + 50 mM MES + 2 M thiourea + 7 M urea + 0.1% HPMC
pH = 7.11, conductivity 6800 $\mu$S/cm;

Separation medium: 50 mM Morpholinoethanol + 50 mM TAPS + 2 M thiourea + 7 M urea + 0.1 % HPMC
pH = 8.1, conductivity = 278 $\mu$S/cm;

Cathodic stabilizing medium: 100 mM Na OH + 50 mM TRIS + 150 mM TAPS + 7 M urea + 0.1% HPMC
pH = 9.3, conductivity = 3120 $\mu$S/cm;.

The pH of each of the FFE fractions was determined using a pH electrode and is presented by the graph in Fig. 11A. Colored pI-markers were separated to evaluate the separation performance of the system. The absorbance of each fraction at $\lambda$=420nm, 515nm and 595nm which represent the absorbance of the respective pI-markers are also reported in Fig. 11A. After separation the sample was collected in a 96 well-plate and analyzed. The results are reported in Fig. 11B which shows the fractional separation of the present sample in dependence of the pH of the separation medium and the stabilizing media. Every second FFE fraction was analyzed using SDS-PAGE.

**Claims**

1. A method for separating analytes by free-flow electrophoresis, wherein the free flow electrophoresis is carried out with:

a binary separation medium containing one buffer acid and one buffer base, wherein the pKa value of the buffer acid is higher than the pH value of the separation medium, and wherein the pKa value of the buffer base is lower than the pH value of the separation medium; and **characterised by** a cathodic stabilizing medium comprising at least one buffer acid and at least one strong base;
an anodic stabilizing medium comprising at least one buffer base and at least one strong acid;
wherein the anodic and cathodic stabilizing medium have a higher conductivity than the separation medium, thereby preventing a cross-contamination between the separation area and the electrode compartment of the electrophoresis device
and
wherein the pH of the separation medium during electrophoresis is essentially constant, or wherein the pH difference between the anodic side and the cathodic side is between about 0.2 and 3 pH units during electrophoresis.

2. The method according to claim 1, wherein said separation medium is further **characterized by** at least one of the following:

the pKa value of the buffer acid is about 0.2 to about 2 units, preferably 0.4 to 0.9 units higher than the pH value of the separation medium;
the pKa value of the buffer base is about 0.2 to about 2 units, preferably 0.4 to 0.9 units lower than the pH value of the separation medium;
the difference between the minimum and the maximum pH value of the separation medium during electrophoresis is more than about 0.2 and less than 3 pH units, preferably wherein the pH difference is between 0.5 and 2 pH units, and most preferably between 0.5 and 1.5 pH units;
the difference of the pKa value of the buffer acid and the pKa value of the buffer base ($\Delta$pKa) is between about 0.5 and about 4.0, preferably between 0.8 and 2.5 and more preferably between 1.2 and 1.8, or wherein the difference of the pKa value of the buffer acid and the pKa value of the

buffer base ($\Delta$pKa) is between about 2.5 and 4 and preferably between about 2.5 and 3.3;
the buffer acid is selected from biologically acceptable buffer substances, preferably selected from the group consisting of HIBA, acetic acid, picolinic acid, PES, MES, ACES, MOPS, HEPES, EPPS, TAPS, AMPSO, CAPSO, $\alpha$-alanine, GABA, EACA, 4-hydroxypyridine, and 2-hydroxypyridine;
the buffer base is selected from biologically acceptable buffer substances; preferably selected from the group consisting of taurine, glycine, 2-aminobutyric acid, gylcylglycine, $\beta$-alanine, GABA, EACA, creatinine, pyridine-ethanol, pyridine-propanol, histidine, BISTRIS, morpholinoethanol, triethanolamine, TRIS, ammediol, benzylamine, dietheylaminoethanol, trialkylamines; and
the separation medium further comprises one or more than one additives, preferably wherein the additives are selected from other acids and/or bases, essential mono- and divalent anions and cations, viscosity enhancers, detergents, protein solubilizing agents, affinity ligands and reducing agents, more preferably wherein the additive is selected from the group consisting of thiourea, urea, hydrophilic polymeric derivatives, such as HPMC, PEGS, polyalcohols, such as glycerol, carbohydrates such as sucrose, chiral selectors such as dextrins, or cyclodextrins, lectins, mercaptoethanol, dithiothreitol (DTT), calcium ions, magnesium ions, zinc ions, chloride ions, sulfate ions, EDTA, EGTA, and azide.

3. The method according to claim 1 or claim 2, wherein said separation medium is further **characterized by** at least one of the following:

the concentration ratio between the buffer acid and the buffer base ranges from about 9:1 for the fraction closest to the anode to about 1:9 for the fraction closest to the cathode, preferably wherein the concentrations of the buffer acid and buffer base in the separation medium are about equal;
said separation medium consists of at least 2 to about 15 separate fractions that comprise varying concentrations of the buffer acid and buffer base to yield a pre-formed pH gradient, preferably wherein said separation medium comprises 4 to 10 separate fractions;
the concentration of the buffer acid and, independently from each other, of the buffer base in the separation medium is $\geq$ 5 mM, and preferably $\geq$ 10 mM, more preferably $\geq$ 20 mM, most preferably $\geq$ 50 mM; and
the conductivity of the separation medium is between about 30 and 1000 $\mu$S/cm, or between about 50 and 500 $\mu$S/cm, or between about 50 and 400 $\mu$S/cm, preferably between about 50 and 200 $\mu$S/cm, and more preferably between about 50 and 150 $\mu$S/cm.

4. The method according to any one of claims 1 to 3, wherein said cathodic stabilizing medium for electrophoresis is further **characterized by** at least one of the following:

the concentration of the at least one strong base in the medium is sufficient to achieve substantial deprotonation of all acids used in the stabilizing medium, preferably wherein the concentration ratio between the acid(s) and the base(s) in the stabilizing medium (ratio of acid(s) / base(s)) is at least >1, but <50, preferably wherein the concentration ratio is between about 2 and about 10; and
the pH of the cathodic stabilizing medium is higher than the pH of the separation medium; preferably wherein
the buffer acid is selected from acids or amphoteric compounds, provided the pKa of the base function in the amphoteric compound is at least 3 units below the pKa of the acid function, wherein the acid function has a pKa of between about 3 and 13, more preferably wherein said buffer acid is selected from the group consisting of HIBA, acetic acid, picolinic acid, PES, MES, ACES, MOPS, HEPES, EPPS, TAPS, AMPSO, CAPSO, $\alpha$-alanine, GABA, EACA, 4-hydroxypyridine, and 2-hydroxypyridine; and/or
the strong base is selected from an alkali metal hydroxide, earth alkali metal hydroxide, and other bases having a pKa that is at least 3 pK units above the pKa of the buffer acid in said medium.

5. The method according to claim 4, wherein said cathodic stabilizing medium for electrophoresis is further **characterized by** at least one of the following:

the cathodic stabilizing medium further comprises at least one buffer base, with the proviso that the concentration of all acids in said medium is greater than the concentration of all bases;
the pKa of each buffer acid in the stabilizing medium is equal or higher than the pKa of each buffer acid used in the separation medium;
the $\Delta$pKa between the buffer acid in the stabilizing medium and the buffer acid in the separation medium is less than 1, preferably less than 0.5;
at least one buffer acid in said stabilizing medium has a similar electrophoretic mobility and a similar pKa to the buffer acid used in the separation medium; and
at least one buffer acid in the stabilizing medium is identical to the buffer acid used in the separation medium.

6. The method according to claim 4 or claim 5, wherein the pKa of each of the buffer acids in said cathodic stabilizing medium is higher than the pI of the most alkaline analyte in the sample to be separated;
and, optionally, wherein said stabilizing medium is further **characterized by** at least one of the following:

said stabilizing medium contains more than one buffer acid, preferably wherein said stabilizing medium contains at least 2 or at least 3 buffer acids;
said stabilizing medium further contains more than one buffer base;
the pKa value of each of the buffer acids in the stabilizing medium is higher than the maximum pH value of the separation medium, preferably wherein the pKa of each of the buffer acids in the stabilizing medium is within the range (pI + 0.3) < pKa < (pI + 3), preferably within the range (pI + 0.5) < pKa < (pi + 2), and most preferably within the range (pI + 0.5) < pKa < (pI + 1.3);
the pKa value of each buffer acid is in the range of $(pH_{max} + 0.3) < pKa < (pH_{max} + 3)$, preferably within the range $(pH_{max} + 0.5) < pKa < (pH_{max} + 2)$, and most preferably within the range $(pH_{max} + 0.5) < pKa < (pH_{max} + 1.3)$;
the pH of the stabilizing medium is higher than the maximum pH of the separation medium, preferably wherein the pH of the cathodic stabilizing medium does not exceed the maximum pH of the separation medium by more than about 2 pH units;
the concentration of the buffer acids having a higher pKa (weaker acids) in said cathodic stabilizing medium is increased over the concentration of the buffer acid having the lowest pKa (strongest buffer acid), preferably, wherein
the concentration of the weaker acids is increased by a factor of at least about 2, and more preferably by a factor of at least about 3 over of concentration of the strongest buffer acid in said medium;
the total concentration of the buffer acids in said cathodic stabilizing medium is about 1.1 to 50-fold, preferably about 2 to 20-fold, and most preferably about 5 to 15-fold higher than the concentration of the buffer acid in the separation medium,
the total concentration of all buffer acids in the stabilizing medium is more than about 20 mM, preferably more than about 50 mM, and most preferably more than about 200 mM.

7. The method according to claim 1, wherein said cathodic stabilizing medium is used in separating anionic analytes by free-flow isotachophoresis (FF-ITP) and wherein said stabilizing medium comprises a compound having the slowest effective electrophoretic mobility towards the anode (terminator), and further comprises at least one strong base; and, optionally, wherein

the terminator is a buffer acid and the pKa of the buffer acid in said medium is preferably higher than the pKa of the buffer base used in the leader medium, more preferably wherein the difference between the pKa of the buffer acid in the cathodic stabilizing medium and the pKa of the buffer base in the leader medium (ΔpKa) is between about 1 and about 3, most preferably between about 1.5 and about 2.5; and/or

the concentration of the terminator is higher than the concentration of the at least one strong base; and/or the concentration of the terminator is between about 10 mM and about 500 mM, and preferably between about 50 mM and about 200 mM.

or

wherein said cathodic stabilizing medium is used in separating cationic analytes by cationic free-flow isotachophoresis (FF-ITP), wherein said cathodic stabilizing medium comprises at least one strong base and at least one buffer acid, wherein the concentration of the buffer acid is higher than the concentration of the strong base; and, optionally, wherein

the concentration of the at least one strong base and of the buffer acid is higher than the concentration of the same compounds in the cationic ITP leader medium; and/or

the concentration of the at least one strong base and of the buffer acid is higher than the concentration of the same compounds in the cationic ITP leader medium and the concentration of the buffer acid and/or of the at least one strong base is, independently from each other, increased by a factor of between 1.5 and 50-fold, preferably wherein the concentration is increased between 2 and 20-fold, and most preferably wherein the concentration is increased between 5 and 15-fold over the concentration of the same compounds in the cationic ITP leader medium.

8. The method according to any one of claims 1 to 7, wherein said anodic stabilizing medium for electrophoresis is further **characterized by** at least one of the following:

the concentration of the at least one strong acid in the medium is sufficient to achieve substantial protonation of all bases used in the stabilizing medium;
preferably wherein the concentration ratio between the base(s) and the acid(s) in the stabilizing medium (ratio of base(s) / acid(s)) is at least >1, but <50, preferably wherein the concentration ratio is between about 2 and about 10; the pH of the anodic stabilizing medium is lower than the pH of the separation medium; the buffer base is selected from biologically acceptable bases and amphoteric compounds, provided the pKa of the acid function in the amphoteric compound is at least 4 units above the pKa of the base function, preferably the buffer base is selected from the group consisting of taurine, glycine, 2-amino-butyric acid, gylcylglycine, β-alanine, GABA, EACA, creatinine, pyridine-ethanol, pyridine-propanol, histidine, BISTRIS, morpholinoethanol, triethanolamine, TRIS, ammediol, benzylamine, dietheylaminoethanol, trialkylamines; and
the strong acid is selected from hydrochloric acid, sulfuric acid, phosphoric acid, and other acids having a pKa that is at least 3 pK units below the pKa of the buffer base in said medium.

9. The method according to claim 8, wherein said anodic stabilizing medium for electrophoresis is further **characterized by** at least one of the following:

the anodic stabilizing medium further comprises at least one buffer acid, with the proviso that the concentration of all bases in said medium is greater than the concentration of all acids; the pKa of each buffer base in the stabilizing medium is equal or lower than the pKa of each buffer base used in the separation medium; the ΔpKa between the buffer base in the stabilizing medium and the buffer base in the separation medium is less than 1, preferably less than 0.5;
at least one buffer base in the stabilizing medium has a similar electrophoretic mobility to the buffer base used in the separation medium; and at least one buffer base in the stabilizing medium is identical to the buffer base used in the separation medium.

10. The method according to claim 8 or claim 9, wherein the pKa of each of the buffer bases in the anodic stabilizing medium is lower than the pl of the most acidic analyte in the sample to be separated; and, optionally, wherein said anodic stabilizing medium is further defined by at least one of the following:

the anodic stabilizing medium contains more than one buffer base, preferably wherein the stabilizing medium contains at least 2 or at least 3 buffer bases;
the pKa of each of the buffer bases in the anodic stabilizing medium is within the range (pl - 3) < pKa < (pl - 0.3), preferably within the range (pl - 2) < pKa < (pl - 0.5), and most preferably within the range (pl - 1.3) < pKa < (pl - 0.5);

the pH of the anodic stabilizing medium is lower than the minimum pH of the separation medium, preferably the pH of the anodic stabilizing medium is not lower than about 2 pH units below the minimum pH of the separation medium; and the pKa value of each of the buffer bases in the anodic stabilizing medium is higher than the minimum pH value of the separation medium, preferably wherein the pKa value of each buffer base is in the range of $(pH_{min} - 3) < pKa < (pH_{min} - 0.3)$, more preferably within the range $(ph_{min} - 2) < pKa < (ph_{min} - 0.5)$, and most preferably within the range $(pH_{min} - 1.3) < pKa < (ph_{min} - 0.5)$.

11. The method according to any one of claims 8 to 10, wherein said anodic stabilizing medium is further defined by at least one of the following:

the concentration of the buffer bases in the anodic stabilizing medium having a lower pKa (weaker bases) is increased over the concentration of the buffer base having the lowest pKa (strongest buffer base), preferably, wherein the concentration of the weaker bases is increased by a factor of at least about 2, and more preferably by a factor of at least about 3 over of concentration of the strongest buffer base in said medium; the total concentration of the buffer bases in the anodic stabilizing medium is about 1.1 to 50-fold, preferably about 2 to 20-fold, and most preferably about 5 to 15-fold higher than the concentration of the buffer base in the separation medium; and
the total concentration of all buffer bases in the anodic stabilizing medium is more than about 20 mM, preferably more than about 50, and most preferably more than about 200 mM.

12. The method according to claim 1, wherein said anodic stabilizing medium is used in separating cationic analytes by free-flow isotachophoresis (FF-ITP) and wherein said stabilizing medium comprises a compound having the slowest electrophoretic mobility towards the cathode (terminator), and further comprises at least one strong acid; and, optionally, wherein:

the terminator is a buffer base wherein the pKa of the buffer base in said medium is preferably lower than the pKa of the buffer acid used in the leader medium, more preferably wherein difference between the pKa of the buffer base in the cathodic stabilizing medium and the pKa of the buffer acid in the leader medium (ΔpKa) is between about 1 and about 3, most preferably between about 1.5 and about 2.5; and/or
the concentration of the terminator is higher than the concentration of the at least one strong acid;

and/or
the concentration of the terminator is between about 10 mM and about 500 mM, and preferably between about 50 mM and about 200 mM;

or

wherein said anodic stabilizing medium is used in separating anionic analytes by anionic free-flow isotachophoresis (FF-ITP), wherein said anodic stabilizing medium comprises at least one strong acid and at least one buffer base, wherein the concentration of the buffer base is higher than the concentration of the strong acid; and, optionally, wherein the concentration of the at least one strong acid and of the buffer base is higher than the concentration of the same compounds in the anionic ITP leader medium, and/or
the concentration of the at least one strong acid and of the buffer base is higher than the concentration of the same compounds in the anionic ITP leader medium and wherein the concentration of the buffer base and/or of the at least one strong acid is, independently from each other, increased by a factor of between 1.5 and 50-fold, preferably wherein the concentration is increased between 2 and 20-fold, and most preferably wherein the concentration is increased between 5 and 15-fold over the concentration of the same compounds in the anionic ITP leader medium.

13. The method according to any one of claims 1 to 12, wherein the anodic and/or cathodic stabilizing medium further comprises at least one additive, preferably wherein the at least one additive is selected from other acids and/or bases, essential mono- and divalent anions and cations, viscosity enhancers, detergents, protein solubilizing agents, affinity ligands and reducing agents, more preferably wherein the at least one additive is selected from the group consisting of thiourea, urea, hydrophilic polymeric derivatives such as HPMC, PEGs, polyalcohols such as glycerol, carbohydrates such as sucrose, chiral selectors such as dextrins and cyclodextrins, lectins, mercaptoethanol, dithiothreitol (DTT), calcium ions, magnesium ions, zinc ions, chloride ions, sulfate ions, EDTA, EGTA, azide.

14. The method according to any one of claims 1 to 13, wherein
the conductivity of said stabilizing medium is more than about 500 μS/cm, preferably more than about 1000 μS/cm, and most preferably more than about 2000 μS/cm; and/or
the conductivity in the stabilizing medium is by a factor of at least about 3, and preferably at least about 5, and most preferably at least about 10, higher than the conductivity of the separation medium.

15. The method according to any one of claims 1 to 14 for separating liposome populations in a sample by free-flow electrophoresis, wherein the separation medium has a conductivity of less than 1000 μS/cm, preferably wherein the medium has a conductivity of less than 600 μS/cm.

16. The method of claim 15, wherein at least a fraction of the liposomes has an effective electrophoretic mobility of less than about 20 x $10^{-9}$ m$^2$/Vs; and/or the relative concentrations of the buffer acid and the buffer base in the separation medium are between 9:1 and 1:9, preferably wherein the concentration of the buffer acid and the buffer base in the separation medium is essentially the same; and/or the pH of the separation medium is between 6 and 8, preferably wherein the separation medium has a pH of about 7.

**Patentansprüche**

1. Verfahren zur Trennung von Analyten durch Free-flow-Elektrophorese, wobei die Free-flow-Elektrophorese mit folgendem durchgeführt wird:

einem binären Trennmedium, das eine Puffersäure und eine Pufferbase enthält, wobei der pKa-Wert der Puffersäure höher ist als der pH-Wert des Trennmediums, und wobei der pKa-Wert der Pufferbase niedriger ist als der pH-Wert des Trennmediums; und **gekennzeichnet ist durch**

ein kathodisches Stabilisierungsmedium, das mindestens eine Puffersäure und mindestens eine starke Base umfasst;

ein anodisches Stabilisierungsmedium, das mindestens eine Pufferbase und mindestens eine starke Säure umfasst;

wobei das anodische und kathodische Stabilisierungsmedium eine höhere Leitfähigkeit als das Trennmedium aufweisen, wodurch eine Kreuzverunreinigung zwischen dem Trennbereich und dem Elektrodenkompartiment der Elektrophoresevorrichtung vermieden wird, und

wobei der pH des Trennmediums während der Elektrophorese im Wesentlichen konstant ist, oder wobei der pH Unterschied zwischen der Anodenseite und der Kathodenseite zwischen etwa 0,2 und 3 pH-Einheiten während der Elektrophorese beträgt.

2. Verfahren nach Anspruch 1, wobei das Trennmedium weiterhin durch mindestens eines von folgendem gekennzeichnet ist:

der pKa-Wert der Puffersäure ist etwa 0,2 bis etwa 2 Einheiten, vorzugsweise 0,4 bis 0,9 Einheiten höher ist als der pH-Wert des Trennmediums;

der pKa-Wert der Pufferbase ist etwa 0,2 bis etwa 2 Einheiten, vorzugsweise 0,4 bis 0,9 Einheiten niedriger als der pH-Wert des Trennmediums;

der Unterschied zwischen dem minimalen pH-Wert und dem maximalen pH-Wert des Trennmediums während der Elektrophorese beträgt mehr als etwa 0,2 und weniger als etwa 3 pH-Einheiten, wobei der pH-Unterschied vorzugsweise zwischen 0,5 und 2 pH-Einheiten, und am stärksten bevorzugt zwischen 0,5 und 1,5 pH-Einheiten beträgt;

der Unterschied des pKa-Wertes der Puffersäure und des pKa-Wertes der Pufferbase (ΔpKa) beträgt zwischen etwa 0,5 und etwa 4,0, vorzugsweise zwischen 0,8 und 2,5 und stärker bevorzugt zwischen 1,2 und 1,8, oder wobei der Unterschied des pKa-Wertes der Puffersäure und des pKa-Wertes der Pufferbase (ΔpKa) zwischen etwa 2,5 und 4 und vorzugsweise zwischen etwa 2,5 und 3,3 beträgt;

die Puffersäure ist aus biologisch verträglichen Puffersubstanzen ausgewählt, die vorzugsweise aus der Gruppe ausgewählt sind, bestehend aus HIBA; Essigsäure, Picolinsäure, PES, MES, ACES, MOPS, HEPES, EPPS, TAPS, AMPSO, CAPSO, α-Alanin, GABA, EACA, 4-Hydroxypyridin und 2-Hydroxypyridin;

die Pufferbase ist aus biologisch verträglichen Puffersubstanzen ausgewählt, die vorzugsweise aus der Gruppe ausgewählt sind, bestehend Taurin, Glycin, 2-Aminobuttersäure, Glycylglycin, β-Alanin, GABA, EACA, Creatinin, Pyridinethanol, Pyridinpropanol, Histidin, BISTRIS, Morpholinoethanol, Triethanolamin, TRIS, Ammediol, Benzylamin, Diethylaminoethanol, Trialkylaminen; und

das Trennmedium umfasst weiterhin ein oder mehr als ein Additiv, vorzugsweise wobei die Additive aus anderen Säuren und/oder Basen, ein- und zweiwertigen essentiellen Anionen und Kationen, Viskositätsverstärkern, Detergentien, Protein-Solubilisierungsmitteln, Affinitätsliganden und Reduktionsmitteln ausgewählt sind, stärker bevorzugt wobei das Additiv aus der Gruppe ausgewählt ist bestehend aus Thioharnstoff, Harnstoff, hydrophilen Polymerderivaten, wie HPMC, PEGs, Polyalkoholen, wie Glycerin, Kohlehydraten, wie Saccharose, chiralen Selektoren, wie Dextrine oder Cyclodextrine, Lektinen, Mercaptoethanol, Dithiothreitol (DTT), Calciumionen, Magnesiumionen, Zinkionen, Chloridionen, Sulfationen, EDTA, EGTA, und Azid.

3. Verfahren nach Anspruch 1 oder Anspruch 2, wobei das Trennmedium weiterhin durch mindestens eines von folgendem gekennzeichnet ist:

das Konzentrationsverhältnis zwischen der Puffersäure und der Pufferbase ist im Bereich von etwa 9:1 für die der Anode am nächsten liegende Fraktion bis etwa 1:9 für die der Kathode am nächsten liegende Fraktion, vorzugsweise wobei die Konzentrationen der Puffersäure und der Pufferbase in dem Trennmedium ungefähr gleich sind;

das Trennmedium besteht aus mindestens 2 bis etwa 15 getrennten Fraktionen, die variierende Konzentration der Puffersäure und der Pufferbase umfassen, um einen vorgeformten pH-Gradienten zu ergeben, vorzugsweise wobei das Trennmedium 4 bis 10 getrennte Fraktionen umfasst;

die Konzentration der Puffersäure und, unabhängig voneinander, der Pufferbase in dem Trennmedium ist $\geq$ 5 mM, und vorzugsweise $\geq$ 10 mM, stärker bevorzugt $\geq$ 20 mM, am stärksten bevorzugt $\geq$ 50 mM; und

die Leitfähigkeit des Trennmediums ist zwischen etwa 30 und 1000 $\mu$S/cm, oder zwischen etwa 50 und 500 $\mu$S/cm, oder zwischen etwa 50 und 400 $\mu$S/cm, vorzugsweise zwischen etwa 50 und 200 $\mu$S/cm, und stärker bevorzugt zwischen etwa 50 und 150 $\mu$S/cm.

4. Verfahren nach einem der Ansprüche 1 bis 3, wobei das kathodische Stabilisierungsmedium für die Elektrophorese weiterhin durch mindestens eines von folgendem gekennzeichnet ist:

die Konzentration der mindestens einen starken Base in dem Medium ist ausreichend, um eine wesentliche Deprotonierung von allen in dem Stabilisierungsmedium verwendeten Säuren zu erreichen, vorzugsweise wobei das Konzentrationsverhältnis zwischen der Säure (den Säuren) und der Base (den Basen) in dem Stabilisierungsmedium (das Verhältnis von Säure(n)/Base(n)) ist mindestens >1, aber <50, vorzugsweise wobei das Konzentrationsverhältnis zwischen etwa 2 und etwa 10 beträgt; und

der pH des kathodischen Stabilisierungsmediums ist höher als der pH des Trennmediums; vorzugsweise wobei

die Puffersäure ausgewählt aus Säuren oder amphoteren Verbindungen ist, mit der Maßgabe, dass der pKa der basischen Funktion in der amphoteren Verbindung mindestens 3 Einheiten unter dem pKa der Säurefunktion ist, wobei die Säurefunktion einen pKa von zwischen etwa 3 und 13 aufweist, stärker bevorzugt wobei die Puffersäure aus der Gruppe ausgewählt ist bestehend aus HIBA; Essigsäure, Picolinsäure, PES, MES, ACES, MOPS, HEPES, EPPS, TAPS, AMPSO, CAPSO, $\alpha$-Alanin, GABA, EACA, 4-Hydroxypyridin und 2-Hydroxypyridin; und/oder

die starke Base aus einem Alkalimetallhydroxid, einem Erdalkalimetallhydroxid, und anderen Basen mit einem pKa, der mindestens 3 pK-Einheiten über dem pKa der Puffersäure in dem Medium ist, ausgewählt ist.

5. Verfahren nach Anspruch 4, wobei das kathodische Stabilisierungsmedium für die Elektrophorese weiterhin durch mindestens eines von folgendem gekennzeichnet ist:

das kathodische Stabilisierungsmedium umfasst weiterhin mindestens eine Pufferbase, mit der Maßgabe, dass die Konzentration von allen Säuren in dem Medium größer ist als die Konzentration von allen Basen;

der pKa von jeder Puffersäure in dem Stabilisierungsmedium ist gleich oder höher als der pKa von jeder in dem Trennmedium verwendeten Puffersäure;

$\Delta$pKa zwischen der Puffersäure in dem Stabilisierungsmedium und der Puffersäure in dem Trennmedium beträgt weniger als 1, vorzugsweise weniger als 0,5;

mindestens eine Puffersäure in dem Stabilisierungsmedium weist eine ähnliche elektrophoretische Beweglichkeit und einen ähnlichen pKa auf wie die in dem Trennmedium verwendete Puffersäure; und

mindestens eine Puffersäure in dem Stabilisierungsmedium ist mit der in dem Trennmedium verwendeten Puffersäure identisch.

6. Verfahren nach Anspruch 4 oder Anspruch 5, wobei der pKa von jeder der Puffersäuren in dem kathodischen Stabilisierungsmedium höher ist als der pI der meisten alkalischen Analyten in der zu trennenden Probe;

und, gegebenenfalls, wobei das Stabilisierungsmedium weiterhin durch mindestens eines von folgendem gekennzeichnet ist:

das Stabilisierungsmedium enthält mehr als einen Säurepuffer, vorzugsweise wobei das Stabilisierungsmedium mindestens 2 oder mindestens 3 Säurepuffer enthält;

das Stabilisierungsmedium enthält weiterhin mehr als eine Pufferbase;

der pKa-Wert von jedem der Säurepuffer in dem Stabilisierungsmedium ist höher als der Maximum-pH-Wert des Trennmediums, vorzugsweise wobei der pKa von jedem der Säurepuffer in dem Stabilisierungsmedium im Bereich von (pI + 0,3) < pKa < (pI + 3), vorzugsweise im Bereich von (pI + 0,5) < pKa < (pI + 2), und am stärksten bevorzugt im Bereich von (pI + 0,5) < pKa < (pI + 1,3) ist;

der pKa-Wert von jeder Puffersäure ist im Bereich von ($pH_{max}$ + 0,3) < pKa < ($pH_{max}$ + 3), vorzugsweise im Bereich von ($pH_{max}$ + 0,5) < pKa < ($pH_{max}$ + 2), und am stärksten bevorzugt im Bereich von ($pH_{max}$ + 0,5) < pKa < ($pH_{max}$ + 1,3);

der pH des Stabilisierungsmediums ist höher ist als der Maximum-pH des Trennmediums, vorzugsweise wobei der pH des kathodischen Stabilisierungsmediums den Maximum-pH des Trennmediums um nicht mehr als etwa 2 pH-Einheiten überschreitet;

die Konzentration der Puffersäuren mit einem höheren pKa (schwächere Säuren) in dem kathodischen Stabilisierungsmedium erhöht ist gegenüber der Konzentration der Puffersäure mit dem niedrigsten pKa (stärkste Puffersäure), vorzugsweise, wobei die Konzentration der schwächeren Säuren um einen Faktor von mindestens etwa 2, und stärker bevorzugt einen Faktor von mindestens etwa 3 gegenüber der Konzentration der stärksten Puffersäure in dem Medium erhöht ist;

die Gesamtkonzentration der Puffersäuren in dem kathodischen Stabilisierungsmedium ist etwa 1,1 bis 50 Mal, vorzugsweise etwa 2 bis 20 Mal, und am stärksten bevorzugt etwa 5 bis 15 Mal höher als die Konzentration der Puffersäure in dem Trennmedium,

die Gesamtkonzentration von allen Puffersäuren in dem Stabilisierungsmedium beträgt mehr als etwa 20 mM, vorzugsweise mehr als etwa 50 mM, und am stärksten bevorzugt mehr als etwa 200 mM.

7. Verfahren nach Anspruch 1, wobei das kathodische Stabilisierungsmedium zur Trennung anionischer Analyten durch Free-flow-Isotachophorese (FF-ITP) verwendet wird und wobei das Stabilisierungsmedium eine Verbindung mit der langsamsten effektiven elektrophoretischen Beweglichkeit in Richtung Anode (Terminator) und weiterhin mindestens eine starke Base umfasst;

und gegebenenfalls wobei

der Terminator eine Puffersäure ist und der pKa der Puffersäure in dem Medium vorzugsweise höher ist als der pKa der in dem Leitmedium verwendeten Pufferbase, stärker bevorzugt wobei der Unterschied zwischen dem pKa der Puffersäure in dem kathodischen Stabilisierungsmedium und dem pKa der Pufferbase in dem Leitmedium (ΔpKa) zwischen etwa 1 und etwa 3, am stärksten bevorzugt zwischen etwa 1,5 und etwa 2,5 ist; und/oder

die Konzentration des Terminators höher ist als die Konzentration der mindestens einen starken Base; und/oder

die Konzentration des Terminators zwischen etwa 10 mM und etwa 500 mM und vorzugsweise zwischen etwa 50 mM und etwa 200 mM beträgt, oder

wobei das kathodische Stabilisierungsmedium zur Trennung von kationischen Analyten durch Free-flow-Isotachophorese (FF-ITP) verwendet wird, wobei das kathodische Stabilisierungsmedium mindestens eine starke Base und mindestens eine Puffersäure umfasst,

wobei die Konzentration der Puffersäure höher ist als die Konzentration der starken Base; und gegebenenfalls, wobei

die Konzentration der mindestens einen starken Base und der Puffersäure höher ist als die Konzentration der gleichen Verbindungen in dem kationischen ITP-Leitmedium; und/oder

die Konzentration der mindestens einen starken Base und der Puffersäure höher ist als die Konzentration der gleichen Verbindungen in dem kationischen ITP-Leitmedium und die Konzentration der Puffersäure und/oder der mindestens einen starken Base, unabhängig voneinander, um einen Faktor von zwischen 1,5 und 50 erhöht ist, vorzugsweise wobei die Konzentration um einen Faktor von zwischen 2 und 20, und am stärksten bevorzugt wobei die Konzentration um einen Faktor von zwischen 5 und 15 gegenüber der Konzentration der gleichen Verbindungen in dem kationischen ITP-Leitmedium erhöht ist.

8. Verfahren nach einem der Ansprüche 1 bis 7, wobei das anodische Stabilisierungsmedium für die Elektrophorese weiterhin durch mindestens eines von folgendem gekennzeichnet ist:

die Konzentration der mindestens einen starke Säure in dem Medium ist ausreichend, um eine wesentliche Protonierung von allen in dem Stabilisierungsmedium verwendeten Basen zu erreichen, vorzugsweise wobei das Konzentrationsverhältnis zwischen der Base (den Basen) und der Säure (den Säuren) in dem Stabilisierungsmedium (das Verhältnis von Base(n)/Säure(n)) mindestens >1, aber <50 ist, vorzugsweise wobei das Konzentrationsverhältnis zwischen etwa 2 und etwa 10 ist;

der pH des anodischen Stabilisierungsmediums ist niedriger als der pH des Trennmediums;

die Pufferbase ist aus biologisch verträglichen Basen und amphoteren Verbindungen ausgewählt, mit der Maßgabe, dass der pKa der Säurefunktion in der amphoteren Verbindung mindestens 4 Einheiten über dem pKa der Basefunktion ist, die Pufferbase vorzugsweise aus der Gruppe ausgewählt ist bestehend aus Taurin, Glycin, 2-Aminobuttersäure, Glycylglycin, β-Alanin, GABA, EACA, Creatinin, Pyridinethanol, Pyridinpropanol, Histidin, BISTRIS, Morpholinoethanol, Triethanolamin, TRIS, Ammediol, Benzylamin, Diethylaminoethanol, Trialkylaminen; und

die starke Säure aus der Gruppe ausgewählt ist bestehend aus Chlorwasserstoffsäure, Schwefelsäure, Phosphorsäure, und anderen Säuren mit einem pKa, der mindestens 3 pK-Einheiten unter dem pKa der Pufferbase in dem Medium ist.

9. Verfahren nach Anspruch 8, wobei das anodische Stabilisierungsmedium für die Elektrophorese weiterhin durch mindestens eines von folgendem gekennzeichnet ist:

das anodische Stabilisierungsmedium umfasst weiterhin mindestens eine Puffersäure, mit der Maßgabe, dass die Konzentration von allen Basen in dem Medium höher ist als die Konzentration von allen Säuren;

der pKa von jeder Pufferbase in dem Stabilisierungsmedium ist gleich oder niedriger als der pKa von jeder in dem Trennmedium verwendeten Pufferbase;

$\Delta$pKa zwischen der Pufferbase in dem Stabilisierungsmedium und der Pufferbase in dem Trennmedium beträgt weniger als 1, vorzugsweise weniger als 0,5;

mindestens eine Pufferbase in dem Stabilisierungsmedium weist eine zu der in dem Trennmedium verwendeten Pufferbase ähnliche elektrophoretische Beweglichkeit auf; und

mindestens eine Pufferbase in dem Stabilisierungsmedium ist mit der in dem Trennmedium verwendeten Pufferbase identisch.

10. Verfahren nach Anspruch 8 oder Anspruch 9, wobei der pKa von jeder der Pufferbasen in dem anodischen Stabilisierungsmedium niedriger ist als der pI der meisten sauren Analyten in der zu trennenden Probe; und, gegebenenfalls, wobei das anodische Stabilisierungsmedium weiterhin durch mindestens eines von folgendem definiert ist:

das anodische Stabilisierungsmedium enthält mehr als eine Pufferbase, vorzugsweise wobei das Stabilisierungsmedium mindestens 2 oder mindestens 3 Pufferbasen enthält;

der pKa von jeder der Pufferbasen in dem anodischen Stabilisierungsmedium ist im Bereich von (pI - 3) < pKa < (pI - 0,3), vorzugsweise im Bereich von (pI - 2) < pKa < (pI - 0,5), und am stärksten bevorzugt im Bereich von (pI - 1,3) <

pKa < (pI - 0,5);

der pH des anodischen Stabilisierungsmediums ist niedriger als der Minimum-pH des Trennmediums, vorzugsweise ist der pH des anodischen Stabilisierungsmediums nicht tiefer als etwa 2 pH-Einheiten unter dem Minimum-pH des Trennmediums;

und

der pKa-Wert von jeder der Pufferbasen in dem anodischen Stabilisierungsmedium ist höher als der minimale pH-Wert des Trennmediums, vorzugsweise wobei der pKa-Wert von jeder Pufferbase im Bereich von $(pH_{mn} - 3) < pKa < (pH_{min} - 0,3)$, stärker bevorzugt im Bereich von $(pH_{min} - 2) < pKa < (pH_{min} - 0,5)$, und am stärksten bevorzugt im Bereich von $(pH_{min} - 1,3) < pKa < (pH_{min} - 0,5)$ ist.

11. Verfahren nach einem der Ansprüche 8 bis 10, wobei das anodische Stabilisierungsmedium weiterhin durch mindestens eines von folgendem definiert ist:

die Konzentration der Pufferbasen in dem anodischen Stabilisierungsmedium mit einem niedrigeren pKa (die schwächeren Basen) erhöht ist gegenüber der Konzentration der Pufferbase mit dem niedrigsten pKa (die stärkste Pufferbase), vorzugsweise, wobei die Konzentration der schwächeren Basen um einen Faktor von mindestens etwa 2, und stärker bevorzugt einen Faktor von mindestens etwa 3 gegenüber der Konzentration der stärksten Pufferbase in dem Medium erhöht ist; die Gesamtkonzentration der Pufferbasen in dem anodischen Stabilisierungsmedium ist etwa 1,1 bis 50 Mal, vorzugsweise etwa 2 bis 20 Mal, und am stärksten bevorzugt etwa 5 bis 15 Mal höher als die Konzentration der Pufferbase in dem Trennmedium, und

die Gesamtkonzentration von allen Pufferbasen in dem anodischen Stabilisierungsmedium beträgt mehr als etwa 20 mM, vorzugsweise mehr als etwa 50 mM, und am stärksten bevorzugt mehr als etwa 200 mM.

12. Verfahren nach Anspruch 1, wobei das anodische Stabilisierungsmedium für die Trennung von kationischen Analyten durch Free-flow-Isotachophorese (FF-ITP) verwendet wird und wobei das Stabilisierungsmedium eine Verbindung mit der langsamsten elektrophoretischen Beweglichkeit in Richtung der Kathode (Terminator) und weiterhin mindestens ein starke Säure umfasst;

und, gegebenenfalls; wobei

der Terminator eine Pufferbase ist wobei der pKa der Pufferbase in dem Medium vorzugsweise niedriger ist als der pKa der Puffersäure in dem verwendeten Leitmedium, stärker bevorzugt wobei der Unterschied zwischen dem pKa der Pufferbase in dem kathodischen Stabilisierungsmedium und dem pKa der Puffersäure in dem Leitmedium (ΔpKa) zwischen etwa 1 und etwa 3, am stärksten bevorzugt zwischen etwa 1,5 und etwa 2,5 ist; und/oder

die Konzentration des Terminators höher ist als die Konzentration der mindestens einen starken Säure; und/oder

die Konzentration des Terminators zwischen etwa 10 mM und etwa 500 mM und vorzugsweise zwischen etwa 50 mM und etwa 200 mM beträgt, oder

wobei das anodische Stabilisierungsmedium für die Trennung von anionischen Analyten durch anionische Free-flow-Isotachophorese (FF-ITP) verwendet wird, wobei das anodische Stabilisierungsmedium mindestens ein starke Säure und mindestens eine Pufferbase umfasst, wobei die Konzentration der Pufferbase höher ist als die Konzentration der starken Säure;

und gegebenenfalls, wobei

die Konzentration der mindestens einen starken Säure und der Pufferbase ist höher als die Konzentration der gleichen Verbindungen in dem anionischen ITP-Leitmedium;

und/oder

die Konzentration der mindestens einen starken Säure und der Pufferbase ist höher als die Konzentration der gleichen Verbindungen in dem anionischen ITP-Leitmedium, und wobei die Konzentration der Pufferbase und/oder der mindestens einen starken Säure, unabhängig voneinander, um einen Faktor von zwischen 1,5 und 50 erhöht wird, vorzugsweise wobei die Konzentration zwischen 2 und 20-fach erhöht wird, und am stärksten bevorzugt, wobei die Konzentration zwischen 5 und 15-fach gegenüber der Konzentration der gleichen Verbindungen in dem anionischen ITP-Leitmedium erhöht ist.

13. Verfahren nach einem der Ansprüche 1 bis 12, wobei das anodische und/oder kathodische Stabilisierungsmedium weiterhin mindestens ein Additiv umfasst, vorzugsweise wobei das mindestens eine Additiv aus anderen Säuren und/oder Basen, essentiellen ein- und zweiwertigen Anionen und Kationen, Viskositätsverstärkern, Detergentien, Protein-Solubilisierungsmitteln, Affinitätsliganden und Reduktionsmitteln ausgewählt ist, stärker bevorzugt wobei das mindestens eine Additiv aus der Gruppe ausgewählt ist bestehend aus Thioharnstoff, Harnstoff, hydrophilen Polymerderivaten, wie HPMC, PEGs, Polyalkoholen, wie Glycerin, Kohlehydraten, wie Saccharose, chiralen Selektoren, wie Dextrine oder Cyclodextrine, Lektinen, Mercaptoethanol, Dithiothreitol (DTT), Calciumionen, Magnesiumionen, Zinkionen, Chloridionen, Sulfationen, EDTA, EGTA, und Azid.

14. Verfahren nach einem der Ansprüche 1 bis 13, wobei die Leitfähigkeit des Stabilisierungsmediums mehr als etwa 500 μS/cm, vorzugsweise mehr als etwa 1000 μS/cm, und am stärksten bevorzugt mehr als etwa 2000 μS/cm beträgt;

und/oder

die Leitfähigkeit des Stabilisierungsmediums um einen Faktor von mindestens etwa 3, und vorzugsweise von mindestens etwa 5, und am stärksten bevorzugt von mindestens etwa 10 höher ist als die Leitfähigkeit des Trennmediums.

15. Verfahren nach einem der Ansprüche 1 bis 14 zur Trennung von Liposomenpopulationen in einer Probe durch Free-flow-Elektrophorese, wobei das Trennmedium eine Leitfähigkeit von weniger als 1000 μS/cm aufweist, vorzugsweise wobei das Medium eine Leitfähigkeit von weniger als 600 μS/cm aufweist.

16. Verfahren nach Anspruch 15, wobei mindestens eine Fraktion der Liposomen eine effektive elektrophoretische Beweglichkeit von weniger als etwa $20\times10^{-9}$ $m^2$/Vs aufweist; und/oder

die relativen Konzentrationen der Puffersäure und der Pufferbase in dem Trennmedium zwischen 9:1 und 1:9 betragen, vorzugsweise wobei die Konzentration der Puffersäure und der Pufferbase in dem Trennmedium im Wesentlichen die gleiche ist; und/oder

der pH des Trennmediums zwischen 6 und 8 ist, vorzugsweise wobei das Trennmedium einen pH von etwa 7 aufweist.

## Revendications

1. Procédé de séparation d'analytes par électrophorèse à écoulement libre, dans lequel l'électrophorèse à écoulement libre est mise en oeuvre avec:

un milieu de séparation binaire contenant un acide tampon et une base tampon, dans lequel la valeur de pKa de l'acide tampon est supérieure à la valeur de pH du milieu de séparation, et dans lequel la valeur de pKa de la base tampon est inférieure à la valeur de pH du milieu de séparation; et **caractérisé par**

un milieu de stabilisation cathodique comprenant au moins un acide tampon et au moins une base forte;

un milieu de stabilisation anodique comprenant au moins un base tampon et au moins une acide forte;

dans lequel le milieu de stabilisation anodique et cathodique a une conductivité supérieure au milieu de séparation, en évitant de ce fait une contamination croisée entre la région de séparation et le compartiment d'électrode du dispositif d'électrophorèse

et

dans lequel le pH du milieu de séparation pendant l'électrophorèse est sensiblement constant, ou dans lequel la différence entre le côté anodique et le côté cathodique est entre environ 0,2 et 3 unités de pH pendant l'électrophorèse.

2. Procédé selon la revendication 1, dans lequel ledit milieu de séparation est en outre **caractérisé par** au moins l'un des suivants :

la valeur de pKa de l'acide tampon est environ 0,2 à environ 2 unités, préférablement 0,4 à 0,9 unités supérieure à la valeur de pH du milieu de séparation;

la valeur de pKa de la base tampon est environ 0,2 à environ 2 unités, préférablement 0,4 à 0,9 unités inférieure à la valeur de pH du milieu de séparation;

la différence entre la valeur de pH minimale et la valeur maximale du milieu de séparation pendant l'électrophorèse est plus d'environ 0,2 et moins d'environ 3 unités de pH, préférablement dans lequel la différence de pH est entre 0,5 et 2 unités de pH,

et le plus préférablement dans lequel la différence de pH est entre 0,5 et 1,5 unités de pH ;

la différence de la valeur de pKa de l'acide tampon et la valeur de pKa de la base tampon ($\Delta$pKa) est entre environ 0,5 et environ 4,0, préférablement entre 0,8 et 2,5 et plus préférablement entre 1,2 et 1,8, ou dans lequel la différence de la valeur de pKa de l'acide tampon et la valeur de pKa de la base tampon ($\Delta$Ka) est entre environ 2,5 et 4 et préférablement entre environ 2,5 et 3,3 ;

l'acide tampon est sélectionné parmi les substances tampon biologiquement acceptables, préférablement sélectionnés parmi le groupe consistant en HIBA; l'acide acétique, l'acide picolinique, PES, MES, ACES, MOPS, HEPES, EPPS, TAPS, AMPSO, CAPSO, l'$\alpha$-alanine, GABA, EACA, la 4-hydroxypyridine et la 2-hydroxypyridine ;

la base tampon est sélectionnée parmi les substances tampon biologiquement acceptables préférablement sélectionnés parmi le groupe consistant en la taurine, la glycine, l'acide 2-aminobutyrique, la glycylglycine, la $\beta$-alanine, GABA, EACA, la créatinine, le pyridine-éthanol, le pyridine-propanol, l'histidine, BISTRIS, le morpholinoéthanol, la triéthanolamine, TRIS, l'ammédiol, la benzylamine, le diéthylaminoéthanol, les trialkylamines ; et

le milieu de séparation comprend en outre un ou encore plus qu'un additif, préférablement dans lequel les additifs sont sélectionnés parmi d'autres acides et/ou bases, les anions et les cations mono- et divalents essentiels, les exhausteurs de viscosité, les détergents, les agents solubilisant des protéines, les ligands d'affinité et les agents réducteurs, plus préférablement dans lequel l'additif est sélectionné parmi le groupe consistant en la thiourée, l'urée, les dérivés hydrophiles polymères tel que HPMC, PEGs, les polyalcools tel que le glycérol, les hydrates de carbone tel que la sucrose, les sélecteurs chiraux tel que les dextrines, ou les cyclodéxtrines, les léctines, le mercaptoéthanol, le dithiothréitol (DTT), les ions calcium, les ions magnésium, les ions zinc, les ions chlorure, les ions sulfate, EDTA, EGTA, et l'azide.

3. Procédé selon la revendication 1 ou la revendication 2, dans lequel ledit milieu de séparation est en outre **caractérisé par** au moins l'un des suivants :

le rapport de concentration entre l'acide tampon et la base tampon est dans la gamme d'environ 9:1 pour la fraction la plus proche à l'anode jusqu'à environ 1:9 pour la fraction la plus proche à la cathode, préférablement dans lequel les concentrations de l'acide tampon et la base tampon dans le milieu de séparation sont presque égaux ;

ledit milieu de séparation consiste en au moins 2 à environ 15 fractions séparées qui comprennent des concentrations variées de l'acide tampon et de la base tampon pour donner un gradient de pH préalablement formé, préférablement dans lequel ledit milieu de séparation comprend 4 à 10 fractions séparées;

la concentration de l'acide tampon et, indépendamment l'un de l'autre, de la base tampon dans le milieu de séparation est $\geq$ 5 mM, et préférablement $\geq$ 10 mM, plus préférablement $\geq$ 20 mM, le plus préférablement $\geq$ 50 mM ; et

la conductivité du milieu de séparation est entre environ 30 et 1000 $\mu$S/cm, ou entre environ 50 et 500 $\mu$S/cm, ou entre environ 50 et 400 $\mu$S/cm, préférablement entre environ 50 et 200 $\mu$S/cm, et plus préférablement entre environ 50 et 150 $\mu$S/cm.

4. Procédé selon l'une des revendications 1 à 3, dans lequel ledit milieu de stabilisation cathodique pour l'électrophorèse est en outre **caractérisé par** au moins l'un des suivants :

la concentration de l'au moins une base forte dans le milieu est suffisante pour atteindre une déprotonation essentielle de tous les acides utilisés dans le milieu de stabilisation, préférablement dans lequel le rapport de concentration entre l'acide (les acides) et la base (les bases) dans le milieu de stabilisation (le rapport d'acide(s)/de base(s) est au moins >1, mais <50, préférablement dans lequel le rapport de concentration est entre environ 2 et environ 10 ; et

le pH du milieu de stabilisation cathodique est supérieur au pH du milieu de séparation ; préférablement dans lequel

l'acide tampon est sélectionné parmi les acides ou les composés amphotères, à condition que le pKa de la fonction basique dans le composé amphotère est au moins 3 unités au-dessous du pKa de la fonction acide, dans lequel la fonction acide a un pKa situé entre environ 3 et 13, plus préférablement dans lequel ledit acide tampon est sélectionné parmi le groupe consistant en HIBA ; l'acide acétique, l'acide picolinique, PES, MES, ACES, MOPS, HEPES, EPPS, TAPS, AMPSO, CAPSO, l'$\alpha$-alanine, GABA, EACA, la 4-hydroxypyridine et la 2-hydroxypyridine ; et/ou

la base forte est sélectionnée parmi un hydroxyde de métal alcalin, un hydroxyde de métal alcalino-terreux, et d'autres bases ayant un pKa qui est au moins 3 unités de pK au-dessus du pKa de l'acide tampon dans ledit milieu.

5. Procédé selon la revendication 4, dans lequel ledit milieu de stabilisation cathodique pour l'électrophorèse est en outre **caractérisé par** au moins l'un des suivants :

le milieu de stabilisation cathodique comprend en outre au moins une base tampon, à condition que la concentration de tous les acides dans ledit milieu est supérieure à la concentration de toutes les bases ;

le pKa de chaque acide tampon dans le milieu de stabilisation est égal ou supérieur au pKa de chaque acide tampon utilisé dans le milieu de séparation ;

le $\Delta$Ka entre l'acide tampon dans le milieu de stabilisation et l'acide tampon dans le milieu de séparation est moins de 1, préférablement moins de 0,5 ;

au moins un acide tampon dans le milieu de stabilisation a une mobilité électrophorétique similaire et un pKa similaire à l'acide tampon utilisé dans le milieu de séparation ; et

au moins un acide tampon dans le milieu de stabilisation est identique à l'acide tampon utilisé dans le milieu de séparation.

6. Procédé selon la revendication 4 ou revendication 5, dans lequel ledit pKa des acides tampons dans ledit milieu de stabilisation cathodique est supérieur

au pI de la plupart des analytes alcalins dans l'échantillon à séparer ;

et, en cas échéant, dans lequel ledit milieu de stabilisation est en outre **caractérisé par** au moins l'un des suivants :

ledit milieu de stabilisation contient plus d'un acide tampon, préférablement dans lequel le milieu de stabilisation contient au moins 2 ou au moins 3 acides tampons ;

ledit milieu de stabilisation contient en outre plus d'une base tampon ;

la valeur de pKa de chacun des tampon dans le milieu de stabilisation est supérieure à la valeur de pH maximum du milieu de séparation, préférablement dans lequel le pKa de chacun des acides tampons dans le milieu de stabilisation est dans la gamme de $(pI + 0,3) < pKa < (pI + 3)$, préférablement dans la gamme de $(pI + 0,5) < pKa < (pI + 2)$, et le plus préférablement dans la gamme de $(pI + 0,5) < pKa < (pI + 1,3)$ ;

le pKa de chaque acide tampon est dans la gamme de $(pH_{max} + 0,3) < pKa < (pH_{max} + 3)$, préférablement dans la gamme de $(pH_{max} + 0,5) < pKa < (pH_{max} + 2)$, et le plus préférablement dans la gamme de $(pH_{max} + 0,5) < pKa < (pH_{max} + 1,3)$ ;

le pH du milieu de stabilisation est supérieur au pH maximum du milieu de séparation, préférablement dans lequel le pH du milieu de stabilisation cathodique ne dépasse pas le pH maximum du milieu de séparation de plus d'environ 2 unités de pH ;

la concentration des acides tampons ayant un pKa plus élevé (les acides plus faibles) dans ledit milieu de stabilisation cathodique est augmentée au-dessus de la concentration de l'acide tampon ayant le pKa le plus faible (l'acide tampon le plus fort), préférablement, dans lequel la concentration des acides plus faibles est augmentée d'un facteur d'au moins environ 2, et plus préférablement d'un facteur d'au moins environ 3 au-dessus de la concentration de l'acide tampon le plus fort dans ledit milieu ;

la concentration totale des acides tampons dans ledit milieu de stabilisation cathodique est environ 1,1 à 50 fois, préférablement environ 2 à 20 fois, et le plus préférablement environ 5 à 15 fois plus haute que la concentration de l'acide tampon dans le milieu de séparation,

la concentration totale de tous les acides tampons dans le milieu de stabilisation est plus d'environ 20 mM, préférablement plus d'environ 50 mM, et le plus préférablement plus d'environ 200 mM.

7. Procédé selon la revendication 1, dans lequel ledit milieu de stabilisation est utilisé pour la séparation d'analytes anioniques par isotachophorèse à écoulement libre, (FF-ITP) et dans lequel ledit milieu de stabilisation comprend un composé ayant la mobilité électrophorétique effective la plus lente vers l'anode (terminateur) et en outre comprend au moins une base forte ;

et, en cas échéant; dans lequel

le terminateur est un acide tampon et le pKa de l'acide tampon dans ledit milieu est préférablement supérieur au pKa de la base tampon utilisée dans le milieu guide, plus préférablement dans lequel la différence entre le pKa de l'acide tampon dans le milieu de stabilisation cathodique et le pKa de la base tampon dans le milieu guide (ΔpKa) est entre environ 1 et environ 3, le plus préférablement entre environ 1,5 et environ 2,5 ; et/ou

la concentration du terminateur est supérieure à la concentration de l'au moins une base forte ; et/ou la concentration du terminateur est entre environ 10 mM et environ 500 mM et préférablement entre environ 50 mM et environ 200 mM,

ou

dans lequel ledit milieu de stabilisation cathodique est utilisé pour la séparation d'analytes cationiques par isotachophorèse à écoulement libre (FF-ITP), dans lequel ledit milieu de stabilisation cathodique comprend au moins une base forte et au moins un acide tampon, dans lequel la concentration de l'acide tampon est supérieure à la concentration de la base forte ;

et en cas échéant, dans lequel

la concentration de l'au moins une base forte et de l'acide tampon est supérieure à la concentration des mêmes composés dans le milieu guide ITP cationique ; et/ou la concentration de l'au moins une base forte et de l'acide tampon est supérieure à la concentration des mêmes composés dans le milieu guide ITP cationique et la concentration de l'acide tampon et/ou de l'au moins une base forte est, indépendamment l'une de l'autre, augmentée d'un facteur situé entre 1,5 fois et 50 fois, préférablement dans lequel la concentration est augmentée entre 2 et 20 fois, et le plus préférablement dans lequel la concentration est augmentée entre 5 et 15 fois au-dessus de la concentration des mêmes composés dans le milieu guide ITP cationique.

8.  Procédé selon l'une des revendications 1 à 7, dans lequel ledit milieu de stabilisation anodique pour l'électrophorèse est en outre **caractérisé par** au moins l'un des suivants :

    la concentration de l'au moins un acide fort dans le milieu est suffisante pour atteindre une protonation substantielle de toutes les bases utilisées dans le milieu de stabilisation, préférablement dans lequel le rapport de concentration entre la base (les bases) et l'acide (les acides) dans le milieu de stabilisation (le rapport de base(s) /d'acide(s) est au moins >1, mais <50, préférablement dans lequel le rapport de concentration est entre environ 2 et environ 10 ;

le pH du milieu de stabilisation anodique est inférieur au pH du milieu de séparation ;

la base tampon est sélectionnée parmi des bases biologiquement acceptables et des composés amphotères, à condition que le pKa de la fonction acide dans le composé amphotère est au moins 4 unités au-dessus du pKa de la fonction base, préférablement la base tampon est sélectionnée parmi le groupe consistant en la taurine, la glycine, l'acide 2-aminobutyrique, la glycylglycine, la β-alanine, GABA, EACA, la créatinine, le pyridine-éthanol, le pyridine-propanol, l'histidine, BISTRIS, le morpholinoéthanol, la triéthanolamine, TRIS, l'ammédiol, la benzylamine, le diéthylaminoéthanol, les trialkylamines ; et

l'acide fort est sélectionné parmi le groupe consistant en l'acide chlorhydrique, l'acide sulfurique, l'acide phosphorique, et autres acides ayant un pKa qui est au moins 3 unités de pK au-dessous du pKa de la base tampon dans ledit milieu.

9.  Procédé selon la revendication 8, dans lequel ledit milieu de stabilisation anodique pour l'électrophorèse est en outre **caractérisé par** au moins l'un des suivants :

    le milieu de stabilisation anodique comprend en outre au moins un acide tampon, à condition que la concentration de toutes les bases dans ledit milieu est supérieure à la concentration de toutes les acides ;

    le pKa de chaque base tampon dans le milieu de stabilisation est égal ou inférieur au pKa de chaque base tampon utilisée dans le milieu de séparation;

    le PKa entre la base tampon dans le milieu de stabilisation et la base tampon dans le milieu de séparation est moins d' 1, préférablement moins de 0,5 ;

    au moins une base tampon dans le milieu de stabilisation a une mobilité électrophorétique similaire à la base tampon utilisée dans le milieu de séparation ; et

    au moins une base tampon dans le milieu de stabilisation est identique à la base tampon utilisée dans le milieu de séparation.

10. Procédé selon la revendication 8 ou la revendication 9, dans lequel le pKa de chacune des bases tampons dans le milieu de stabilisation anodique est inférieur au pI de la plupart des analytes acides dans l'échantillon à séparer ; et, en cas échéant, dans lequel ledit milieu de stabilisation anodique est en outre défini par au moins l'un des suivants :

ledit milieu de stabilisation anodique contient plus d'une base tampon, préférablement dans lequel le milieu de stabilisation contient au moins 2 ou au moins 3 bases tampons ;

le pKa de chacun des bases tampons dans le milieu de stabilisation anodique est dans la gamme de (pI - 3) < pKa < (pI - 0,3), préférablement dans la gamme de (pI - 2) < pKa < (pI - 0,5), et le plus préférablement dans la gamme de (pI - 1,3) < pKa < (pI - 0,5) ;

le pH du milieu de stabilisation anodique est inférieur au pH minimum du milieu de séparation, préférablement le pH du milieu de stabilisation anodique n'est pas moins d'environ 2 unités de pH au-dessous du pH minimal du milieu de séparation ;

et ;

la valeur de pKa de chacun des bases tampons dans le milieu de stabilisation anodique est supérieure à la valeur de pH minimum du milieu de séparation, préférablement dans lequel la valeur de pKa de chaque base tampon est dans la gamme de $(pH_{min} - 3) < pKa < (pH_{min} - 0,3)$, plus préférablement dans la gamme de $(pH_{min} - 2) < pKa < (pH_{min} - 0,5)$, et le plus préférablement dans la gamme de $(pH_{min} - 1,3) < pKa < (pH_{min} - 0,5)$.

11. Procédé selon l'une des revendications 8 à 10, dans lequel ledit milieu de stabilisation anodique est en outre défini par au moins l'un des suivants :

la concentration des bases tampons dans le milieu de stabilisation anodique ayant un pKa plus faible (les bases plus faibles) est augmentée au-dessus de la concentration de la base tampon ayant le pKa le plus faible (la base tampon la plus forte), préférablement, dans lequel la concentration des bases plus faibles est augmentée d'un facteur d'au moins environ 2, et plus préférablement d'un facteur d'au moins environ 3 au-dessus de la concentration de la base tampon la plus forte dans ledit milieu; la concentration totale des bases tampons dans le milieu de stabilisation anodique est environ 1,1 à 50 fois, préférablement environ 2 à 20 fois, et le plus préférablement environ 5 à 15 fois plus haute que la concentration de la base tampon dans le milieu de séparation, et

la concentration totale de toutes les bases tampons dans le milieu de stabilisation anodique est plus d'environ 20 mM, préférablement plus d'environ 50 mM, et le plus préférablement plus d'environ 200 mM.

12. Procédé selon la revendication 1, dans lequel ledit milieu de stabilisation anodique est utilisé pour la séparation d'analytes cationiques par isotachophorèse à écoulement libre (FF-ITP) et dans lequel ledit milieu de stabilisation comprend un composé ayant la mobilité électrophorétique la plus lente vers la cathode (terminateur) et en outre comprend au moins un acide fort;

et, en cas échéant; dans lequel

le terminateur est une base tampon et le pKa de la base tampon dans ledit milieu est préférablement inférieur au pKa de l'acide tampon utilisé dans le milieu guide, plus préférablement dans lequel la différence entre le pKa de la base tampon dans le milieu de stabilisation cathodique et le pKa de l'acide tampon dans le milieu guide (pKa) est entre environ 1 et environ 3, le plus préférablement entre environ 1,5 et environ 2,5 ; et/ou

la concentration du terminateur est supérieure à la concentration de l'au moins un acide fort ; et/ou la concentration du terminateur est entre environ 10 mM et environ 500 mM et préférablement entre environ 50 mM et environ 200 mM,

ou

dans lequel ledit milieu de stabilisation anodique est utilisé pour la séparation d'analytes anioniques par isotachophorèse à écoulement libre (FF-ITP), dans lequel ledit milieu de stabilisation anodique comprend au moins un acide fort et au moins une base tampon, dans lequel la concentration de la base tampon est supérieure à la concentration de l'acide fort ;

et en cas échéant, dans lequel

la concentration de l'au moins un acide fort et de la base tampon est supérieure à la concentration des mêmes composés dans le milieu guide ITP anionique ; et/ou la concentration de l'au moins un acide fort et de la base tampon est supérieure à la concentration des mêmes composés dans le milieu guide ITP anionique et dans lequel la concentration de la base tampon et/ou de l'au moins un acide fort est,

indépendamment l'une de l'autre, augmentée d'un facteur situé entre 1,5 fois et 50 fois, préférablement dans lequel la concentration est augmentée entre 2 et 20 fois, et le plus préférablement dans lequel la concentration est augmentée entre 5 et 15 fois au-dessus de la concentration des mêmes composés dans le milieu guide ITP anionique.

13. Procédé selon l'une des revendications 1 à 12, dans lequel ledit milieu de stabilisation anodique et/ou cathodique comprend en outre au moins un additif, préférablement dans lequel l'au moins un additif est sélectionné parmi d'autres acides et/ou bases, les anions et cations mono- et divalents essentiels, les exhausteurs de viscosité, les détergents, les agents solubilisant des protéines, les ligands à forte affinité et les agents réducteurs, plus préférablement dans lequel l'additif est sélectionné parmi le groupe consistant en la thiourée, l'urée, les dérivés hydrophiles polymères tel que HPMC; PEGs, les polyalcools tel que le glycérol, les hydrates de carbone tel que la sucrose, les sélecteurs chiraux tel que les dextrines et les cyclodéxtrines, les léctines, le mercaptoéthanol, le dithiothréitol (DTT), les ions calcium, les ions magnésium, les ions zinc, les ions chlorure, les ions sulfate, EDTA, EGTA, et l'azide.

14. Procédé selon l'une des revendications 1 à 13, dans lequel
la conductivité dudit milieu de stabilisation est plus d'environ 500 uS/cm, préférablement plus d'environ 1000 $\mu$S/cm, et le plus préférablement plus d'environ 2000 $\mu$S/cm ;
et/ou
la conductivité dudit milieu de stabilisation est plus haute que la conductivité du milieu de séparation d'un facteur d'au moins environ 3, et préférablement d'au moins environ 5, et le plus préférablement d'au moins 10.

15. Procédé selon l'une des revendications 1 à 14 pour la séparation de populations de liposomes dans un échantillon par électrophorèse à écoulement libre, dans lequel le milieu de séparation a une conductivité de moins de 1000 $\mu$S/cm, préférablement dans lequel le milieu a une conductivité de moins de 600 $\mu$S/cm.

16. Procédé selon la revendication 15, dans lequel
au moins une fraction des liposomes a une mobilité électrophorétique effective de moins d'environ $20 \times 10^{-9}$ m$^2$/Vs ; et/ou
les concentrations relatives de l'acide tampon et de la base tampon dans le milieu de séparation sont entre 9:1 et 1:9, préférablement dans lequel la concentration de l'acide tampon et la base tampon dans le milieu de séparation est sensiblement la méme ; et/ou
le pH du milieu de séparation est entre 6 et 8, préférablement dans lequel le milieu de séparation a un pH d'environ 7.

**FIG. 1**

FIG. 2A

**FIG. 2B**

45

FIG. 3A

FIG. 3B

**FIG. 4A**

**FIG. 4B**

FIG. 5

**FIG. 6**

FIG. 7

52

FIG. 8

**FIG. 9**

# FFE- process in Cyclic Interval Mode

FIG. 10a

FIG. 10b

FIG. 10c

FIG. 10d

FIG. 10e

FIG.10

**FIG. 11A**

**FIG. 11B**

# EP 2 111 547 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5275706 A
- US 6328868 B
- WO 0250524 A
- US 5447612 A, Bier
- US 2004050697 A
- US 2004050698 A
- WO 03060504 A
- WO 03060503 A
- US 2004045826 A
- US 2004026251 A
- WO 2008053047 A
- WO 200802806 A
- US 3705845 A
- WO 2008025806 A
- WO 2006119001 A

### Non-patent literature cited in the description

- Analytical Biochemistry. Addison Wesley Longman Limited, 1998
- **KRIVANOVA L. ; BOCEK P.** Continuous free-flow electrophoresis. *Electrophoresis,* 1998, vol. 19, 1064-1074
- **BONDY B. ; BAUER J. ; SEUFFERT I. ; WEBER G.** Sodium chloride in separation medium enhances cell compatibility of free-flow electrophoresis. *Electrophoresis,* 1995, vol. 16, 92-97
- **HANSEN E. ; HANNIG K.** Antigen-specific electrophoretic cell separation (ASECS): Isolation of human T and B lymphocyte subpopulations by free-flow electrophoresis after reaction with antibodies. *J. Immunol. Methods,* 1982, vol. 11 (51), 197-208
- **K. HANNIG ; K. H. HEIDRICH.** *Free-flow Electrophoresis,* ISBN 3-921956-88-9
- **WEBER et al.** *Electrophoresis,* 2000, vol. 21, 325-328